# EUROPEAN PATENT APPLICATION

(11) **EP 4 391 615 A1**
(43) Date of publication of application: **26.06.2024**
(21) Application number: 22866313.4
(22) Date of filing: 10.08.2022
(51) Int. Cl.: H04W 12/06, H04W 24/04

(54) **METHOD FOR CONNECTING DEVICES, AND ELECTRONIC DEVICE**

(30) Priority: 07.09.2021 CN 202111042249
(71) Applicant: Huawei Technologies Co., Ltd., Shenzhen, Guangdong 518129 (CN)
(72) Inventor: ZHAO, Yao, Shenzhen, Guangdong 518129 (CN); ZHU, Xudong, Shenzhen, Guangdong 518129 (CN); LIAN, Hai, Shenzhen, Guangdong 518129 (CN); ZHANG, Jingyun, Shenzhen, Guangdong 518129 (CN); JIN, Meng, Shenzhen, Guangdong 518129 (CN); LI, Yumin, Shenzhen, Guangdong 518129 (CN)
(74) Representative: Goddar, Heinz J.
(86) International application number: PCT/CN2022/111417
(87) International publication number: WO 2023/035839

(57) **Abstract**

This application provides a device connection method and an electronic device. The method is applied to an electronic device that is based on a sparklink basic SLB access technology. The method includes: Device and service discovery between two terminal node devices connected to a same grant node device is implemented based on a relay function of the grant node device. In addition, the grant node device may establish a channel between the grant node device and each of the two terminal node devices, to implement data transmission between the two terminal node devices. In the foregoing technical solution, terminal node devices connected to a same grant node device are enabled to communicate with each other. This improves flexibility of communication between electronic devices.

## Description

This application claims priority to Chinese Patent Application No. 202111042249.5, filed with the China National Intellectual Property Administration on September 7, 2021 and entitled "DEVICE CONNECTION METHOD AND ELECTRONIC DEVICE", which is incorporated herein by reference in its entirety.

### TECHNICAL FIELD

This application relates to the communication field, and more specifically, to a device connection method and an electronic device.

### BACKGROUND

Short-range communication may implement communication between electronic devices that are close to each other. With development of an internet of things, new application scenarios, such as smart vehicles, smart household, smart terminals, and smart manufacturing, emerge, and a next-generation short-range access technology (for example, a sparklink alliance (sparklink alliance) access technology) emerges correspondingly. The sparklink alliance access technology is used as an example. The sparklink alliance access technology includes but is not limited to a sparklink basic (sparklink basic, SLB) access technology and a sparklink low energy (sparklink low energy, SLE) access technology.

In the SLB, during communication between two electronic devices, one electronic device may serve as a grant (grant, G) node device, and the other electronic device serves as a terminal (terminal, T) node device.

One G node device may be connected to and communicate with a plurality of T node devices. However, the T node devices connected to the same G node device cannot communicate with each other. This reduces flexibility of communication between electronic devices.

### SUMMARY

This application provides a device connection method and an electronic device, to improve flexibility of communication between electronic devices.

According to a first aspect, a device connection method is provided. The method is applied to a first electronic device. A role of the first electronic device is a grant node device. The method includes: The first electronic device receives a first service query request sent by a second electronic device, where the second electronic device is connected to the first electronic device, a role of the second electronic device is a terminal node device, and the first service query request is used to request to query for a service of another terminal node device connected to the first electronic device. The first electronic device determines a target electronic device according to the first service query request, where the target electronic device is connected to the first electronic device, and a role of the target electronic device is a terminal node device. The first electronic device sends a second service query request to the target electronic device, where the second service query request is used to request to query for a service of the target electronic device. The first electronic device receives a second service query response sent by the target electronic device, where the second service query response indicates service information of the target electronic device. The first electronic device sends a first service query response to the second electronic device based on the second service query response, where the first service query response indicates the service information of the target electronic device.

In this embodiment of this application, the grant node device has a relay function, and can relay data that needs to be exchanged between two terminal node devices connected to the grant node device, to implement device and service discovery between terminal node devices, and implement communication between the two terminal node devices. This can improve flexibility of communication between electronic devices.

With reference to the first aspect, in a possible implementation, the first service query request includes first destination node indication information and first to-be-queried-service indication information, where the first destination node indication information indicates a terminal node device that receives a service query, and the first to-be-queried-service indication information indicates a to-be-queried service.

The second electronic device indicates, to the first electronic device, the terminal node device that receives the service query, and does not need to indicate a terminal node device (namely, the second electronic device) that initiates the service query. This can reduce signaling overheads.

With reference to the first aspect, in a possible implementation, the second service query request includes first source node indication information and first to-be-queried-service indication information, where the first source node indication information indicates a terminal node device that initiates a service query, and the first to-be-queried-service indication information indicates a to-be-queried service.

The first electronic device indicates, to the target electronic device, the terminal node device that initiates the service query, and does not need to indicate a terminal node device (namely, the target electronic device) that receives the service query. This can reduce signaling overheads.

Optionally, the first service query request further includes first source node indication information indicating a terminal node device that initiates the service query.

Optionally, the second service query request further includes first destination node indication information indicating a terminal node device that receives the service query.

When the first service query request and the second service query request include same information, corresponding data packet formats may be designed to be the same. This can simplify processing performed by the first electronic device on a data packet.

With reference to the first aspect, in a possible implementation, the first source node indication information includes an identifier of the second electronic device and/or an address of the second electronic device.

With reference to the first aspect, in a possible implementation, when the first service query request includes the first destination node indication information, the first destination node indication information includes an identifier of the target electronic device and/or an address of the target electronic device, or the first destination node indication information includes a universal identifier and/or a broadcast address.

It should be noted that the "universal identifier" may be understood as that no identifier is specified for a device. The universal identifier or the broadcast address indicates that the terminal node device that receives the service query is all terminal node devices connected to the first electronic device other than the second electronic device.

Optionally, the identifier of the second electronic device corresponds to the address of the second electronic device.

Optionally, the identifier of the target electronic device corresponds to the address of the target electronic device.

Optionally, the universal identifier corresponds to the broadcast address.

With reference to the first aspect, in a possible implementation, when the first service query request includes the first destination node indication information and the first destination node indication information includes the universal identifier and/or the broadcast address, that the first electronic device determines a target electronic device according to the first service query request includes: The first electronic device determines, based on the universal identifier and/or the broadcast address, that the terminal node device that receives the service query is all terminal node devices connected to the first electronic device other than the second electronic device, where the target electronic device is one of the terminal node device that receives the service query.

With reference to the first aspect, in a possible implementation, when the second service query request includes the first destination node indication information, the first destination node indication information includes an identifier of the target electronic device and/or an address of the target electronic device.

With reference to the first aspect, in a possible implementation, the second service query response includes second destination node indication information and second to-be-queried-service indication information, where the second destination node indication information indicates the terminal node device that initiates the service query, and the second to-be-queried-service indication information indicates a service of the terminal node device that receives the service query.

The target electronic device indicates, to the first electronic device, the terminal node device that initiates the service query, and does not need to indicate a terminal node device (namely, the target electronic device) that responds to the service query. This can reduce signaling overheads.

With reference to the first aspect, in a possible implementation, the first service query response includes second source node indication information and second to-be-queried-service indication information, where the second source node indication information indicates a terminal node device that responds to the service query; and the second to-be-queried-service indication information indicates a service of the terminal node device that receives the service query.

The first electronic device indicates, to the second electronic device, the terminal node device that responds to the service query, and does not need to indicate a terminal node device (namely, the second electronic device) that initiates the service query. This can reduce signaling overheads.

Optionally, the second service query response further includes second source node indication information indicating a terminal node device that responds to the service query.

Optionally, the first service query response further includes second destination node indication information indicating the terminal node device that initiates the service query.

When the first service query response and the second service query response include same information, corresponding data packet formats may be designed to be the same. This can simplify processing performed by the first electronic device on a data packet.

With reference to the first aspect, in a possible implementation, the second source node indication information includes the identifier of the target electronic device and/or the address of the target electronic device.

With reference to the first aspect, in a possible implementation, the second destination node indication information includes the identifier of the second electronic device and/or the address of the second electronic device.

With reference to the first aspect, in a possible implementation, the first service query request, the second service query request, the second service query response, and the first service query response are transmitted in a relay service management channel, where the relay service management channel is used to transmit service management data between two terminal node devices.

In this embodiment of this application, the relay service management channel is established by default after an underlying default logical link is successfully established.

With reference to the first aspect, in a possible implementation, the first electronic device, the second electronic device, and the target electronic device each include a basic service layer. The first service query request is received by a basic service layer of the first electronic device from a basic service layer of the second electronic device. The second service query request is sent by the basic service layer of the first electronic device to a basic service layer of the target electronic device. The second service query response is received by the basic service layer of the first electronic device from the basic service layer of the target electronic device. The first service query response is sent by the basic service layer of the first electronic device to the basic service layer of the second electronic device.

With reference to the first aspect, in a possible implementation, all of the first electronic device, the second electronic device, and the target electronic device support a sparklink basic SLB access technology.

According to a second aspect, a device connection method is provided. The method is applied to a second electronic device. A role of the second electronic device is a terminal node device. The method includes: The second electronic device sends a first service query request to a first electronic device, where the second electronic device is connected to the first electronic device, a role of the first electronic device is a grant node device, and the first service query request is used to request to query for a service of another terminal node device connected to the first electronic device. The second electronic device receives a first service query response sent by the first electronic device, where the first service query response indicates service information of a target electronic device, the target electronic device is connected to the first electronic device, and a role of the target electronic device is a terminal node device.

In this embodiment of this application, the grant node device has a relay function, and can relay data of two terminal node devices connected to the grant node device, to implement device and service discovery between terminal node devices, and implement communication between the two terminal node devices. This can improve flexibility of communication between electronic devices.

With reference to the second aspect, in a possible implementation, the second electronic device includes a basic application layer and a basic service layer. Before the second electronic device sends the first service query request to the first electronic device, the method further includes: The basic service layer of the second electronic device receives a third service query request sent by the basic application layer of the second electronic device, where the third service query request is used to indicate to query for a service of another terminal node device. After the second electronic device receives the first service query response sent by the first electronic device, the method further includes: The basic service layer of the second electronic device sends a third service query response to the basic application layer of the second electronic device, where the third service query response indicates the service information of the target electronic device.

With reference to the second aspect, in a possible implementation, the first service query request includes first destination node indication information and first to-be-queried-service indication information, where the first destination node indication information indicates a terminal node device that receives a service query, and the first to-be-queried-service indication information indicates a to-be-queried service.

Optionally, the first service query request further includes first source node indication information indicating a terminal node device that initiates the service query.

With reference to the second aspect, in a possible implementation, the third service query request includes first to-be-queried-service indication information, where the first to-be-queried-service indication information indicates a to-be-queried service.

The first to-be-queried-service indication information included in the first service query request is delivered by the basic application layer of the second electronic device.

Optionally, the third service query request further includes at least one of first source node indication information and first destination node indication information, where the first source node indication information indicates a terminal node device that initiates a service query, and the first destination node indication information indicates a terminal node device that receives the service query.

The first source node indication information included in the first service query request may be added by the basic application layer or the basic service layer of the second electronic device. The first destination node indication information included in the first service query request may be added by the basic application layer or the basic service layer of the second electronic device.

With reference to the second aspect, in a possible implementation, the first source node indication information includes an identifier of the second electronic device and/or an address of the second electronic device.

With reference to the second aspect, in a possible implementation, the first destination node indication information includes an identifier of the target electronic device and/or an address of the target electronic device, or the first destination node indication information includes a universal identifier and/or a broadcast address, where the universal identifier and/or the broadcast address indicate that the terminal node device that receives the service query is all terminal node devices connected to the first electronic device other than the second electronic device.

With reference to the second aspect, in a possible implementation, the first service query response includes: second source node indication information indicating a terminal node device that responds to the service query; and second to-be-queried-service indication information indicating a service of the terminal node device that receives the service query.

With reference to the second aspect, in a possible implementation, the third service query response includes: second source node indication information indicating a terminal node device that responds to the service query; and second to-be-queried-service indication information indicating a service of the terminal node device that receives the service query.

Optionally, the first service query response further includes second destination node indication information indicating the terminal node device that initiates the service query.

Optionally, the third service query response further includes second destination node indication information indicating the terminal node device that initiates the service query.

With reference to the second aspect, in a possible implementation, the second source node indication information includes the identifier of the target electronic device and/or the address of the target electronic device.

With reference to the second aspect, in a possible implementation, the second destination node indication information includes the identifier of the second electronic device and/or the address of the second electronic device.

With reference to the second aspect, in a possible implementation, the first service query request and the first service query response are transmitted in a relay service management channel between the first electronic device and the second electronic device, where the relay service management channel is used to transmit service management data between two terminal node devices.

With reference to the second aspect, in a possible implementation, the first electronic device and the second electronic device each include a basic service layer. The first service query request is sent by the basic service layer of the second electronic device to a basic service layer of the first electronic device. The first service query response is received by the basic service layer of the second electronic device from the basic service layer of the first electronic device.

With reference to the second aspect, in a possible implementation, all of the first electronic device, the second electronic device, and the target electronic device support a sparklink basic SLB access technology.

According to a third aspect, a device connection method is provided. The method is applied to a target electronic device. A role of the target electronic device is a terminal node device. The method includes: The target electronic device receives a second service query request sent by a first electronic device, where the target electronic device is connected to the first electronic device, a role of the first electronic device is a grant node device, and the second service query request is used to request to query for a service of the target electronic device. The target electronic device sends a second service query response to the first electronic device, where the second service query response is used by the first electronic device to notify a second electronic device of service information of the target electronic device, the second electronic device is connected to the first electronic device, and a role of the second electronic device is a terminal node device.

In this embodiment of this application, the grant node device has a relay function, and can relay data of two terminal node devices connected to the grant node device, to implement device and service discovery between terminal node devices, and implement communication between the two terminal node devices. This can improve flexibility of communication between electronic devices.

With reference to the third aspect, in a possible implementation, the target electronic device includes a basic application layer and a basic service layer. Before the target electronic device sends the second service query response to the first electronic device, the method further includes: The basic service layer of the target electronic device sends a fourth service query request to the basic application layer of the target electronic device, where the fourth service query request is used to request to query for a service of the target electronic device. The basic service layer of the target electronic device receives a fourth service query response sent by the basic application layer of the target electronic device, where the fourth service query response indicates the service information of the target electronic device.

With reference to the third aspect, in a possible implementation, the second service query request includes: first source node indication information indicating a terminal node device that initiates a service query; and first to-be-queried-service indication information indicating a to-be-queried service.

With reference to the third aspect, in a possible implementation, the fourth service query request includes: first source node indication information indicating a terminal node device that initiates a service query; and first to-be-queried-service indication information indicating a to-be-queried service.

Optionally, the second service query request further includes first destination node indication information indicating a terminal node device that receives the service query.

Optionally, the fourth service query request further includes first destination node indication information indicating a terminal node device that receives the service query.

With reference to the third aspect, in a possible implementation, the first source node indication information includes an identifier of the second electronic device and/or an address of the second electronic device.

With reference to the third aspect, in a possible implementation, the first destination node indication information includes an identifier of the target electronic device and/or an address of the target electronic device.

With reference to the third aspect, in a possible implementation, the second service query response includes second destination node indication information and second to-be-queried-service indication information, where the second destination node indication information indicates the terminal node device that initiates the service query, and the second to-be-queried-service indication information indicates a service of the terminal node device that receives the service query.

Optionally, the second service query response further includes second source node indication information indicating a terminal node device that responds to the service query.

With reference to the third aspect, in a possible implementation, the fourth service query response includes second to-be-queried-service indication information, where the second to-be-queried-service indication information indicates a service of the terminal node device that receives the service query.

Optionally, the fourth service query response further includes at least one of second source node indication information and second destination node indication information, where the second source node indication information indicates a terminal node device that responds to the service query, and the second destination node indication information indicates the terminal node device that initiates the service query.

The basic service layer of the target electronic device may process information included in the fourth service query response delivered by the basic application layer to form the second service query response, and then send the second service query response to the first electronic device.

With reference to the third aspect, in a possible implementation, the second source node indication information includes the identifier of the target electronic device and/or the address of the target electronic device.

With reference to the third aspect, in a possible implementation, the second destination node indication information includes the identifier of the second electronic device and/or the address of the second electronic device.

With reference to the third aspect, in a possible implementation, the second service query request and the second service query response are transmitted in a relay service management channel between the target electronic device and the first electronic device, where the relay service management channel is used to transmit service management data between two terminal node devices.

In this embodiment of this application, a grant node forwards data in the relay service management channel based on a destination node, and adds source node information to a data packet before forwarding the data.

With reference to the third aspect, in a possible implementation, the first electronic device and the target electronic device each include a basic service layer. The second service query request is received by the basic service layer of the target electronic device from a basic service layer of the first electronic device. The second service query response is sent by the basic service layer of the target electronic device to the basic service layer of the first electronic device.

With reference to the third aspect, in a possible implementation, all of the first electronic device, the second electronic device, and the target electronic device support a sparklink basic SLB access technology.

According to a fourth aspect, a device connection method is provided. The method is applied to a first electronic device. A role of the first electronic device is a grant node device. The method includes: The first electronic device receives a channel establishment request sent by a second electronic device, where the channel establishment request is used to request the first electronic device to establish a channel between the second electronic device and a target electronic device, the second electronic device and the target electronic device are separately connected to the first electronic device, and roles of the second electronic device and the target electronic device are both terminal node devices. The first electronic device establishes a channel between the first electronic device and the second electronic device. The first electronic device establishes a channel between the first electronic device and the target electronic device. The channel between the first electronic device and the second electronic device and the channel between the first electronic device and the target electronic device are used to transmit information between the second electronic device and the target electronic device.

In this embodiment of this application, the grant node device has a relay function, and can relay data of two terminal node devices connected to the grant node device, to implement data transmission between terminal node devices. This can improve flexibility of communication between electronic devices.

With reference to the fourth aspect, in a possible implementation, the first electronic device includes a first basic service layer and a first access layer. That the first electronic device establishes the channel between the first electronic device and the second electronic device includes: The first basic service layer generates an identifier of a first transmission channel, where the identifier of the first transmission channel is used to identify the first transmission channel. The first basic service layer sends first information to the first access layer, where the first information is used to apply for a logical channel for the first transmission channel. The first basic service layer receives second information sent by the first access layer, where the second information indicates that a mapping relationship is established between the first transmission channel and a first logical channel. The first basic service layer sends third information to the second electronic device, where the third information is used to indicate the second electronic device to establish a third transmission channel. The first basic service layer receives fourth information sent by the second electronic device, where the fourth information indicates that a mapping relationship is established between the third transmission channel and the first logical channel and a mapping relationship is established between the third transmission channel and the first transmission channel, and there is a mapping relationship between the third transmission channel and a first port of the second electronic device. The first basic service layer determines, based on the fourth information, that establishment of the channel between the first electronic device and the second electronic device is completed, where the channel between the first electronic device and the second electronic device includes the first transmission channel, the first logical channel, and the third transmission channel.

That the first electronic device establishes the channel between the first electronic device and the target electronic device includes: The first basic service layer generates an identifier of a second transmission channel, where the identifier of the second transmission channel is used to identify the second transmission channel. The first basic service layer sends fifth information to the first access layer, where the fifth information is used to apply for a logical channel for the second transmission channel. The first basic service layer receives sixth information sent by the first access layer, where the sixth information indicates that a mapping relationship is established between the second transmission channel and a second logical channel. The first basic service layer sends seventh information to the target electronic device, where the seventh information is used to indicate the target electronic device to establish a fourth transmission channel. The first basic service layer receives eighth information sent by the target electronic device, where the eighth information indicates that a mapping relationship is established between the fourth transmission channel and the second logical channel and a mapping relationship is established between the fourth transmission channel and the second transmission channel, and there is a mapping relationship between the fourth transmission channel and a second port of the target electronic device. The first basic service layer determines, based on the eighth information, that establishment of the channel between the first electronic device and the target electronic device is completed, where the channel between the first electronic device and the target electronic device includes the second transmission channel, the second logical channel, and the fourth transmission channel. The channel between the first electronic device and the second electronic device and the channel between the first electronic device and the target electronic device are used to transmit service data exchanged between the target electronic device and the second electronic device.

The first electronic device completes mapping relationships between various interlayer channels between the first electronic device and the second electronic device, and completes mapping relationships between various interlayer channels between the first electronic device and the target electronic device, to establish a channel for transmitting service data between the second electronic device and the target electronic device.

In this embodiment of this application, the upper-layer third transmission channel is available only after a mapping relationship is established between the underlying first logical channel and the upper-layer third transmission channel. Therefore, the fourth information is used to indicate that establishment of the third transmission channel is completed. Understanding of the eighth information is similar. Details are not described again.

In this embodiment of this application, there are mapping relationships between the third transmission channel established by the second electronic device and the first logical channel and between the first transmission channel established by the first electronic device and the first logical channel, but an identifier of the third transmission channel may be different from that of the first transmission channel. Similarly, there are mapping relationships between the fourth transmission channel established by the target electronic device and the second logical channel and between the second transmission channel established by the first electronic device and the second logical channel, but an identifier of the fourth transmission channel may be different from that of the second transmission channel.

With reference to the fourth aspect, in a possible implementation, the first basic service layer includes a channel management module and a relay module. The channel management module is configured to manage a transmission channel at the first basic service layer. The relay module is configured to perform relay management on data transmitted between the second electronic device and the target electronic device. The method further includes: The channel management module sends a channel mapping relationship table to the relay module. The channel mapping relationship table includes the mapping relationship between the first transmission channel and the third transmission channel, the mapping relationship between the second transmission channel and the fourth transmission channel, and the mapping relationship between the first transmission channel and the second transmission channel.

In this embodiment of this application, the first electronic device maintains the channel mapping relationship table, and may relay, based on the channel mapping relationship table, data transmitted between two terminal node devices.

With reference to the fourth aspect, in a possible implementation, the method further includes: The first electronic device sends a channel establishment response to the second electronic device, where the channel establishment response indicates that establishment of a channel between the second electronic device and the target electronic device is completed.

With reference to the fourth aspect, in a possible implementation, the method further includes: The first electronic device receives a first data packet sent by the second electronic device, where the first data packet is transmitted through the channel between the first electronic device and the second electronic device, and the first data packet carries the identifier of the first transmission channel. The first electronic device replaces the identifier of the first transmission channel in the first data packet with an identifier of the fourth transmission channel based on the channel mapping relationship table, to generate a second data packet. The first electronic device sends the second data packet to the target electronic device. The channel mapping relationship table includes the mapping relationship between the first transmission channel and the third transmission channel, the mapping relationship between the second transmission channel and the fourth transmission channel, and the mapping relationship between the first transmission channel and the second transmission channel.

With reference to the fourth aspect, in a possible implementation, the first electronic device includes a first basic service layer and a first access layer. That the first electronic device establishes the channel between the first electronic device and the second electronic device includes: The first basic service layer generates an identifier of a first tunnel channel, where the identifier of the first tunnel channel is used to identify the first tunnel channel. The first basic service layer sends first information to the first access layer, where the first information is used to apply for a logical channel for the first tunnel channel. The first basic service layer receives second information sent by the first access layer, where the second information indicates that a mapping relationship is established between the first tunnel channel and the first logical channel. The first basic service layer sends third information to the second electronic device, where the third information is used to indicate the second electronic device to establish a third tunnel channel, and an identifier of the third tunnel channel is the same as that of the first tunnel channel. The first basic service layer receives fourth information sent by the second electronic device, where the fourth information indicates that the second electronic device has established a mapping relationship between the third tunnel channel and the first logical channel and a mapping relationship is established between the third tunnel channel and the first tunnel channel. The first basic service layer determines, based on the fourth information, that establishment of the channel between the first electronic device and the second electronic device is completed, where the channel between the first electronic device and the second electronic device includes the third tunnel channel, the first logical channel, and the first tunnel channel.

That the first electronic device establishes the channel between the first electronic device and the target electronic device includes: The first basic service layer generates an identifier of a second tunnel channel, where the identifier of the second tunnel channel is used to identify the second tunnel channel. The first basic service layer sends fifth information to the first access layer, where the fifth information is used to apply for a logical channel for the second tunnel channel. The first basic service layer receives sixth information sent by the first access layer, where the sixth information indicates that a mapping relationship is established between the second tunnel channel and a second logical channel. The first basic service layer sends seventh information to the target electronic device, where the seventh information is used to indicate the target electronic device to establish a fourth tunnel channel, and an identifier of the fourth tunnel channel is the same as that of the second tunnel channel. The first basic service layer receives eighth information sent by the target electronic device, where the eighth information indicates that the target electronic device has established a mapping relationship between the fourth tunnel channel and the second logical channel and a mapping relationship is established between the fourth tunnel channel and the second tunnel channel. The first basic service layer determines, based on the eighth information, that establishment of the channel between the first electronic device and the target electronic device is completed, where the channel between the first electronic device and the target electronic device includes the fourth tunnel channel, the second logical channel, and the second tunnel channel. The channel between the first electronic device and the second electronic device and the channel between the first electronic device and the target electronic device are used to transmit service data and signaling data that are exchanged between the first electronic device and the second electronic device.

The first electronic device completes mapping relationships between various interlayer channels between the first electronic device and the second electronic device, and completes mapping relationships between various interlayer channels between the first electronic device and the target electronic device, to establish a channel for transmitting signaling data and service data between the second electronic device and the target electronic device.

In this embodiment of this application, the upper-layer third tunnel channel is available only after a mapping relationship is established between the underlying first logical channel and the upper-layer third tunnel channel. Therefore, the fourth information is used to indicate that establishment of the third tunnel channel is completed. Understanding of the eighth information is similar. Details are not described again.

With reference to the fourth aspect, in a possible implementation, the method further includes: The first basic service layer establishes a channel mapping relationship table, where the channel mapping relationship table includes a mapping relationship between the first tunnel channel and the second tunnel channel.

In this embodiment of this application, after establishing the channel mapping relationship table, the first electronic device may relay, based on the channel mapping relationship table, data transmitted between two terminal node devices.

With reference to the fourth aspect, in a possible implementation, the method further includes: The first electronic device receives a first request sent by the second electronic device, where the first request is used to request to establish, between the second electronic device and the target electronic device, a transmission channel for service transmission, the first request includes the identifier of the first transmission channel, the first transmission channel is an upper-layer channel of the third tunnel channel, the first request is transmitted through a first relay control channel, the third tunnel channel, the first logical channel, and the first tunnel channel, and the first relay control channel is established by default after the channel between the first electronic device and the second electronic device is established. The first electronic device forwards the first request to the target electronic device. The first electronic device receives a first response sent by the target electronic device, where the first response indicates that establishment of the transmission channel for service transmission is completed, the first response includes the identifier of the second transmission channel and the identifier of the first transmission channel, the second transmission channel is an upper-layer channel of the fourth tunnel channel, the second command is transmitted through a second relay control channel, the fourth tunnel channel, the second logical channel, and the second tunnel channel, and the second relay control channel is established by default after the channel between the first electronic device and the target electronic device is established. The first electronic device forwards the first response to the second electronic device.

With reference to the fourth aspect, in a possible implementation, there is a mapping relationship between the first transmission channel and the third tunnel channel, and there is a mapping relationship between the second transmission channel and the fourth tunnel channel.

In this embodiment of this application, the identifier of the first tunnel channel is the same as that of the third tunnel channel, and the identifier of the second tunnel channel is the same as that of the fourth tunnel channel.

With reference to the fourth aspect, in a possible implementation, there is a mapping relationship between the first transmission channel and the first port of the second electronic device, and there is a mapping relationship between the second transmission channel and the second port of the target electronic device.

With reference to the fourth aspect, in a possible implementation, the method further includes: The first electronic device receives a first data packet sent by the second electronic device, where the first data packet is transmitted through the channel between the first electronic device and the second electronic device, and the first data packet carries the identifier of the second transmission channel and the identifier of the second tunnel channel. The first electronic device forwards the first data packet to the target electronic device through the channel between the first electronic device and the target electronic device based on the channel mapping relationship table. The channel mapping relationship table includes the mapping relationship between the first tunnel channel and the second tunnel channel.

To be specific, the first data packet is sent to the target electronic device through the first transmission channel, the third tunnel channel, the first logical channel, the first tunnel channel, the second tunnel channel, the second logical channel, the fourth tunnel channel, and the second transmission channel.

With reference to the fourth aspect, in a possible implementation, the channel establishment request includes first indication information, and the first indication information indicates an establishment mode for the channel between the second electronic device and the target electronic device.

With reference to the fourth aspect, in a possible implementation, the channel establishment request includes an identifier of the target electronic device and/or an address of the target electronic device.

With reference to the fourth aspect, in a possible implementation, the channel establishment request includes port information of the second electronic device and the target electronic device, and the port information is obtained through negotiation between the second electronic device and the target electronic device.

With reference to the fourth aspect, in a possible implementation, after the first electronic device receives the channel establishment request sent by the second electronic device, the method further includes: The first electronic device negotiates with each of the second electronic device and the target electronic device on a channel parameter.

With reference to the fourth aspect, in a possible implementation, all of the first electronic device, the second electronic device, and the target electronic device support a sparklink basic SLB access technology.

According to a fifth aspect, a device connection method is provided. The method is applied to a second electronic device. A role of the second electronic device is a terminal node device. The method includes: The second electronic device sends a channel establishment request to a first electronic device, where the channel establishment request is used to request the first electronic device to establish a channel between the second electronic device and a target electronic device, the second electronic device and the target electronic device are separately connected to the first electronic device, a role of the first electronic device is a grant node device, and a role of the target electronic device is a terminal node device. The second electronic device receives a channel establishment response sent by the first electronic device, where the channel establishment response indicates that establishment of the channel between the second electronic device and the target electronic device is completed. The channel between the second electronic device and the target electronic device includes a channel between the first electronic device and the second electronic device and a channel between the first electronic device and the target electronic device.

According to a sixth aspect, an electronic device is provided, including modules or units for performing the method according to any one of the first aspect or the possible implementations of the first aspect. The modules or units may be hardware circuits or software, or may be implemented by hardware circuits in combination with software.

According to a seventh aspect, an electronic device is provided, including modules or units for performing the method according to any one of the second aspect or the possible implementations of the second aspect. The modules or units may be hardware circuits or software, or may be implemented by hardware circuits in combination with software.

According to an eighth aspect, an electronic device is provided, including modules or units for performing the method according to any one of the third aspect or the possible implementations of the third aspect. The modules or units may be hardware circuits or software, or may be implemented by hardware circuits in combination with software.

According to a ninth aspect, an electronic device is provided, including modules or units for performing the method according to any one of the fourth aspect or the possible implementations of the fourth aspect. The modules or units may be hardware circuits or software, or may be implemented by hardware circuits in combination with software.

According to a tenth aspect, an electronic device is provided, including modules or units for performing the method according to any one of the fifth aspect or the possible implementations of the fifth aspect. The modules or units may be hardware circuits or software, or may be implemented by hardware circuits in combination with software.

According to an eleventh aspect, an apparatus is provided, including: a memory, configured to store a computer program; and a processor, configured to execute the computer program stored in the memory, so that the apparatus performs the method according to any one of the first aspect to the fifth aspect or the possible implementations of the first aspect to the fifth aspect.

Optionally, the apparatus further includes a transceiver.

According to a twelfth aspect, an apparatus is provided, including at least one processor and a communication interface. The communication interface is configured to provide instruction and/or data input or output for the at least one processor. The at least one processor executes code instructions, so that the apparatus performs the method according to any one of the first aspect to the fifth aspect or the possible implementations of the first aspect to the fifth aspect.

According to a thirteenth aspect, a chip system is provided, including at least one processor. When program instructions are executed in the at least one processor, the at least one processor is enabled to perform the method according to any one of the first aspect to the fifth aspect or the possible implementations of the first aspect to the fifth aspect.

In a possible design, the chip system further includes a memory, configured to store program instructions and/or data. The chip system may include a chip, or may include a chip and another discrete device.

In a possible design, the chip system further includes a transceiver, configured to provide instruction and/or data input or output for the at least one processor.

According to a fourteenth aspect, a computer program product is provided. The computer program product includes computer program code. When the computer program code is run on a computer, the computer is enabled to perform the method according to any one of the first aspect to the fifth aspect or the possible implementations of the first aspect to the fifth aspect.

It should be noted that all or some of the computer program code may be stored in a first storage medium. The first storage medium may be packaged together with a processor, or may be packaged separately from a processor. This is not specifically limited in embodiments of this application.

According to a fifteenth aspect, a computer-readable medium is provided, and stores computer-executable instructions. When the computer-executable instructions run on a computer, the computer is enabled to perform the method according to any one of the first aspect to the fifth aspect or the possible implementations of the first aspect to the fifth aspect.

According to a sixteenth aspect, a communication system is provided, including the electronic device according to the sixth aspect, the electronic device according to the seventh aspect, and the electronic device according to the eighth aspect.

To be specific, the communication system includes: a first electronic device, configured to perform the method according to any one of the first aspect or the possible implementations of the first aspect; a second electronic device, configured to perform the method according to any one of the second aspect or the possible implementations of the second aspect; and a target electronic device, configured to perform the method according to any one of the third aspect or the possible implementations of the third aspect.

According to a seventeenth aspect, a communication system is provided, including the electronic device according to the ninth aspect and two terminal node devices connected to the electronic device.

To be specific, the communication system includes: a first electronic device, where the first electronic device is a grant node device and is configured to perform the method according to any one of the fourth aspect or the possible implementations of the fourth aspect; and a second electronic device and a target electronic device, where the second electronic device and the target electronic device are separately connected to the first electronic device, and both the second electronic device and the target electronic device are terminal node devices.

### BRIEF DESCRIPTION OF DRAWINGS

FIG. 1 is a schematic diagram of a communication system to which embodiments of this application are applicable;
FIG. 2 is a schematic diagram of a protocol architecture according to an embodiment of this application;
FIG. 3A and FIG. 3B are a schematic flowchart of a method for service discovery between T nodes according to an embodiment of this application;
FIG. 4A and FIG. 4B are a schematic flowchart of a method for establishing a relay service channel according to an embodiment of this application;
FIG. 5A, FIG. 5B, and FIG. 5C are a schematic flowchart of a method for establishing a relay tunnel according to an embodiment of this application;
FIG. 6 is a schematic diagram of a scenario of the methods shown in FIG. 4A, FIG. 4B, FIG. 5A, FIG. 5B, and FIG. 5C;
FIG. 7 and FIG. 8 are schematic flowcharts of a device connection method according to an embodiment of this application;
FIG. 9 is a schematic flowchart of another device connection method according to an embodiment of this application;
FIG. 10A, FIG. 10B, FIG. 11A, and FIG. 11B are schematic flowcharts of a device connection method according to an embodiment of this application;
FIG. 12 is a schematic diagram of a structure of an apparatus according to an embodiment of this application; and
FIG. 13 is a schematic diagram of a structure of another apparatus according to an embodiment of this application.

### DESCRIPTION OF EMBODIMENTS

The following describes technical solutions of this application with reference to accompanying drawings.

Short-range communication may implement communication between electronic devices that are close to each other. Currently, mainstream access technologies in the short-range communication include a wireless fidelity (wireless fidelity, Wi-Fi) technology, a Bluetooth technology, a ZigBee (ZigBee) technology, and the like. With development of an internet of things, new application scenarios, such as smart vehicles, smart household, smart terminals, and smart manufacturing, emerge, and a next-generation short-range access technology (for example, a sparklink alliance (sparklink alliance) access technology) emerges correspondingly. The sparklink alliance access technology is used as an example. The sparklink alliance access technology includes but is not limited to a sparklink basic (sparklink basic, SLB) access technology and a sparklink low energy (sparklink low energy, SLE) access technology. The SLB access technology may support transmission for high-bandwidth services such as screen projection, virtual reality (virtual reality, VR), and in-vehicle communication. The SLE access technology may support transmission for low-bandwidth, low-rate, and low-power services such as audio play, a keyboard, a mouse, and an electronic stylus. For ease of description, in the following embodiments, the SLB access technology may be referred to as SLB for short, and the SLE access technology may be referred to as SLE for short. In addition, an access technology mentioned in the following descriptions is a short-range access technology, unless otherwise specified.

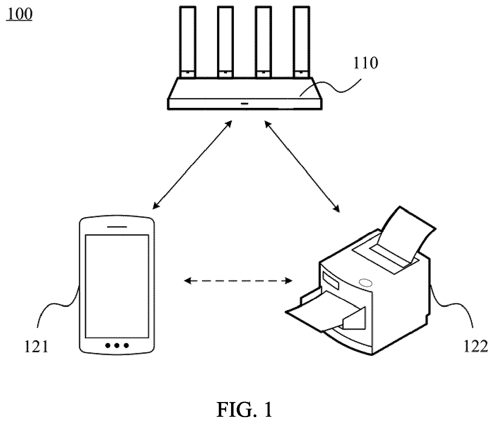

FIG. 1 is a schematic diagram of a communication system according to an embodiment of this application.

As shown in FIG. 1, the communication system 100 includes a first electronic device (for example, a first electronic device 110) and at least one second electronic device (for example, second electronic devices 121 and 122). The first electronic device may establish a connection to each second electronic device through a short-range access technology to perform communication. It should be understood that the communication system shown in FIG. 1 is merely an example for description. The communication system 100 may further include another device, for example, a base station. This is not limited in this embodiment of this application.

In this embodiment of this application, the first electronic device or the second electronic device may be any device with a wireless transceiver function, including but not limited to a cellular phone (cellular phone), a cordless phone, a session initiation protocol (session initiation protocol, SIP) phone, a smartphone (smartphone), a wireless local loop (wireless local loop, WLL) station, a personal digital assistant (personal digital assistant, PDA), a handheld device with a wireless communication function, a computing device, a vehicle-mounted device, a wearable device, an uncrewed aerial vehicle device, an electronic device in an internet of things or an internet of vehicles, another device connected to a wireless modem, and the like.

Alternatively, the first electronic device or the second electronic device may be an electronic device in virtual reality (virtual reality, VR), an electronic device in augmented reality (augmented reality, AR), an electronic device in industrial control (industrial control) (for example, smart manufacturing), an electronic device in self-driving (self-driving), an electronic device in remote medical (remote medical), an electronic device in a smart grid (smart grid), an electronic device in a smart city (smart city), an electronic device in a smart home (smart home), or the like.

Alternatively, the first electronic device or the second electronic device may be a personal portable electronic device, a computer peripheral, or any household or industrial electronic device, including but not limited to a smartphone (smartphone), a smart screen, a smart air conditioner, a smart alarm clock, a robot vacuum cleaner, a smart speaker (for example, an artificial intelligence (artificial intelligence, AI) speaker or a high-fidelity (high fidelity, Hi-Fi) speaker), a smart sensor, a television (television), a wireless headset, a VR head-mounted display, a tablet computer, a display, a camera, a portable computer, a laptop computer (laptop computer), a vehicle-mounted computer, a vehicle-mounted terminal (for example, a microphone or a speaker), a projector, a printer, a keyboard, a mouse, an e-book, a smart wristband (smart wristband), a smartwatch (smartwatch), smart glasses, a smart vehicle, a smart lathe, a smart monitoring device, and the like.

As an example rather than a limitation, the communication system 100 shown in FIG. 1 includes the first electronic device 110, the second electronic device 121, and the second electronic device 122, where the first electronic device 110 is a router, the second electronic device 121 is a mobile phone, and the second electronic device 122 is a printer. However, it should be understood that the communication system 100 may include any quantity of first electronic devices and any quantity of second electronic devices, and the first electronic device and the second electronic device may be electronic devices in any one of the foregoing forms. Quantities and types of first electronic devices and second electronic devices included in the communication system 100 are not limited in this embodiment of this application.

In this embodiment of this application, the first electronic device and the second electronic device may support at least one short-range access technology.

In some embodiments, both the first electronic device and the second electronic device support the SLB access technology. Further, the first electronic device and/or the second electronic device may support the SLE access technology. For example, a mobile phone, a tablet computer, a wearable device, or the like may support both the SLE and the SLB. For another example, VR glasses, a vehicle-mounted center console, or a camera may support the SLB. That an electronic device supports only the SLE access technology is not a focus of this application, and is not described in detail.

In this embodiment of this application, during communication between the first electronic device and the second electronic device, one electronic device may serve as a grant (grant, G) node device (which may be referred to as a G node for short), or referred to as a main control node device, and the other electronic device may serve as a terminal (terminal, T) node device (which may be referred to as a T node for short). For example, as shown in FIG. 1, the first electronic device 110 may serve as a G node device, and the second electronic devices 121 and 122 serve as T node devices.

Whether an electronic device serves as a G node device or a T node device may be referred to as whether a role of the electronic device is a G node device or a T node device. For example, that the first electronic device 110 serves as a G node device means that a role of the first electronic device 110 is a G node device, and that the second electronic device 121 serves as a T node device means that a role of the second electronic device 121 is a T node device. Usually, an electronic device serving as a G node device may schedule and manage resources in a unified manner.

In the SLB, one G node may be connected to and communicate with a plurality of T nodes, but the T nodes connected to the same G node cannot communicate with each other. FIG. 1 is used as an example. If the first electronic device communicates with the at least one second electronic device based on the SLB access technology, the first electronic device may be a G node device, and the at least one second electronic device is a T node device. Two T node devices (for example, the second electronic device 121 and the second electronic device 122) cannot sense existence of each other, and cannot be connected to each other. Therefore, the T node devices cannot directly communicate with each other either. In this scenario, flexibility of communication between electronic devices is reduced.

To implement communication between T node devices and improve flexibility of communication that is performed between electronic devices based on the SLB access technology, embodiments of this application provide a device connection method, to implement device discovery, service discovery, data transmission, and the like between T node devices. Specifically, the G node device in embodiments of this application has a relay function, and can transmit signaling, data, and the like that are sent and received between two T node devices. In this way, the SLB access technology supports communication between T node devices. The following provides detailed descriptions with reference to accompanying drawings.

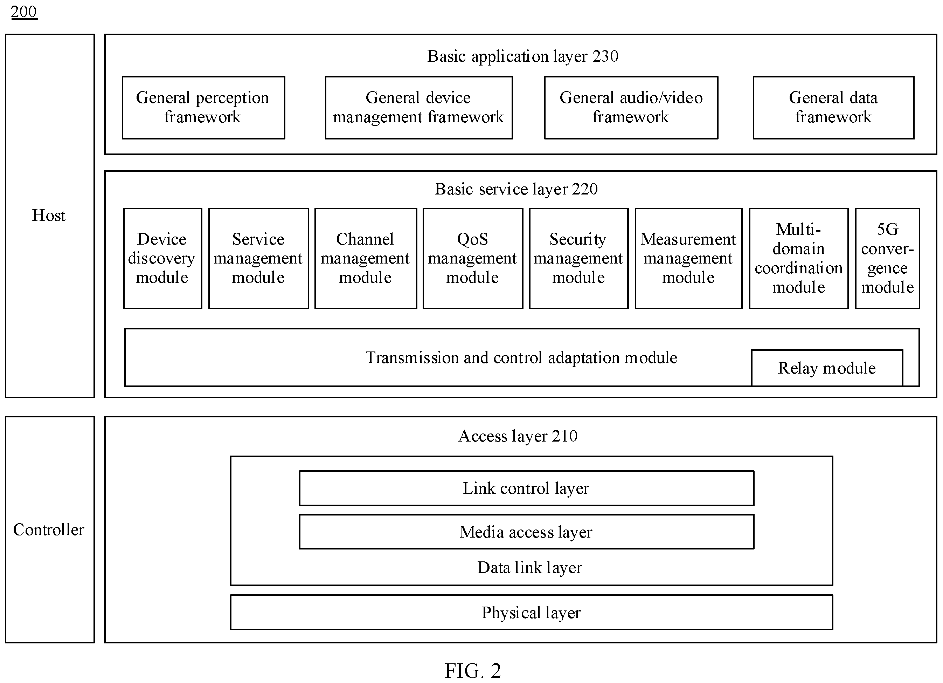

To support a next-generation short-range wireless communication technology and implement a complete process of a short-range service, a new protocol framework needs to be established. FIG. 2 is a schematic diagram of a protocol architecture of wireless short-range communication according to an embodiment of this application. The protocol architecture may be used in any electronic device capable of implementing short-range communication, for example, in the first electronic device and the second electronic device in the communication system 100 shown in FIG. 1.

As shown in FIG. 2, the protocol architecture includes but is not limited to a host (host) and a controller (controller). The host is an upper-layer protocol of the controller. The host includes a basic application layer and a basic service layer. The controller may also be referred to as an access layer, and is a bottom layer of the protocol architecture.

As shown in FIG. 2, to be specific, the protocol architecture 200 may include an access layer 210, a basic service layer 220, and a basic application layer 230 from bottom to top. The following describes the access layer, the basic service layer, and the basic application layer in detail.

The access layer 210 is mainly responsible for processing an underlying logical link, for example, establishing, reconfiguring, or deleting a logical link, to meet a service requirement (for example, reliable data and real-time data) of the basic service layer 220, where the logical link is used to transmit a service between two electronic devices. The access layer 210 may further include a data link layer and a physical layer. In some embodiments, the data link layer may include a link control layer and a media access layer. Each layer implements its own function to support the access layer 210.

A logical channel (logical channel, LC) is established at the access layer 210. The logical channel provides a basis for establishing a transmission channel (transmission channel, TC) at the upper-layer basic service layer. The transmission channel at the basic service layer is available only after the logical channel is successfully established. To distinguish the logical channel, a logical channel identifier (logical channel identification, LCID) is defined to uniquely identify the logical channel.

The access layer 210 may support a plurality of access technologies, including but not limited to an SLB access technology, an SLE access technology, and another access technology, for example, a Bluetooth low energy (Bluetooth low energy, BLE) technology or another future sparklink alliance access technology. In this embodiment of this application, an architecture of the access layer 210 is described by using the SLB access technology as an example. It can be understood that a name of the SLB access technology is merely an example, and should not be construed as a limitation on embodiments of this application. In another embodiment or in a future architecture, the SLB may alternatively have another name.

The basic service layer 220 is a protocol layer located between the access layer 210 and the basic application layer 230, and includes a plurality of functional units that are unbound from a service and implement a general function process. Specifically, the basic service layer is mainly responsible for creating, adding, deleting, or releasing a transmission channel, or the like, and controlling a logical link (for example, selecting an access technology), to meet a service requirement (for example, traffic, a rate, audio quality, and a resolution) of the basic application layer 230. A design objective for the basic service layer 220 is to be compatible with a plurality of access layer technologies, for example, compatible with the SLB and SLE access technologies described above, and reserve a capability of being compatible with more access technologies in the future.

The basic service layer 220 may include a plurality of modules or functional units for achieving the foregoing design objective, including but not limited to a device discovery module, a service management module, a channel management module, a quality of service (quality of service, QoS) management module, a security management module, a measurement management module, a multi-domain coordination module, a 5G convergence module, and a transmission and control adaptation module.

The device discovery module is configured to discover a device when no connection is established to the device. Specifically, the device discovery module is configured to broadcast a capability of a device on which the device discovery module is installed, and scan a peer device that meets a service requirement.

The service management module is configured to discover and perform an operation on a service on the device. Specifically, the service management module is configured to define a data structure, and provides a service function set at the basic application layer with a data module for controlling transmission of instructions and small data.

The channel management module is configured to manage a transmission channel, including: creating, adding, deleting, or releasing the transmission channel. Specifically, the channel management module is configured to apply for a transmission channel at the basic application layer based on a service type (business identifier, BID) and a QoS capability of a service to transmit a data flow, manage establishment and release of a transmission channel for a service, maintain a mapping relationship between a transmission channel and a logical link, and the like.

The QoS management module is configured to manage and negotiate on QoS of transmission. Specifically, the QoS management module is configured to manage a static QoS request table of a service, and negotiate with a peer device on QoS.

The security management module is responsible for a secure connection at the basic service layer.

The measurement management module is configured to configure underlying measurement and scheduling for power control or the like.

In a scenario in which a plurality of domains (subnets) exist, the multi-domain coordination module implements information exchange between domains, and implements interference avoidance and load balancing between the plurality of domains.

The 5G convergence module is configured to establish a channel with a cellular 5G remote management capability, and implement a device with a cellular 5G remote control function through an authentication mechanism.

The transmission and control adaptation module is configured to transmit data, and implement segmentation and reassembly, flow control, distribution and aggregation, or other functions on data in a transmission channel.

In this embodiment of this application, the transmission and control adaptation module includes a submodule: a relay module, configured to transmit relay data.

Herein, the relay data may be understood as data that is transmitted between two T nodes and that needs to be relayed by a G node. The relay data includes relay service management data and relay service data. The relay service management data is data related to service management, and the relay service data is data related to a service.

The SLB access layer protocol does not support direct communication between T nodes, and none of the physical layer, the media access layer, and the link control layer of the access layer 210 supports direct communication between T nodes. Therefore, in this embodiment of this application, a relay function for service management data and service data between two T nodes is performed on a host side of a G node. To shorten a data delay between T nodes as much as possible, a relay module of the G node is located at a bottom layer on the host side, and may serve as a submodule of the transmission and control adaptation module.

A transmission channel (transmission channel, TC) is established at the basic service layer 220. To distinguish the transmission channel, a transmission channel identifier (transmission channel identification, TCID) is defined to uniquely identify the transmission channel.

In one aspect, transmission at the basic service layer 220 may be classified into control plane transmission and service plane transmission. Correspondingly, the transmission channel at the basic service layer 220 may include a control channel and a service channel, where the control channel is used to transmit control plane data, and the service channel is used to transmit service plane data.

In another aspect, based on whether a transmission channel is established by default, the transmission channel at the basic service layer 220 may include a default transmission channel and a non-default transmission channel. Usually, the default transmission channel is automatically established after an underlying default logical link is established. The non-default transmission channel is established as required when there is a service requirement.

In this embodiment of this application, the service channel may include a relay service channel and a non-relay service channel. The relay service channel is used to transmit service data between T nodes. The non-relay service channel is used to transmit service data between a T node and the G node. It should be noted that the "service data between T nodes" herein is service data between the T nodes that is relayed by the G node. A source device of the service data is a T node, and a destination device of the service data is a T node. Although the service data is forwarded by the G node, the G node performs only a relay function, and the G node is not a destination device of the service data. In this embodiment of this application, the G node may be referred to as a relay device or an intermediate node device. The "service data between a T node and the G node" is service data that is directly transmitted between the T node and the G node, where one of the G node and the T node is a source device of the service data, and the other is a destination device of the service data.

To be specific, if a source node device and a destination node device are a G node device and a T node device respectively, a service is transmitted between the source node device and the destination node device through a non-relay service channel, and the transmitted service may be referred to as a non-relay service. If both a source node device and a destination node device are T node devices and relaying needs to be performed by a G node device in the middle, transmission is performed between the source node device and the destination node device through a relay service channel, and a transmitted service may be referred to as a relay service.

In the following embodiments, similar descriptions are also understood in this manner, and details are not described again. In this embodiment of this application, the service channel is a non-default transmission channel, and is established as required when there is a service requirement.

In this embodiment of this application, the control channel is used to transmit signaling between a T node and the G node. The "signaling between a T node and the G node" is signaling that is directly transmitted between the T node and the G node, where one of the G node and the T node is a source device of the signaling, and the other is a destination device of the signaling. In this embodiment of this application, the control channel is a default transmission channel.

In this embodiment of this application, the default transmission channel may include the control channel, a service management channel, a relay service management channel, and the like.

Specifically, the control channel is a channel designed at the basic service layer, and the control channel is available only after a corresponding logical channel is established. Establishment of the control channel provides a basis for establishing a service channel between electronic devices. In this embodiment of this application, the control channel is used to transmit signaling between a T node and the G node.

The service management channel is automatically established after a default logical channel is established. In this embodiment of this application, the service management channel is used to transmit service management data between a node T and the G node.

The relay service management channel is also a channel designed at the basic service layer. The relay service management channel is available only after a corresponding default logical channel is established. The relay service management channel is used to transmit service management data between T nodes (to be specific, service management data between the T nodes that needs to be relayed by the G node). For example, when a T node queries whether another T node has a specified service (for example, an audio service, a video service, or a photographing service), or when a T node queries for services (for example, a primary service and/or a secondary service) that another T node has, data exchanged between the two T nodes is transmitted through the relay service management channel. Herein, the primary (primary) service may be understood as a service that may exist independently, and the secondary service may be understood as a service that needs to depend on the primary service, and cannot exist independently.

In some embodiments, the default transmission channel may further include a relay control channel. The relay control channel is a channel at the basic service layer and is configured to transmit signaling between T nodes. The relay control channel is used only in tunnel (tunnel) relay mode. When a tunnel channel is established, the relay control channel is automatically established. When the tunnel channel is deleted, the relay control channel is deleted correspondingly. The tunnel channel herein is a channel between the basic service layer and the access layer. To be specific, the tunnel channel is a channel between a transmission channel and a logical channel. In other words, in an upward direction, the tunnel channel may carry data or signaling delivered by a transmission channel (for example, the service channel or the control channel); and in a downward direction, the tunnel channel may transmit data or signaling to a logical channel. Related descriptions of the relay control channel, the tunnel channel, and the tunnel relay mode are described with reference to specific embodiments. Details are not described herein.

The basic application layer 230 is mainly responsible for adapting to different service requirements of upper-layer applications (application, APP), and routing data to the basic service layer 220. Based on different types of services, the basic application layer 230 may include a plurality of service function sets (which may also be referred to as service modules or service frameworks), for example, an audio/video framework or a data framework. Each service function set includes classified data processing for services.

For example, as shown in FIG. 2, the application layer 230 may include a general perception framework, a general device management framework, a general audio/video framework, a general data framework, and the like. The general perception framework includes processing on perception data. The general device management framework includes processing on device management data. The general audio/video framework includes processing, for example, encoding and decoding, on audio/video data. The general data framework includes processing, for example, encryption and compression, on file data. Different service function sets may be distinguished by business identifiers (business identification, BID).

A channel at the basic application layer 230 is a port (port). In a downward direction, a plurality of ports may be mapped to one transmission channel.

In this embodiment of this application, the basic service layer 220 and the basic application layer 230 may be collectively referred to as an upper-layer protocol or a host protocol. The host protocol can adapt to the underlying access layer 210 to support requirements of different services. A unified host protocol may be used at an upper layer regardless of an access technology supported by the access layer. Specifically, the host protocol can provide a service module with a request for initiating a service, and transmit and control service data.

To implement complete transmission of a service, there is a mapping relationship between channels at different layers in the protocol architecture 200. Specifically, there is a mapping relationship between a port at the basic application layer 230 and a transmission channel at the basic service layer 220, where a plurality of ports may be mapped to one transmission channel. There is a mapping relationship between a transmission channel at the basic service layer 220 and a logical channel at the access layer 210, where a plurality of transmission channels may be mapped to one logical channel. One logical channel corresponds to one access technology. When service data needs to be transmitted, the basic application layer 230 transmits the data to the basic service layer 220 through a port by using a data flow (flow), and the basic service layer 220 selects one or more transmission channels for transmission. Because there is a mapping relationship between a transmission channel and a logical channel, correspondingly, after receiving the data, the access layer 210 continues to transmit the data through a corresponding logical channel.

In this embodiment of this application, communication between T nodes mainly relates to the following several scenarios: a scenario of device and service discovery between T nodes; and a scenario of data transmission between T nodes. Device and service discovery between T nodes provides a basis for service data transmission between two T nodes. The following describes in detail a process of device and service discovery and data transmission between two T nodes by using an example in which the first electronic device 110 in FIG. 1 is a G node device (which may be referred to as a G node for short in the following embodiments), the second electronic device 121 is a first T node device (which may be referred to as a first T node for short in the following embodiments, and is denoted as Tl), and the second electronic device 122 is a second T node device (which may be referred to as a second T node for short in the following embodiments, and is denoted as T2).

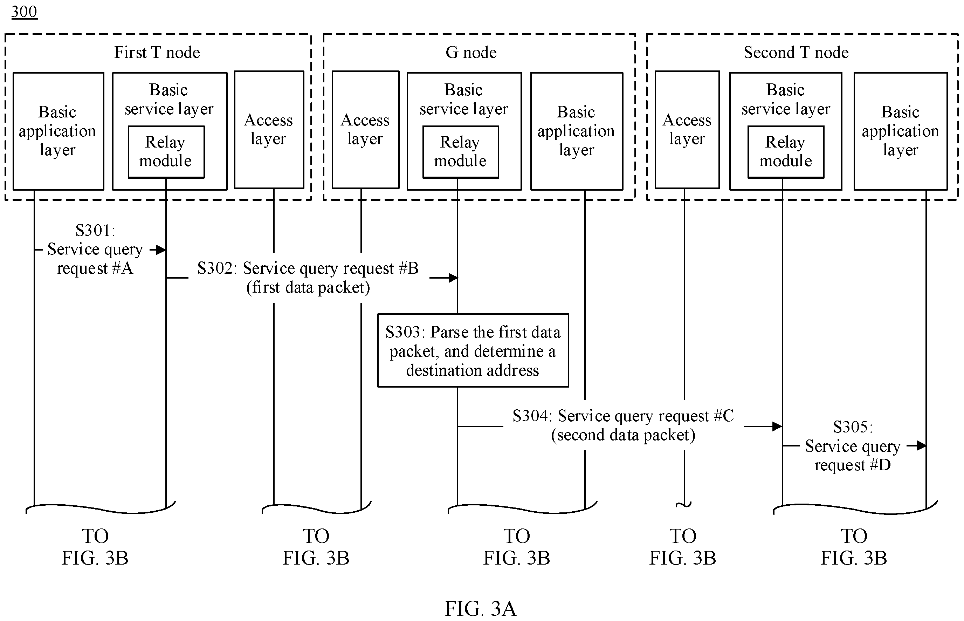

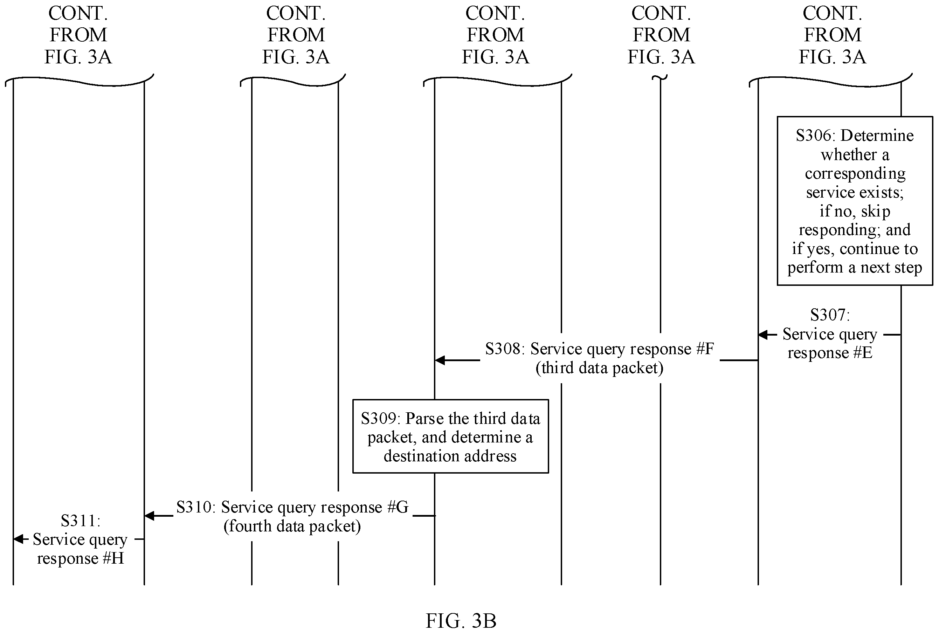

FIG. 3A and FIG. 3B are a schematic flowchart of a method for service discovery between T nodes according to an embodiment of this application. During implementation of this process, a first T node, a G node, and a second T node are used, and each node has the protocol architecture 200 shown in FIG. 2. In this embodiment of this application, "device and service discovery between T nodes" includes device discovery and service discovery between two T nodes, where the two T nodes are connected to one G node. A T node that initiates a discovery process may be referred to as a discovery entity, and a T node that can be discovered by the discovery entity may be referred to as a discovered entity. The method 300 shown in FIG. 3A and FIG. 3B includes steps S301 to S311, and describes a process of discovering another T node by the first T node. The following describes the steps in detail with reference to FIG. 3A and FIG. 3B.

S301: A basic application layer of the first T node sends a service query request #A to a relay module at a basic service layer.

The service query request #A is used to request to query for a service of another T node. For example, the service query request #A is used to request to query for another T node having a first service (to be specific, query for a specified service), or is used to request to query for services that another T node has.

Herein, the first service includes but is not limited to an audio service, a video service, a photographing service, a printing service, a navigation service, an alarm clock service, and the like. A type of the first service is not specifically limited in this embodiment of this application, and the first service may be any service supported by the first T node.

It should be noted that the first T node and the another T node that is queried (or referred to as being discovered) should be connected to one G node.

In some embodiments, the service query request #A may include information for querying for a service. Optionally, the service query request #A may further include at least one of information indicating a source node and information indicating a destination node. Content of the information is described below in detail.

In an example, the information indicating the source node may include an identifier of the source node and/or an address of the source node.

The identifier of the source node may be an identifier obtained for the source node upon delivery, for example, a device identifier (device identification, Device ID), a unique device identifier (unique device identifier, UDID), a universally unique identifier (universally unique identifier, UUID), or an international mobile equipment identity (international mobile equipment identity, IMEI). The identifier of the source node may alternatively be an identifier allocated by a G node to which the source node is connected. For example, the G node may allocate, to T nodes connected to the G node, identifiers for distinguishing between different T nodes. In this embodiment of this application, the service query request #A is sent by the first T node. Therefore, the identifier of the source node is specifically an identifier of the first T node.

The address of the source node may be a device address obtained for the source node upon delivery, for example, a media access control (media access control, MAC) address or a physical address. The address of the source node may alternatively be an address allocated by a network after the source node is connected to the network. In this embodiment of this application, the service query request #A is sent by the first T node. Therefore, the address of the source node is specifically an address of the first T node.

In this embodiment of this application, the identifier of the source node may correspond to the address of the source node, and one piece of information may be obtained based on the other piece of information and the correspondence between the two pieces of information. For example, the address of the source node may be obtained based on the identifier of the source node and the correspondence.

In this embodiment of this application, the information indicating the source node may be stored at the basic application layer and/or the basic service layer of the first T node.

In an example, the information indicating the destination node may include an identifier of the destination node and/or an address of the destination node.

The identifier of the destination node may be an identifier obtained for the destination node upon delivery, for example, a device ID, a UDID, a UUID, or an IMEI. The identifier of the destination node may alternatively be an identifier allocated by a G node to which the destination node is connected. It can be understood that the G node should be a node to which both the source node and the destination node are connected.

In some embodiments, if the source node specifies to query for a service of a specific T node, the identifier of the destination node may include an identifier of the T node whose service is to be queried, for example, an identifier of the second T node in this embodiment of this application.

In some embodiments, if the source node does not specify a T node, the identifier of the destination node may include a universal identifier. Correspondingly, the G node may query, based on the universal identifier, for services of all T nodes connected to the G node other than the first T node. To be specific, the universal identifier does not specify a specific device, and generally indicates a T node connected to the G node.

In some embodiments, if the source node specifies to query for a service of a specific T node, the address of the destination node may include an address of the T node whose service is to be queried, for example, an address of the second T node in this embodiment of this application. The address of the destination node may be a device address obtained for the destination node upon delivery, for example, a MAC address or a physical address. The address of the destination node may alternatively be an address allocated by a network after the destination node is connected to the network.

In some embodiments, if the source node does not specify a T node, the address of the destination node may include a broadcast address. Correspondingly, the G node may query, based on the broadcast address, for services of all T nodes connected to the G node other than the first T node.

In this embodiment of this application, if the source node specifies to query for a service of a specific T node, the identifier and/or the address of the destination node may be obtained by the basic application layer of the first T node. For example, after performing a service query for the first time, the first T node may obtain an identifier and/or an address that are fed back by a T node that receives the service query, and the first T node may store the identifier and/or the address of the T node that receives the service query. When performing a query next time, the first T node may specify to query the T node whose identifier and/or address are stored.

Optionally, after obtaining the identifier and/or the address of the destination node, the basic application layer of the first T node may further send the identifier and/or the address of the destination node to the basic service layer, so that the basic service layer of the first T node stores the information.

In this embodiment of this application, if the source node does not specify a T node, the identifier and/or the address of the destination node (for example, the universal identifier and/or the broadcast address of the destination node) may be stored at the basic application layer and/or the basic service layer of the first T node.

The information for querying for a service may indicate a to-be-queried service.

In an example, the information for querying for a service may be carried in basic application layer data of the first T node. In other words, the information for querying for a service may be delivered by using the basic application layer data of the first T node. In this way, the information for querying for a service may be obtained based on the basic application layer data of the first T node.

S302: The relay module of the first T node sends a service query request #B to a relay module of the G node through a relay service management channel.

The service query request #B is used to request the G node to query for a service of another T node, for example, request to query for another T node having the first service, or is used to request the G node to query for services that another T node has. It should be understood that the another T node herein is a T node connected to the G node other than the first T node.

Herein, the relay service management channel is a default transmission channel, and is usually automatically established after an underlying default logical link is established. The relay service management channel is used to transmit service data related to a relay service. In this embodiment of this application, the relay service management channel may be identified by a transmission channel identifier TCID, and the identifier may be referred to as a relay service management channel identifier.

In some embodiments, the service query request #B may include information indicating a destination node and information for querying for a service. Optionally, the service query request #B may further include information indicating a source node. Content of the information is described below in detail.

In an example, the information indicating the source node may include an identifier of the source node and/or an address of the source node, and specifically, include the identifier of the first T node and/or the address of the first T node. In this way, the G node determines, based on the identifier of the first T node and/or the address of the first T node, a node that initiates the service query. When the information indicating the source node includes the identifier of the first T node, the G node may determine the address of the first T node based on a correspondence between the identifier of the first T node and the address of the first T node.

The information indicating the source node may be received by the relay module of the first T node from the basic application layer of the first T node, for example, received through the service query request #A. Alternatively, the information indicating the source node may be prestored in the relay module of the first T node. This is not limited in this embodiment of this application.

In an example, the information indicating the destination node may include an identifier of the destination node and/or an address of the destination node. Specifically, if the first T node specifies to query a specific T node, the information indicating the destination node may include an identifier and/or an address of the specified T node; or if the first T node does not specify a T node, the information indicating the destination node may include a universal identifier/or a broadcast address. In different cases, content included in the information indicating the destination node slightly varies. Examples are used below for description.

Case 1: The first T node performs a query for the first time.

In this case, the information indicating the destination node may include a universal identifier and/or a broadcast address. In this way, after receiving the service query request #B, the G node may determine, based on the universal identifier and/or the broadcast address, that a service query needs to be performed on a T node connected to the G node other than the first T node, for example, query for a specified service of another T node.

Alternatively, the information indicating the destination node does not include specific content about a T node, but includes indication information used to indicate the G node to perform a service query on another T node connected to the G node, for example, query for a primary service of the another T node.

Case 2: The first T node specifies a T node for a service query.

In this case, the information indicating the destination node may include an identifier and/or an address of the specified T node, for example, include the identifier of the second T node and/or the address of the second T node. In this way, the G node may determine, based on the identifier of the second T node and/or the address of the second T node, a node that receives the service query. When the information indicating the destination node includes the identifier of the second T node, the G node may determine the address of the second T node based on a correspondence between the identifier of the second T node and the address of the second T node.

The information indicating the destination node may be received by the relay module of the first T node from the basic application layer, for example, received through the service query request #A. Alternatively, the information indicating the destination node may be prestored in the relay module of the first T node. This is not limited in this embodiment of this application.

In this embodiment of this application, the information for querying for a service may indicate a to-be-queried service.

In an example, the information for querying for a service may be carried in basic application layer data of the first T node. Certainly, when the first T node needs to query for services that another T node has, the information for querying for a service may not include information about a specific service, but include indication information used to indicate to query for services that the another T node has.

The information for querying for a service may be received by the relay module of the first T node from the basic application layer, for example, received through the service query request #A.

In some other embodiments, the G node may alternatively determine, based on other information (for example, the identifier of the relay service management channel), that the service query request #B comes from the first T node. Therefore, the service query request #B may not include information indicating a source node.

In this embodiment of this application, information included in the service query request #B is transmitted in a form of a data packet. For example, in S302, the first T node sends a first data packet to the G node, where the first data packet includes information carried in the service query request #B. A format of the first data packet is described in more detail in the following embodiments. Details are not described herein.

S303: The relay module of the G node parses the first data packet to determine a destination address.

The destination address herein is an address of the T node that receives the service query, and is described below in different cases.

Case 1: The first T node performs a service query for the first time.

In this case, if the first data packet carries a universal identifier and/or a broadcast address, the relay module of the G node determines that the destination address is the broadcast address. The relay module of the G node distributes a service query request #C to T nodes in step S304.

For example, the first data packet may carry a broadcast address. In step S303, the G node obtains the broadcast address by parsing the first data packet. In step S304, the relay module of the G node may replace the broadcast address with an address of another T node connected to the G node, and distribute the service query request #C to the another T node. For ease of understanding, in the following embodiments, one node, for example, the second T node, is used as an example to describe a subsequent process.

Case 2: The first T node specifies a T node on which a service query is to be performed.

In this case, if the first data packet carries an identifier and/or an address of the specified T node, the relay module of the G node determines that the destination address is the address of the specified T node. The relay module of the G node sends the service query request #C to the specified T node in step S304.

For example, the first data packet may carry the identifier of the second T node and/or the address of the second T node. In step S303, the G node may obtain the address of the second T node by parsing the first data packet. In step S304, the relay module of the G node sends the service query request #C to the second T node.

S304: The relay module of the G node sends the service query request #C to a relay module of the second T node through a relay service management channel.

The service query request #C is used to request to query for a service of the second T node. For example, the service query request #C is used to request to query whether the second T node has the first service, or is used to request to query for services that the second T node has.

In some embodiments, the service query request #C may include information indicating a source node and information for querying for a service. Optionally, the service query request #C may further include information indicating a destination node. Content of the information is described below in detail.

In an example, the information indicating the source node may include the identifier of the first T node and/or the address of the first T node.

In an example, the information indicating the destination node may include the identifier of the second T node and/or the address of the second T node. Certainly, because the G node has obtained, in step S303, the address of the T node (namely, the second T node) that receives the service query, in step S304, the G node may not notify the second T node of information about the T node that receives the service query, to be specific, may not add, to the service query request #C, the information indicating the destination node.

In an example, the information for querying for a service may be carried in basic application layer data of the first T node.

For example, when the first T node needs to query for a service of the second T node, there may be two manners. Manner 1: The first T node may query for all primary services of the second T node and features of the services. Manner 2: The first T node may query for a special service of the second T node and a feature of the service. For packet formats corresponding to the foregoing two manners, refer to a format definition of a sparklink service management packet. Details are not described herein.

In this embodiment of this application, information included in the service query request #C is transmitted in a form of a data packet. For example, in S304, the G node sends a second data packet to the second T node, where the second data packet includes information carried in the service query request #C.

In some embodiments, the second data packet and the first data packet may have a same format and/or carry same information. For example, the G node directly forwards the first data packet to the second T node in step S304.

In some other embodiments, the second data packet and the first data packet may have different formats and/or carry different information. For example, after receiving the first data packet, the G node processes information in the first data packet, re-packages processed information into the second data packet, and forwards the second data packet to the second T node.

A format of the second data packet is described in more detail in the following embodiments. Details are not described herein.

S305: The relay module of the second T node sends a service query request #D to a basic application layer of the second T node.

The service query request #D is used to request to query for a service of the second T node. For example, the service query request #D is used to request to query whether the second T node has the first service, or is used to request to query for services that the second T node has.

Specifically, the relay module of the second T node may parse the second data packet received in step S304, and send a result obtained through parsing to a basic application layer by using the service query request #D.

S306: The basic application layer of the second T node determines whether the second T node has a corresponding service.

The basic application layer of the second T node manages information about all services of the second T node. In this step, the second T node determines whether the second T node has the first service, or determines services that the second T node has.

If the second T node does not have a corresponding service, the second T node does not respond, and the process ends.

If the second T node has a corresponding service, the second T node continues to perform S307.

In this manner, a T node that meets a condition responds, and a T node that does not meet the condition does not respond. This can reduce signaling overheads and improve resource utilization when many T nodes are connected to the G node.

In some embodiments, a timer may be set on the G node side or the first T node side. After timing duration of the timer elapses, it may be considered by default that a T node that does not respond does not have a corresponding service by default.

In some embodiments, the second T node responds regardless of whether the second T node has a corresponding service. For example, if the second T node has a corresponding service, information indicating that the query succeeds is returned; or if the second T node does not have a corresponding service, information indicating that the query fails is returned.

In this manner, feedback is performed regardless of whether another T node meets a condition, so that transmission reliability can be ensured.

In this embodiment of this application, it is assumed that the second T node has a service queried by the first T node, and needs to respond to the query performed by the first T node. A subsequent process is described as follows.

S307: The basic application layer of the second T node sends a service query response #E to a relay module at a basic service layer.

The service query response #E indicates a service that the second T node has, for example, indicates that the second T node has the queried first service, or indicates services (for example, primary services) that the second T node has.

In some embodiments, the service query response #E may include information for responding to the service query. Optionally, the service query response #E may further include at least one of information indicating a source node and information indicating a destination node. Content of the information is described below in detail.

It should be noted that, when performing steps S301 to S305, the G node forwards, to the second T node, a service query request that comes from the first T node. Therefore, the first T node is a source node, and the second T node is a destination node. When performing steps S307 to S311, the G node forwards, to the first T node, a service query response that comes from the second T node. Therefore, the second T node is a source node, and the first T node is a destination node. To be specific, the source node and the destination node are determined mainly based on a sender and a final receiver of a request (or a response). In this embodiment of this application, an initial sender is the source node, and a final receiver is the destination node.

In an example, the information indicating the source node may include the identifier of the second T node and/or the address of the second T node.

In an example, the information indicating the destination node may include the identifier of the first T node and/or the address of the first T node.

In an example, the information for responding to the service query may be carried in basic application layer data of the second T node. Alternatively, the information for responding to the service query may include indication information, to indicate that the second T node has the first service or indicate services that the second T node has.

S308: The relay module of the second T node sends a service query response #F to the relay module of the G node through a relay service management channel.

The service query response #F indicates a service that the second T node has, for example, indicates that the second T node has the queried first service, or indicates services (for example, primary services) that the second T node has.

In some embodiments, the service query response #F may include information indicating a destination node and information for responding to the service query. Optionally, the service query response #F may further include information indicating a source node. Content of the information is described below in detail.

In an example, the information indicating the source node may include the identifier of the second T node and/or the address of the second T node. In this way, the G node determines, based on the identifier of the second T node and/or the address of the second T node, a node that receives the service query. When the information indicating the source node includes the identifier of the second T node, the G node may determine the address of the second T node based on the correspondence between the identifier of the second T node and the address of the second T node.

The information indicating the source node may be received by the relay module of the second T node from the basic application layer of the second T node, for example, received through the service query response #E. Alternatively, the information indicating the source node may be prestored in the relay module of the second T node. This is not limited in this embodiment of this application.

In an example, the information indicating the destination node may include the identifier of the first T node and/or the address of the first T node. In this way, the G node may determine, based on the identifier of the first T node and/or the address of the first T node, a node that initiates the service query. When the information indicating the destination node includes the identifier of the first T node, the G node may determine the address of the first T node based on the correspondence between the identifier of the first T node and the address of the first T node.

The information indicating the destination node may be received by the relay module of the second T node from the basic application layer of the second T node, for example, received through the service query response #E. Alternatively, the information indicating the destination node may be prestored in the relay module of the second T node. This is not limited in this embodiment of this application.

In an example, the information for responding to the service query may be carried in basic application layer data of the second T node. Alternatively, the information for responding to the service query may include indication information, to indicate that the second T node has the first service or indicate services that the second T node has.

The information for responding to the service query may be received by the relay module of the second T node from the basic application layer of the second T node, for example, received through the service query response #E.

In this embodiment of this application, information included in the service query response #F is transmitted in a form of a data packet. For example, in S308, the second T node sends a third data packet to the G node, where the third data packet includes information carried in the service query response #F. A format of the third data packet is described in more detail in the following embodiments. Details are not described herein.

S309: The relay module of the G node parses the third data packet to determine a destination address.

The destination address herein is an address of a T node that initiates the service query, namely, the address of the first T node.

S310: The relay module of the G node sends a service query response #G to the relay module of the first T node through a relay service management channel.

The service query response #G indicates a service that the second T node has, for example, indicates that the second T node has the queried first service, or indicates services (for example, primary services) that the second T node has.

In some embodiments, the service query response #G may include information indicating a source node and information for responding to the service query. Optionally, the service query response #G may further include information indicating a destination node. Content of the information is described below in detail.

In an example, the information indicating the source node may include the identifier of the second T node and/or the address of the second T node.

In an example, the information indicating the destination node may include the identifier of the first T node and/or the address of the first T node. Certainly, because the service query response #G is received by the first T node, in some embodiments, the service query response #G may not include information indicating a destination node (namely, information about the first T node).

In an example, the information for responding to the service query may be carried in basic application layer data of the second T node. Alternatively, the information for responding to the service query may include indication information, to indicate that the second T node has the first service or indicate services that the second T node has.

In this embodiment of this application, information included in the service query response #G is transmitted in a form of a data packet. For example, in S310, the G node sends a fourth data packet to the first T node, where the fourth data packet includes information carried in the service query response #G.

In some embodiments, the fourth data packet and the third data packet may have a same format and/or carry same information. For example, the G node directly forwards the third data packet to the first T node in step S310.

In some other embodiments, the fourth data packet and the third data packet may have different formats and/or carry different information. For example, after receiving the third data packet, the G node processes information in the third data packet, re-packages processed information into the fourth data packet, and forwards the fourth data packet to the first T node.

A format of the fourth data packet is described in more detail in the following embodiments. Details are not described herein.

S311: The relay module of the first T node sends a service query response #H to the basic application layer of the first T node.

The service query response #H indicates a service that the second T node has, for example, indicates that the second T node has the queried first service, or indicates services (for example, primary services) that the second T node has.

Specifically, the relay module of the first T node may parse the fourth data packet received in step S310, and send a result obtained through parsing to the basic application layer by using the service query response #H.

Steps S301 to S311 are a process of device and service discovery between the first T node and the second T node. After step S311, the first T node and the second T node complete the discovery process. In some embodiments, a timer may be set on the first T node device side. If no service query response is received from another T node after timing duration ends, the first T node may consider that no T node connected to the G node meets a condition.

The following describes example formats of the foregoing data packets. All the data packets included in steps S302, S304, S308, and S310 are transmitted through relay service management channels. Because this process is a service discovery process, the first data packet, the second data packet, the third data packet, the fourth data packet, and the like may also be referred to as service discovery data packets.

In some embodiments, a format of a data packet (for example, the first data packet or the third data packet) received by the G node may be the same as that of a data packet (for example, the second data packet or the fourth data packet) sent by the G node. In this case, the G node device may directly forward a received service discovery data packet.

For example, a format of the service discovery data packet (to be specific, a format of a packet transmitted in the relay service management channel) is shown in Table 1.

**Table 1**

| | | | | |
|---|---|---|---|---|
| Transmission channel identifier (TCID) | Length (Length) | Destination address (DestAddr) | Source address (SrcAddr) | Information payload (information payload) |

The service discovery data packet includes a transmission channel identifier field, a length field, a destination address field, a source address field, and an information payload field.

The transmission channel identifier field is used to carry a relay service management channel identifier.

The length (Length) field is used to indicate a total length of a data packet following the length field.

The destination address (DestAddr) field is used to carry an address of a node device (for example, a T node) that needs to receive a data packet.

The source address (SrcAddr) field is used to carry an address of a node device (for example, a T node) that sends a data packet.

The information payload (information payload) field is used to carry basic application layer data or service-related indication information.

In some other embodiments, the destination address field and the source address field may alternatively be used to carry an identifier of a node device that needs to receive a data packet and an identifier of a node device that sends a data packet, respectively.

In some embodiments, a format of a data packet (for example, the first data packet or the third data packet) received by the G node may be different from that of a data packet (for example, the second data packet or the fourth data packet) sent by the G node. In this case, the G node device may perform specific processing on a received service discovery data packet, and then perform re-packaging and forwarding.

For example, a format of a service discovery data packet received by the G node is shown in Table 2.

**Table 2**

| | | | |
|---|---|---|---|
| Transmission channel identifier (TCID) | Length (Length) | Destination address (DestAddr) | Information payload (information payload) |

A format of a service discovery data packet sent by the G node is shown in Table 3.

**Table 3**

| | | | |
|---|---|---|---|
| Transmission channel identifier (TCID) | Length (Length) | Source address (SrcAddr) | Information payload (information payload) |

Different from the data packet format shown in Table 1, the data packet shown in Table 2 may not include a source address field, and the data packet shown in Table 3 may not include a destination address field. Meanings of other fields are the same as those in Table 1. For details, refer to the foregoing related descriptions. For brevity, details are not described herein again.

To be specific, a data packet received by the G node may not include information about a source address, and the G node may autonomously determine, for example, based on a transmission channel identifier, a source node device that sends the data packet. In addition, a data packet sent by the G node may not include information about a destination address, because a destination device knows its own address, and does not need to be notified by the G node. This can reduce signaling overheads and improve resource utilization.

For ease of understanding, an example is used below for description with reference to FIG. 3A and FIG. 3B. For example, the first T node queries, for the first time, for a service of another T node connected to the same G node, where the second T node includes the first service to be queried by the first T node.

In S302, the G node receives the first data packet sent by the first T node. A packet format and information carried in the first data packet may be shown in Table 4.

**Table 4**

| | | | |
|---|---|---|---|
| Transmission channel identifier (TCID) | Length (Length) | Destination address (DestAddr) | Information payload (information payload) |
| Relay service management channel identifier | Length | Broadcast address | Device query request corresponding to the first service |

In S303, content of an information payload obtained by the G node by parsing the first data packet may include information included in the service query request #B.

In S304, the G node sends the second data packet to the second T node. A packet format and information carried in the second data packet may be shown in Table 5.

**Table 5**

| | | | |
|---|---|---|---|
| Transmission channel identifier (TCID) | Length (Length) | Source address (SrcAddr) | Information payload (information payload) |
| Relay service management channel identifier | Length | Address of the first T node | Device query request corresponding to the first service |

In S304, content of an information payload obtained by the second T node by parsing the second data packet may include information included in the service query request #C.

In S308, the G node receives the third data packet sent by the second T node. A packet format and information carried in the third data packet may be shown in Table 6.

**Table 6**

| | | | |
|---|---|---|---|
| Transmission channel identifier (TCID) | Length (Length) | Destination address (DestAddr) | Information payload (information payload) |
| Relay service management channel identifier | Length | Address of the first T node | Device query response corresponding to the first service |

In S309, content of an information payload obtained by the G node by parsing the third data packet may include information included in the service query response #F.

In S310, the G node sends the fourth data packet to the first T node. A packet format and information carried in the fourth data packet may be shown in Table 7.

**Table 7**

| | | | |
|---|---|---|---|
| Transmission channel identifier (TCID) | Length (Length) | Source address (SrcAddr) | Information payload (information payload) |
| Relay service management channel identifier | Length | Address of the second T node | Device query response corresponding to the first service |

In S310, content of an information payload obtained by the first T node by parsing the fourth data packet may include information included in the service query response #G.

It should be noted that the "device query request corresponding to the first service" is a specific example of the "information for querying for a service" in the foregoing embodiments, and the "device query response corresponding to the first service" is a specific example of the "information for responding to the service query" in the foregoing embodiments.

In some embodiments, the "device query request corresponding to the first service" and the "device query response corresponding to the first service" each are a type of information payload, and specific information included in the device query request and the device query response may be correspondingly designed according to a requirement. This is not limited in this embodiment of this application.

As an example rather than a limitation, the "device query request corresponding to the first service" is used as an example. The "device query request corresponding to the first service" may include a message type (for example, including a request message, a response message, or a notification message), a unique identifier UUID corresponding to the first service, a UUID type (for example, including a service, an attribute, a method, or an event), a starting index (for example, 0x00000000), an ending index (for example, 0xffffffff), and other information. The starting index (namely, a starting handle number) and the ending index (namely, an ending handle number) are used to indicate, in a database including all services of the second T node and service feature information, a service to be queried by the first T node, or indicate an event or an operation that needs to be performed.

In this embodiment of this application, when the G node forwards a service query request to a plurality of second T nodes, for example, when the first T node queries for a service of another T node for the first time, or when the first T node specifies to query for services of a plurality of second T nodes, the G node may sequentially forward, to the first T node, service query responses sent by the second T nodes; or may forward, to the first T node at a time, service query responses sent by the plurality of second T nodes; or may process service query responses sent by the plurality of second T nodes, combine the service query responses into one service query response, and send the service query response to the first T node. This is not limited in this embodiment of this application.

When the first T node specifies to query for services of a plurality of second T nodes, the service query request #B sent by the first T node to the G node may carry identifiers and/or addresses of the plurality of second T nodes. Correspondingly, a field indicating the identifiers and/or the addresses of the plurality of T nodes may be designed in a data packet format corresponding to the service query request #B. This is not limited in this embodiment of this application.

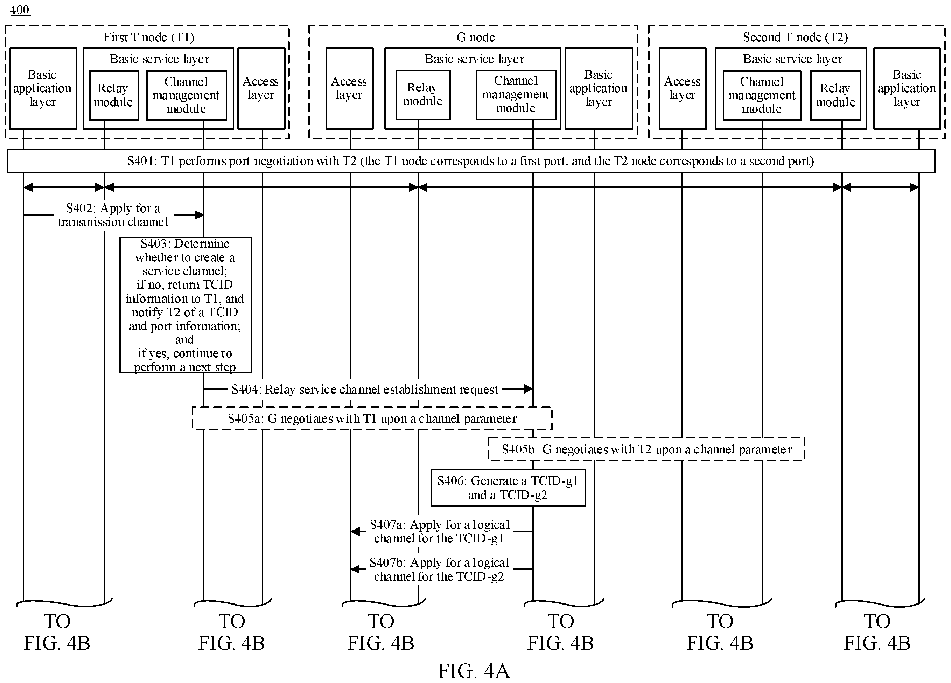

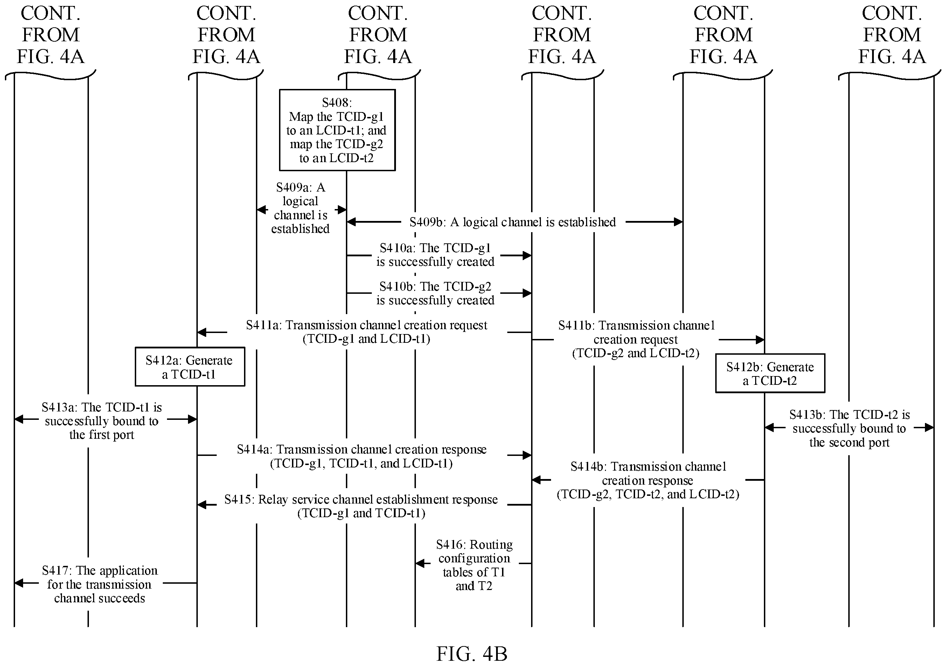

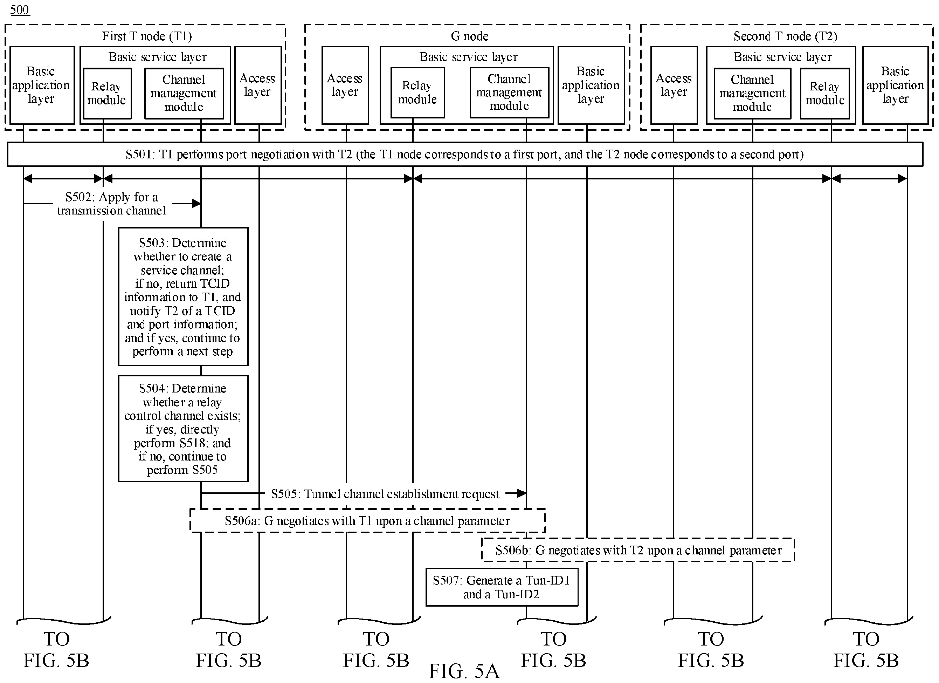

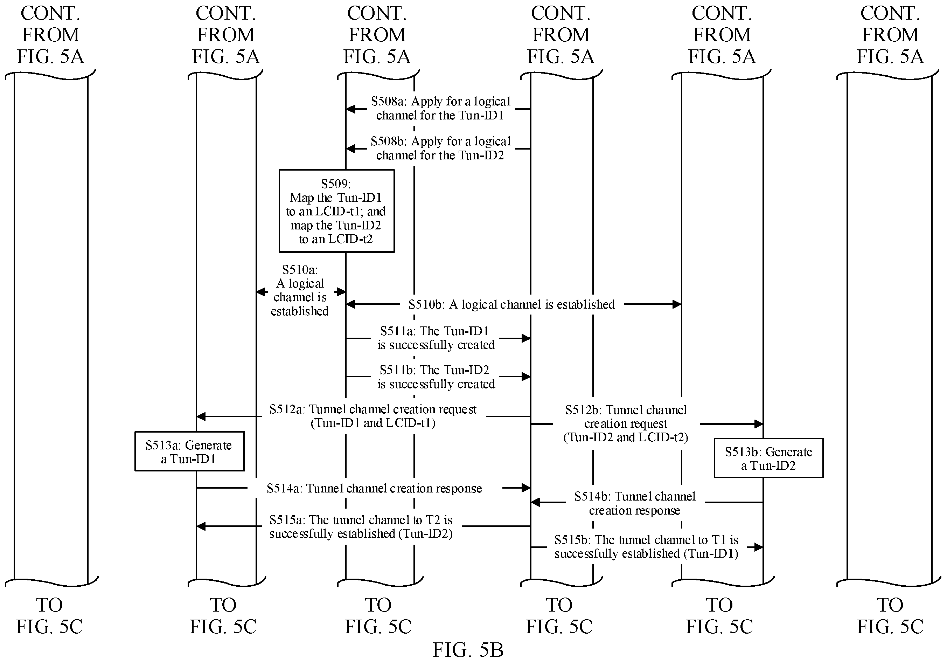

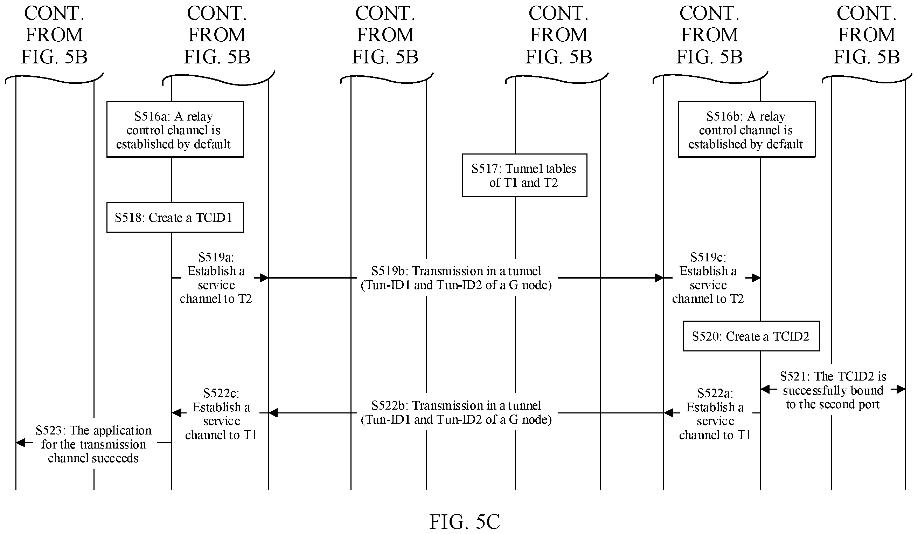

The foregoing describes the process of device and service discovery between T nodes with reference to FIG. 3A and FIG. 3B. Based on this, a service data transmission channel may be established, based on a relay function of a G node, between two T nodes connected to the same G node, to transmit data. The following provides detailed descriptions with reference to FIG. 4A, FIG. 4B, FIG. 5A, FIG. 5B, and FIG. 5C.

FIG. 4A and FIG. 4B are a schematic flowchart of a method for establishing a relay service channel according to an embodiment of this application. During implementation of this process, a first T node (denoted as T1 in the figure for convenience), a G node, and a second T node (denoted as T2 in the figure for convenience) are used, and each node has the protocol architecture 200 shown in FIG. 2. The method 400 shown in FIG. 4A and FIG. 4B includes steps S401 to S417, and describes a process of establishing a relay service channel between the first T node and the second T node through the G node. The following describes the steps in detail with reference to FIG. 4A and FIG. 4B.

S401: A basic application layer of the first T node performs port negotiation with a basic application layer of the second T node.

In this step, data included in a negotiation process may be transmitted through a default relay service management channel. Specifically, a transmission path for negotiation data may be as follows: the basic application layer of the first T node <=> a relay module of the first T node <=> a relay module of the G node <=> a relay module of the second T node <=> the basic application layer of the second T node.

In this embodiment of this application, the negotiation data is transmitted in a form of a data packet, and may be referred to as a negotiation data packet in some embodiments. Because the negotiation data packet is also transmitted in the relay service management channel, a format of the negotiation data packet may be similar to that of the service discovery data packet described above, and a difference lies in that information carried in an "information payload" field is different. For details, refer to the foregoing descriptions of the format of the service discovery data packet. For brevity, details are not described herein again.

In some embodiments, in step S401, the basic application layer of the first T node and the basic application layer of the second T node may further perform service negotiation, application quality of service (quality of service, QoS) negotiation, and the like. This embodiment of this application mainly focuses on a result of the port negotiation between the first T node and the second T node. Therefore, other negotiation processes, such as service negotiation and QoS negotiation, are not described in detail herein.

For example, a result of negotiation between the first T node and the second T node may be as follows: The first T node uses a first port (port1), and the second T node uses a second port (port2). Correspondingly, there is a mapping relationship between the first port port1 and the second port port2, and the basic application layer of the first T node and the basic application layer of the second T node need to maintain the mapping relationship between the first port and the second port.

S402: The basic application layer of the first T node applies for a transmission channel from a channel management module of the first T node.

Specifically, the basic application layer of the first T node applies for establishment of a transmission channel for the first port and the second port. Herein, the transmission channel is a service channel, and more specifically, a relay service channel.

In this embodiment of this application, a parameter carried in step S402 may include an address and/or an identifier of a destination device, namely, an address of the second T node and/or an identifier of the second T node herein. The address of the second T node and/or the identifier of the second T node are used by the G node to determine another T node that establishes the relay service channel to the first T node.

In some embodiments, the parameter carried in step S402 may further include channel type information, port information, a quality of service indicator (quality of service identifier, QI), and the like.

The channel type information indicates a type of the transmission channel that is applied for. For example, channel types may include a unicast service channel, a multicast service channel, and a broadcast service channel, or may include a relay service channel and a non-relay service channel.

The port information indicates a port mapped to the transmission channel, to be specific, a port obtained through negotiation in step S401. In this embodiment of this application, the port information includes the first port and the second port. The first port is mapped (or bound) to a transmission channel of the first T node, and the second port is mapped to (or bound) to a transmission channel of the second T node.

The QI indicates a requirement of a service for a transmission channel, for example, a transmission rate, a delay, a packet loss rate, a communication period, and a maximum packet size.

S403: The channel management module of the first T node determines whether to create a service channel.

The service channel herein may be understood as a non-default service channel, to be specific, a transmission channel established according to a service requirement. Specifically, the channel management module of the first T node may determine, based on an overall status of the transmission channel, whether to create a service channel.

If no service channel needs to be created, the channel management module of the first T node may directly return TCID information to the basic application layer of the first T node, to be specific, map the first port to an existing transmission channel, and return a TCID corresponding to the first port. In addition, the channel management module of the first T node notifies the second T node of a mapping relationship between the first port and a transmission channel TCID on the first T node side by using a channel reconfiguration message. Certainly, information about the second port and information about a port that has established a mapping relationship with the transmission channel TCID on the first T node side may also be sent to the second T node by using the channel reconfiguration message. Herein, the channel reconfiguration message is transmitted through a control channel.

If a service channel needs to be created, subsequent steps are further performed.

S404: After determining that the address of the destination device sent by the basic application layer is not an address of the G node and/or determining that the identifier of the destination device sent by the basic application layer is not an identifier of the G node, the channel management module of the first T node sends a relay service channel establishment request to a channel management module of the G node.

The relay service channel establishment request is used to request to establish a relay service channel between the first T node and the second T node.

In some embodiments, a parameter carried in the relay service channel establishment request may include port information, and an identifier and/or an address of a destination node. Herein, the port information includes port parameters of the first port and the second port. The identifier and/or the address of the destination node is used by the G node to determine another T node that establishes the relay service channel to the first T node.

In this embodiment of this application, information included in the relay service channel establishment request is transmitted in a form of a data packet. Because the data packet is used to establish the relay service channel, for ease of description, the data packet is referred to as a service establishment data packet in the following embodiments. A format of the service establishment data packet is described in more detail in the following embodiments. Details are not described herein.

In this step, the parameter carried in the relay service channel establishment request may be transmitted through a control channel between the first T node and the G node.

S405a: The channel management module of the G node negotiates with the channel management module of the first T node on a channel parameter.

Specifically, in this step, the channel management module of the G node may send a channel parameter negotiation request to the channel management module of the first T node. Correspondingly, the channel management module of the first T node may send a channel parameter negotiation response to the channel management module of the G node. Negotiation on the channel parameter can be implemented through this interaction process.

S405b: The channel management module of the G node negotiates with a channel management module of the second T node on a channel parameter.

Specifically, in this step, the channel management module of the G node may send a channel parameter negotiation request to the channel management module of the second T node. Correspondingly, the channel management module of the second T node may send a channel parameter negotiation response to the channel management module of the G node. Negotiation on the channel parameter can be implemented through this interaction process.

In some embodiments, the channel parameter obtained through negotiation between the G node and the first T node and the channel parameter obtained through negotiation between the G node and the second T node may include s sliding window size of a transmission window, a refresh timer, a maximum quantity of times of transmission, a retransmission timer, and the like. During negotiation, information that needs to be exchanged between the G node and the first T node may be transmitted through the control channel between the G node and the first T node. Information that needs to be exchanged between the G node and the second T node may be transmitted through a control channel between the G node and the second T node.

An execution sequence of steps S405a and S405b is not limited in this embodiment of this application. The two steps may be performed sequentially or simultaneously. Steps S405a and S405b herein are optional steps. In some other embodiments, the method 400 may alternatively not include steps S405a and S405b. To be specific, the G node may alternatively not negotiate with the first T node or the second T node on a channel parameter, and the channel management module of the G node autonomously sets a channel parameter, or a channel parameter is set according to a preset rule. Details are not described herein.

S406: The channel management module of the G node generates transmission channel identifiers: a TCID-g1 and a TCID-g2.

Herein, the TCID-g 1 is an identifier, generated by the G node, of a transmission channel corresponding to the first T node, and is used to identify a transmission channel, on the G node, that is used for service transmission with the first T node. The TCID-g2 is an identifier, generated by the G node, of a transmission channel corresponding to the second T node, and is used to identify a transmission channel, on the G node, that is used for service transmission with the second T node.

It can be understood that a sequence of generating the TCID-g1 and the TCID-g2 by the channel management module of the G node is not limited in this embodiment of this application.

S407a: The channel management module of the G node applies for a logical channel for the TCID-g1 from an access layer of the G node. For ease of description, this is referred to as a first LC application request.

In this step, the first LC application request is used to request to map the transmission channel TCID-g1 to a logical channel. The logical channel herein is a logical channel between the G node and the first T node.

S407b: The channel management module of the G node applies for a logical channel for the TCID-g2 from an access layer of the G node. For ease of description, this is referred to as a second LC application request.

In this step, the second LC application request is used to request to map a transmission channel TCID-g2 to a logical channel. The logical channel herein is a logical channel between the G node and the second T node.

An execution sequence of steps S407a and S407b is not specifically limited in this embodiment of this application. The two steps may be performed sequentially or simultaneously. Herein, an example in which the G node separately applies for logical channels for the TCID-g1 and the TCID-g2 is used for description. In some other embodiments, the channel management module of the G node may alternatively apply for logical channels for the TCID-g1 and the TCID-g2 simultaneously by using one request message.

S408: The access layer of the G node maps the transmission channel to the logical channel.

Specifically, the access layer of the G node maps the TCID-g1 to an LCID-t1, and maps the TCID-g2 to an LCID-t2. Herein, the LCID-t1 is a logical channel corresponding to the first T node, and is used to transmit data exchanged between the G node and the first T node. The LCID-t2 is a logical channel corresponding to the second T node, and is used to transmit data exchanged between the G node and the second T node.

It should be noted that processes of mapping, by the G node, the TCID-g1 and the TCID-g2 to the logical channels may be implemented in one step or in two steps. This is not limited in this embodiment of this application.

S409a: Establishment of a logical channel between the access layer of the G node and an access layer of the first T node is completed.

S409b: Establishment of a logical channel between the access layer of the G node and an access layer of the second T node is completed.

To be specific, in the two steps, the G node establishes an underlying logical link to each of the access layer of the first T node and the access layer of the second T node, in other words, applies for a logical channel for a transmission channel between the G node and the first T node and a logical channel for a transmission channel between the G node and the second T node.

An execution sequence of steps S409a and S409b is not specifically limited in this embodiment of this application. The two steps may be performed sequentially or simultaneously.

S410a: The access layer of the G node notifies the channel management module of the G node that the TCID-g1 is successfully created.

Herein, that the TCID-g1 is successfully created may be understood as that the application for the logical channel between the G node and the first T node succeeds, the underlying logical link has been established, and the upper-layer transmission channel TCID-g1 is available. Therefore, this step is equivalent to the following: The access layer of the G node notifies the channel management module of the G node that the application for the logical channel for the TCID-g1 succeeds, in other words, a mapping relationship is established between the transmission channel TCID-g1 and the logical channel LCID-t1.

In this step, a carried parameter may include the TCID-g1 and the LCID-t1.

S410b: The access layer of the G node notifies the channel management module of the G node that the TCID-g2 is successfully created.

Herein, that the TCID-g2 is successfully created may be understood as that the application for the logical channel between the G node and the second T node succeeds, the underlying logical link has been established, and the upper-layer transmission channel TCID-g2 is available. Therefore, this step is equivalent to the following: The access layer of the G node notifies the channel management module of the G node that the application for the logical channel for the TCID-g2 succeeds, in other words, a mapping relationship is established between the transmission channel TCID-g2 and the logical channel LCID-t2.

In this step, a carried parameter may include the TCID-g2 and the LCID-t2.

An execution sequence of steps S410a and S410b is not specifically limited in this embodiment of this application. The two steps may be performed sequentially or simultaneously.

S411a: The channel management module of the G node sends a transmission channel creation request to the channel management module of the first T node.

The transmission channel creation request is used to request the first T node to establish a transmission channel corresponding to the first T node.

In this step, a parameter carried in the transmission channel creation request may include the TCID-g1 and the LCID-t1.

In some embodiments, the parameter carried in the transmission channel creation request further includes the first port.

S411b: The channel management module of the G node sends a transmission channel creation request to the channel management module of the second T node.

The transmission channel creation request is used to request the second T node to establish a transmission channel corresponding to the second T node.

In this step, a parameter carried in the transmission channel creation request may include the TCID-g2 and the LCID-t2.

In some embodiments, the parameter carried in the transmission channel creation request further includes the second port.

An execution sequence of steps S411a and S411b is not specifically limited in this embodiment of this application. The two steps may be performed sequentially or simultaneously.

S412a: The channel management module of the first T node generates a transmission channel TCID-t1 corresponding to the first T node.

Herein, the TCID-t1 is a transmission channel identifier generated on the first T node side, and is used to identify the transmission channel on the first T node side. In this embodiment of this application, the transmission channel identifier generated by the first T node is different from a transmission channel identifier, on the G node, that corresponds to the first T node.

In this step, the channel management module of the first T node may establish a mapping relationship between the TCID-g1 and the LCID-t1 and a mapping relationship between the TCID-t1 and the LCID-t1.

S412b: The channel management module of the second T node generates a transmission channel TCID-t2 corresponding to the second T node.

Herein, the TCID-t2 is a transmission channel identifier generated on the second T node side, and is used to identify the transmission channel on the second T node side.

In this step, the channel management module of the second T node may establish a mapping relationship between the TCID-g2 and the LCID-t2 and a mapping relationship between the TCID-t2 and the LCID-t2.

S413a: The channel management module of the first T node and the basic application layer of the first T node complete binding between the TCID-t1 and the first port.

In other words, in this step, a mapping relationship between the TCID-t1 and the first port is established.

S413b: The channel management module of the second T node and the basic application layer of the second T node complete binding between the TCID-t2 and the second port.

In other words, in this step, a mapping relationship between the TCID7-t2 and the second port is established.

An execution sequence of steps S413a and S413b is not specifically limited in this embodiment of this application. The two steps may be performed sequentially or simultaneously.

S414a: The channel management module of the first T node sends a transmission channel creation response to the channel management module of the G node.

The transmission channel creation response indicates that the first T node has established a mapping relationship between the transmission channel and the logical channel and a mapping relationship between the first port and the transmission channel.

In some embodiments, the transmission channel creation response may include the following parameters: the TCID-t1, the TCID-g1, and the LCID-t1.

S414b: The channel management module of the second T node sends a transmission channel creation response to the channel management module of the G node.

The transmission channel creation response indicates that the second T node has established a mapping relationship between the transmission channel and the logical channel and a mapping relationship between the second port and the transmission channel.

In some embodiments, the transmission channel creation response may include the following parameters: the TCID-t2, the TCID-g2, and the LCID-t2.

An execution sequence of steps S414a and S414b is not specifically limited in this embodiment of this application. The two steps may be performed sequentially or simultaneously.

In this case, after steps S405a to S414b, the G node has established a transmission channel (specifically, a service channel, and more specifically, a non-default service channel) to each of the first T node and the second T node, where the transmission channel between the G node and the first T node corresponds to the first port, and the transmission channel between the G node and the second T node corresponds to the second port. When the first T node sends service data to the second T node, the G node performs relaying, and the established service channel is used to transmit relay service data. Therefore, these service channels are the foregoing relay service channel.

In the foregoing descriptions, similar steps in interaction processes between the G node and the first T node and between the G node and the second T node are described together. However, it can be understood that the process of establishing the transmission channel between the G node and the first T node and the process of establishing the transmission channel between the G node and the second T node are independent of each other. To be specific, during establishment of the transmission channel between the G node and the first T node, steps S405a, S406, S407a, S408, S409a, S410a, S411a, S412a, S413a, and S414a may be sequentially performed after step S404. During establishment of the transmission channel between the G node and the second T node, steps S405b, S406, S407b, S408, S409b, S410b, S411b, S412b, S413b, and S414b may be sequentially performed after step S404. An execution sequence of the steps in the two processes is not specifically limited in this embodiment of this application.

Still refer to FIG. 4A and FIG. 4B.

S415: The channel management module of the G node sends a relay service channel establishment response to the channel management module of the first T node.

The relay service channel establishment response indicates that the relay service channel has been established between the first T node and the second T node. It should be noted that the relay service channel herein is a transmission channel for transmitting service data between the first T node and the second T node, and a transmission path for the service data is as follows: the first port, the TCID-t1, the LCID-t1, the TCID-g1, the TCID-g2, the LCID-t2, the TCID-t2, and the second port.

In some embodiments, a parameter carried in the relay service channel establishment response may include the TCID-t1 and the TCID-g1.

S416: The channel management module of the G node sends routing configuration tables of the first T node and the second T node to the relay module of the G node.

Specifically, the routing configuration table (namely, a channel mapping relationship table) may include the mapping relationship between the TCID-tl and the TCID-t2, the mapping relationship between the TCID-g1 and the TCID-g2, the mapping relationship between the TCID-t1 and the TCID-g1, and the mapping relationship between the TCΠ7-t2 and the TCID-g2.

Correspondingly, the relay module of the G node may store a transmission channel routing table (namely, a channel mapping relationship table), based on services of the first port and the second port, of the first T node and the second T node.

S417: The channel management module of the first T node notifies the basic application layer of the first T node that the application for the transmission channel succeeds.

In a subsequent process, if a service channel between the first T node and the second T node needs to be further established, steps S402 to S417 may be repeatedly performed.

The service establishment data packet is mentioned in step S404. The following describes an example format of the service establishment data packet.

The service establishment data packet is a data packet packaged at the basic service layer of the first T node, and is transmitted in a control channel. For example, a format of the service establishment data packet (to be specific, a format of a packet transmitted in the control channel) may be shown in Table 8.

**Table 8**

| | | |
|---|---|---|
| Transmission channel identifier (TCID) | Length (Length) | Information payload (information payload) |

The format of the service establishment data packet includes a transmission channel identifier field, a length field, and an information payload field.

The transmission channel identifier field is used to carry an identifier of the control channel. For example, in SLB, the identifier of the control channel may be 0x0009.

The length (Length) field is used to indicate a total length of a data packet following the length field.

The information payload (information payload) field is used to carry signaling frame content.

Specifically, the signaling frame content in the information payload may have a uniform format, as shown in Table 9.

**Table 9**

| | | | |
|---|---|---|---|
| Code (Code) | Identifier (Identifier) | Length (Length) | Data (data) |

A format of the signaling frame content may include a code field, an identifier field, a length field, and a data field.

The code field is used to carry an identifier of signaling. In some embodiments, the code field may occupy a length of one byte. In this embodiment of this application, a correspondence between a code value and a signaling type may be shown in Table 10.

**Table 10**

| Code value (Code Value) | Primitive | Signaling type |
|---|---|---|
| 0x01 | Tcid_Connect_Req | Transmission channel establishment request |
| 0x02 | Tcid_Connect_Rsp | A transmission channel establishment response is received. |
| 0x03 | Tcid_Disconnect_Req | Transmission channel teardown request |
| 0x04 | Tcid_Disconnect_Rsp | Transmission channel teardown response |
| 0x05 | Tcid_Qos_Req | Transmission channel QoS capability negotiation request |
| 0x06 | Tcid_Qos_Rsp | Transmission channel QoS capability negotiation result response |
| 0x07 | Tcid_Config_Req | Transmission channel parameter reconfiguration and update request |
| 0x08 | Tcid_Config_Rsp | Transmission channel parameter reconfiguration and update response |

The identifier field is used to carry a flag bit. For example, if signaling is sent as a request (request), a response (response) should be returned with a same identifier. Allocation is cyclically performed in this manner. In some embodiments, the code field may occupy a length of one byte.

The length field is used to indicate a data length of a data part. In some embodiments, the length field may occupy a length of two bytes.

The data field is used to carry data. In some embodiments, a byte occupied by the data field may be designed according to an actual requirement. Usually, different code values correspond to different quantities of data bytes. In this embodiment of this application, in the service establishment data packet, signaling frame data (namely, the signaling frame content) in the information payload may use a basic frame format, and a signaling frame payload (payload) does not exceed a size of a maximum transmission unit (maximum transmission unit, MTU). Herein, the MTU is a size of a packet transmitted between a basic application layer and a basic service layer.

In this embodiment of this application, the data field in Table 9 may include transmission mode (Tcid_mode) indication information, where a transmission mode may include a basic mode, a normal mode, and a relay mode (relay-mode). The transmission mode indication information indicates one of the foregoing several modes. In the relay mode, a relay service channel may be provided for communication between T nodes.

For example, when the transmission mode is the relay mode, the data field in Table 9 may specifically include an MTU, a maximum protocol data unit payload size (maximum protocol data unit payload size, MPS), and a peer device address (peer address). Herein, the MPS is a size of a packet transmitted between a basic service layer and an access layer. In this embodiment of this application, a size of the MTU may be consistent with that of the MPS, to simplify a processing process. The peer device address belongs to an octet string (octet string) type. This facilitates unified maintenance by a host.

According to the method 400 provided in this embodiment of this application, the relay service channel can be established, so that service transmission can be performed between the first T node and the second T node. For ease of description, in the following embodiments, a data packet transmitted in the relay service channel is referred to as a service transmission data packet for short. The following describes an example format of the service transmission data packet (to be specific, a format of a packet transmitted in the relay service channel).

For example, the format of the service transmission data packet is shown in Table 11.

**Table 11**

| | | |
|---|---|---|
| Transmission channel identifier (TCID) | Length (Length) | Basic application layer data (SDU) |

The format of the service transmission data packet may include a transmission channel identifier field, a length field, and a basic application layer data field.

The transmission channel identifier field is used to carry a transmission channel (specifically, a relay service channel) identifier of a peer end, where the peer end herein is a device that directly receives a data packet.

The length field is used to indicate a total length of a data packet following the length field.

The basic application layer data field is used to carry basic application layer data, and may specifically carry a service data unit (service data unit, SDU). In some embodiments, the SDU may also be referred to as a service data unit.

In some embodiments, the transmission channel identifier field in the service transmission data packet may alternatively carry a transmission channel (specifically, a relay service channel) identifier of a local end. Herein, the local end is a device that sends a data packet.

For ease of understanding, examples are used below for description. It is assumed that a relay service channel is established between the first T node and the second T node and a service transmission channel mapping table of the G node is shown in Table 12.

**Table 12**

| | First T node | Relay space of the G node | | Second T node |
|---|---|---|---|---|
| | | Corresponding to the first T node | Corresponding to the second T node | |
| Transmission channel identifier | TCIDx | TCIDy | TCIDi | TCIDj |

To be specific, there is a mapping relationship between the transmission channel TCIDy (or the TCID-g1) of the G node and the transmission channel TCIDx (or the TCID-tl) of the first T node, there is a mapping relationship between the transmission channel TCIDi (or the TCID-g2) of the G node and the transmission channel TCIDj (or the TCID-t2) of the second T node, and there is a mapping relationship between the transmission channel TCIDy (or the TCID-g1) of the G node and the TCIDi (or the TCID-g2).

When the first T node sends service data to the second T node through the G node, a format change of a data packet transmitted between the first T node, the G node, and the second T node is shown as follows:
(1) A format of a service transmission data packet sent by the first T node and information carried in the service transmission data packet may be as follows:

| Transmission channel identifier | Length | Basic application layer SDU |
|---|---|---|
| TCIDy | Length | SDU of the first T node |

In this example, in the data packet sent by the first T node, the transmission channel identifier field carries a transmission channel identifier of a peer end (namely, the G node) (to be specific, the transmission channel identifier TCIDy, on the G node, that corresponds to the first T node).
(2) After receiving the data packet in (1), the G node removes the transmission channel identifier (namely, a TCID header) and performs replacement. A format of a service transmission data packet sent by the G node and information carried in the service transmission data packet may be as follows:

| Transmission channel identifier | Length | Basic application layer SDU |
|---|---|---|
| TCIDj | Length | SDU of the first T node |

In this example, the G node parses the received data packet, removes the transmission channel identifier, determines that the transmission channel is a relay service channel, and then determines that the received data packet needs to be forwarded to another T node. Specifically, the G node determines, based on the transmission channel identifier TCIDy in the data packet and the service transmission channel mapping table shown in Table 12, that a data packet from the first T node needs to be sent to the second T node. Therefore, the data packet sent by the G node carries a transmission channel identifier of a peer end (namely, the second T node) (to be specific, the transmission channel identifier TCIDj on the second T node side).
(3) After receiving the data packet in (2), the second T node removes the transmission channel identifier (namely, a TCID header) to obtain the following data packet format and carried information:

| Transmission channel identifier | Length | Basic application layer SDU |
|---|---|---|
| TCIDj | Length | SDU of the first T node |

FIG. 5A, FIG. 5B, and FIG. 5C are a schematic flowchart of a method for establishing a relay service channel according to another embodiment of this application. During implementation of this process, a first T node (denoted as T1 in the figure for convenience), a G node, and a second T node (denoted as T2 in the figure for convenience) are used, and each node has the protocol architecture 200 shown in FIG. 2. The method 500 shown in FIG. 5A, FIG. 5B, and FIG. 5C includes steps S501 to S523, and describes a process of establishing a relay service channel between the first T node and the second T node through the G node. The following describes the steps in detail with reference to FIG. 5A, FIG. 5B, and FIG. 5C.

S501: A basic application layer of the first T node performs port negotiation with a basic application layer of the second T node.

In this step, data included in a negotiation process may be transmitted through a default relay service management channel. Specifically, a transmission path for negotiation data may be as follows: the basic application layer of the first T node <=> a relay module of the first T node <=> a relay module of the G node <=> a relay module of the second T node <=> the basic application layer of the second T node.

Herein, the negotiation data is transmitted in a form of a data packet (namely, a negotiation data packet). A format of the negotiation data packet may be similar to that of the service discovery data packet described above, and a difference lies in that information carried in an "information payload" field is different. For details, refer to the foregoing descriptions of the format of the service discovery data packet. For brevity, details are not described herein again.

In some embodiments, in step S501, the basic application layer of the first T node and the basic application layer of the second T node may further perform service negotiation, application quality of service (quality of service, QoS) negotiation, and the like. Details are not described herein.

For example, a result of negotiation between the first T node and the second T node may be as follows: The first T node uses a first port (port1), and the second T node uses a second port (port2). Correspondingly, there is a mapping relationship between the first port port1 and the second port port2.

S502: The basic application layer of the first T node applies for a transmission channel from a channel management module of the first T node.

Specifically, the basic application layer of the first T node applies for establishment of a transmission channel for the first port and the second port. Herein, the transmission channel is a service channel, and more specifically, a relay service channel.

In some embodiments, a parameter carried in step S502 may include an address and/or an identifier of a destination device, namely, an address of the second T node and/or an identifier of the second T node herein. The address of the second T node and/or the identifier of the second T node are used by the G node to determine another T node that establishes the relay service channel to the first T node.

In some embodiments, the parameter carried in step S502 may further include channel type information, port information, a quality of service indicator (quality of service identifier, QI), and the like. The channel type information, the port information, the QI, and the like are similar to corresponding content in step S402 in the method 400. For details, refer to the foregoing related descriptions. For brevity, details are not described herein again.

S503: The channel management module of the first T node determines whether to create a service channel.

The service channel herein may be understood as a non-default service channel, to be specific, a transmission channel established according to a service requirement. Specifically, the channel management module of the first T node may determine, based on an overall status of the transmission channel, whether to create a service channel.

If no service channel needs to be created, the channel management module of the first T node may directly return TCID information to the basic application layer of the first T node, to be specific, map the first port to an existing transmission channel, and return a TCID corresponding to the first port. In addition, the channel management module of the first T node notifies the second T node of a mapping relationship between the first port and a transmission channel TCID on the first T node side by using a channel reconfiguration message. Certainly, information about the second port and information about a port that has established a mapping relationship with the transmission channel TCID on the first T node side may also be sent to the second T node by using the channel reconfiguration message. Herein, the channel reconfiguration message is transmitted through a control channel.

If a service channel needs to be created, subsequent steps are further performed.

S504: The channel management module of the first T node determines whether a relay control channel and/or a tunnel channel exist.

In this embodiment of this application, the tunnel channel is a channel between a transmission channel and a logical channel. A transmission channel at a basic service layer may sense the tunnel channel in a downward direction, and a logical channel at an access layer may also sense the tunnel channel in an upward direction. Therefore, both control plane data and service plane data can be transmitted in the tunnel channel.

In this embodiment of this application, the relay control channel is a transmission channel at a basic service layer, and is used to transmit signaling between T nodes. A function of the relay control channel is similar to that of a control channel used to transmit signaling between the G node and a T node. The relay control channel is mainly responsible for establishing, releasing, or reconfiguring a non-default service channel between two T nodes, or the like. The relay control channel exists by default after the tunnel channel is established, and is deleted when the tunnel channel is deleted. The relay control channel and the tunnel channel have a common lifecycle. Therefore, in S504, whether one of the relay control channel and the tunnel channel exists may be determined. If one of the relay control channel and the tunnel channel exists, the other one also exists.

The tunnel channel is used to transmit data between two T nodes, and each T node may establish its own tunnel channel. For ease of description, in this embodiment of this application, a channel that includes a tunnel channel and that is established between two T nodes is referred to as a relay tunnel. It should be understood that the relay tunnel is used to indicate only a path between T nodes that is used to transmit data.

If the relay control channel and/or the tunnel channel exist, S518 is directly performed. To be specific, a service channel is directly established through the relay control channel. Step S518 is described in detail below, and details are not described herein.

If the relay control channel and/or the tunnel channel do not exist, a subsequent step is further performed.

S505: The channel management module of the first T node sends a tunnel channel establishment request to a channel management module of the G node.

The tunnel channel establishment request is used to request to establish a relay tunnel between the first T node and the second T node. In other words, the tunnel channel establishment request is used to request the G node to establish a tunnel channel.

In some embodiments, a parameter carried in the tunnel channel establishment request may include a relay-related parameter, for example, quality of service QoS of the relay tunnel.

In this step, the parameter carried in the tunnel channel establishment request may be transmitted through a control channel between the first T node and the G node.

In this embodiment of this application, information included in the tunnel channel establishment request is transmitted in a form of a data packet. Because the data packet is used to establish the tunnel channel, for ease of description, the data packet is referred to as a tunnel establishment data packet in the following embodiments. A format of the tunnel establishment data packet is described in more detail in the following embodiments. Details are not described herein.

S506a: The channel management module of the G node negotiates with the channel management module of the first T node on a channel parameter.

Specifically, in this step, the channel management module of the G node may send a channel parameter negotiation request to the channel management module of the first T node. Correspondingly, the channel management module of the first T node may send a channel parameter negotiation response to the channel management module of the G node. Negotiation on the tunnel channel parameter can be implemented through this interaction process.

S506b: The channel management module of the G node negotiates with a channel management module of the second T node on a channel parameter.

Specifically, in this step, the channel management module of the G node may send a channel parameter negotiation request to the channel management module of the second T node. Correspondingly, the channel management module of the second T node may send a channel parameter negotiation response to the channel management module of the G node. Negotiation on the tunnel channel parameter can be implemented through this interaction process.

In some embodiments, the channel parameter obtained through negotiation between the G node and the first T node and the channel parameter obtained through negotiation between the G node and the second T node may include an MTU, an MPS, QoS, and the like.

During negotiation, information that needs to be exchanged between the G node and the first T node may be transmitted through the control channel between the G node and the first T node. Information that needs to be exchanged between the G node and the second T node may be transmitted through a control channel between the G node and the second T node.

An execution sequence of steps S506a and S506b is not limited in this embodiment of this application. The two steps may be performed sequentially or simultaneously. Steps S405a and S405b are optional steps. In some other embodiments, the method 400 may alternatively not include steps S506a and S506b. To be specific, the G node may alternatively not negotiate with the first T node or the second T node on a tunnel channel parameter, and the channel management module of the G node autonomously sets a tunnel channel parameter, or a tunnel channel parameter is set according to a preset rule. Details are not described herein.

S507: The channel management module of the G node generates tunnel channel identifiers: a Tun-ID1 and a Tun-ID2.

Herein, the Tun-ID1 is an identifier, generated by the G node, of a tunnel channel corresponding to the first T node, and is used to identify a tunnel channel, on the G node, that is used for transmission with the first T node. The Tun-ID2 is an identifier, generated by the G node, of a tunnel channel corresponding to the second T node, and is used to identify a tunnel channel, on the G node, that is used for transmission with the second T node.

It can be understood that a sequence of generating the Tun-ID1 and the Tun-ID2 by the channel management module of the G node is not limited in this embodiment of this application.

S508a: The channel management module of the G node applies for a logical channel for the Tun-ID1 from an access layer of the G node. For ease of description, this is referred to as a first LC application request.

In this step, the first LC application request is used to map the tunnel channel Tun-ID1 to a logical channel. The logical channel herein is a logical channel between the G node and the first T node.

S508b: The channel management module of the G node applies for a logical channel for the Tun-ID2 from an access layer of the G node. For ease of description, this is referred to as a second LC application request.

In this step, the second LC application request is used to map the tunnel channel Tun-ID2 to a logical channel. The logical channel herein is a logical channel between the G node and the second T node.

An execution sequence of steps S508a and S508b is not specifically limited in this embodiment of this application. The two steps may be performed sequentially or simultaneously. Herein, an example in which the G node separately applies for logical channels for the Tun-ID1 and the Tun-ID2 is used for description. In some other embodiments, the channel management module of the G node may alternatively apply for logical channels for the Tun-ID1 and the Tun-ID2 simultaneously by using one request message.

S509: The access layer of the G node maps the tunnel channel to the logical channel.

Specifically, the access layer of the G node maps the Tun-ID1 to an LCID-t1, and maps the Tun-ID2 to an LCID-t2. Herein, the LCID-t1 is a logical channel corresponding to the first T node, and is used to transmit data exchanged between the G node and the first T node. The LCID-t2 is a logical channel corresponding to the second T node, and is used to transmit data exchanged between the G node and the second T node.

It should be noted that processes of mapping, by the G node, the Tun-ID1 and the Tun-ID2 to the logical channels may be implemented in one step or in two steps. This is not limited in this embodiment of this application.

S510a: Establishment of a logical channel between the access layer of the G node and an access layer of the first T node is completed.

S510b: Establishment of a logical channel between the access layer of the G node and an access layer of the second T node is completed.

To be specific, in the two steps, the G node establishes an underlying logical link to each of the access layer of the first T node and the access layer of the second T node, in other words, applies for a logical channel for a tunnel channel between the G node and the first T node and a logical channel for a tunnel channel between the G node and the second T node.

An execution sequence of steps S510a and S510b is not specifically limited in this embodiment of this application. The two steps may be performed sequentially or simultaneously.

S511 a: The access layer of the G node notifies the channel management module of the G node that the Tun-ID1 is successfully created.

Herein, that the Tun-ID1 is successfully created may be understood as that the application for the logical channel between the G node and the first T node succeeds, the underlying logical link has been established, and the upper-layer tunnel channel Tun-ID1 is available. Therefore, this step is equivalent to the following: The access layer of the G node notifies the channel management module of the G node that the application for the logical channel for the Tun-ID1 succeeds, in other words, a mapping relationship is established between the tunnel channel Tun-ID1 and the logical channel LCID-t1.

In this step, a carried parameter may include the Tun-ID1 and the LCID-t1.

S511b: The access layer of the G node notifies the channel management module of the G node that the Tun-ID2 is successfully created.

Herein, that the Tun-ID2 is successfully created may be understood as that the application for the logical channel between the G node and the second T node succeeds, the underlying logical link has been established, and the upper-layer tunnel channel Tun-ID2 is available. Therefore, this step is equivalent to the following: The access layer of the G node notifies the channel management module of the G node that the application for the logical channel for the Tun-ID2 succeeds, in other words, a mapping relationship is established between the tunnel channel Tun-ID2 and the logical channel LCID-t2.

In this step, a carried parameter may include the Tun-ID2 and the LCID-t2.

An execution sequence of steps S511a and S511b is not specifically limited in this embodiment of this application. The two steps may be performed sequentially or simultaneously.

S512a: The channel management module of the G node sends a tunnel channel creation request to the channel management module of the first T node.

The tunnel channel creation request is used to request the first T node to establish a tunnel channel corresponding to the first T node.

In this step, a parameter carried in the tunnel channel creation request may include the Tun-ID1 and the LCID-t1.

S512b: The channel management module of the G node sends a tunnel channel creation request to the channel management module of the second T node.

The tunnel channel creation request is used to request the second T node to establish a tunnel channel corresponding to the second T node.

In this step, a parameter carried in the tunnel channel creation request may include the Tun-ID2 and the LCID-t2.

An execution sequence of steps S512a and S512b is not specifically limited in this embodiment of this application. The two steps may be performed sequentially or simultaneously.

S513a: The channel management module of the first T node generates a tunnel channel Tun-ID1 corresponding to the first T node.

In this embodiment of this application, the tunnel channel identifier generated by the first T node is the same as a tunnel channel identifier, on the G node, that corresponds to the first T node, where both are the Tun-ID1.

Correspondingly, the channel management module of the first T node may establish a mapping relationship between the Tun-ID1 and the LCID-t1.

S513b: The channel management module of the second T node generates a tunnel channel Tun-ID2 corresponding to the second T node.

In this embodiment of this application, the tunnel channel identifier generated by the second T node is the same as a tunnel channel identifier, on the G node, that corresponds to the second T node, where both are the Tun-ID2.

Correspondingly, the channel management module of the second T node may establish a mapping relationship between the Tun-ID2 and the LCID-t2.

S514a: The channel management module of the first T node sends a tunnel channel creation response to the channel management module of the G node.

The tunnel channel creation response indicates that the first T node has established a mapping relationship between the tunnel channel and the logical channel.

Optionally, the tunnel channel creation response may include the following parameter: the Tun-ID1. Optionally, the tunnel channel creation response may further include the LCID-t1.

S514b: The channel management module of the second T node sends a tunnel channel creation response to the channel management module of the G node.

The tunnel channel creation response indicates that the second T node has established a mapping relationship between the tunnel channel and the logical channel.

Optionally, the tunnel channel creation response may include the following parameter: the Tun-ID2. Optionally, the tunnel channel creation response may further include the LCID-t2.

An execution sequence of steps S514a and S514b is not specifically limited in this embodiment of this application. The two steps may be performed sequentially or simultaneously.

S515a: The channel management module of the G node notifies the channel management module of the first T node that the tunnel channel between the first T node and T2 is successfully established.

In this step, a carried parameter may include the tunnel identifier Tun-ID2 of the second T node.

S515b: The channel management module of the G node notifies the channel management module of the second T node that the tunnel channel between the second T node and T1 is successfully established.

In this step, a carried parameter may include the tunnel identifier Tun-ID1 of the first T node.

An execution sequence of steps S515a and S515b is not specifically limited in this embodiment of this application. The two steps may be performed sequentially or simultaneously.

S516a: The channel management module of the first T node establishes a relay control channel by default.

In this step, the first T node establishes a mapping relationship between the relay control channel of the first T node and the tunnel channel Tun-ID1.

S516b: The channel management module of the second T node establishes a relay control channel by default.

In this step, the second T node establishes a mapping relationship between the relay control channel of the second T node and the tunnel channel Tun-ID2.

In these two steps, because establishment of the tunnel channel is completed, the relay control channel is automatically established. The first T node and the second T node each establish a mapping relationship between its own relay control channel and tunnel channel.

An execution sequence of steps S516a and S516b is not specifically limited in this embodiment of this application. The two steps may be performed sequentially or simultaneously.

S517: The channel management module of the G node stores tunnel tables of the first T node and the second node.

Specifically, the tunnel table may include a mapping relationship between the Tun-ID 1 and the Tun-ID2.

In this case, establishment of the tunnel channel of each of the first T node and the second T node is completed, and the relay tunnel between the first T node and the second T node is available correspondingly.

In the foregoing descriptions, similar steps in interaction processes between the G node and the first T node and between the G node and the second T node are described together. However, it can be understood that the process of establishing the tunnel channel between the G node and the first T node and the process of establishing the tunnel channel between the G node and the second T node are independent of each other. To be specific, during establishment of the tunnel channel between the G node and the first T node, steps S506a, S507, S508a, S509, S510a, S511a, S512a, S513a, S514a, S515a, and S516a are sequentially performed after step S505. During establishment of the tunnel channel between the G node and the second T node, steps S506b, S507, S508b, S509, S510b, S511b, S512b, S513b, S514b, S515b, and S516b are sequentially performed after step S505. An execution sequence of the steps in the two processes is not specifically limited in this embodiment of this application.

Still refer to FIG. 5A, FIG. 5B, and FIG. 5C.

S518: The channel management module of the first T node creates a transmission channel TCID1 corresponding to the first T node.

In this step, the channel management module of the first T mode generates the transmission channel identifier TCID 1.

Then the channel management module of the first T node sends a first request to the G node, and the G node forwards the first request to the second T node. The first request is used to request the second T node to establish a transmission channel (specifically, a service channel) corresponding to the second T node. The first request is similar to the transmission channel creation request in FIG. 4A and FIG. 4B, but the first request needs to be finally sent to the second T node. A specific process is described in S519a to S519c.

S519a: The channel management module of the first T node sends a first request to the tunnel channel of the first T node through the relay control channel, and sends the first request to the access layer of the first T node through the tunnel channel of the first T node.

The first request is used to request to establish a service channel between the first T node and the second T node T2.

S519b: The access layer of the first T node forwards the first request to the access layer of the second T node through the tunnel channel Tun-ID1, on the G node, that corresponds to the first T node and the tunnel channel Tun-ID2, on the G node, that corresponds to the second T node.

S519c: The access layer of the second T node transmits the first request to the relay control channel of the second T node through the tunnel channel of the second T node, and then forwards the first request to the channel management module of the second T node through the relay control channel of the second T node.

In some embodiments, parameters that may be carried in the first request include port information, the TCID1, and the Tun-ID1, where the port information includes the first port and the second port.

S520: The channel management module of the second T node creates a transmission channel TCID2 corresponding to the second T node.

In this step, the channel management module of the second T mode generates the transmission channel identifier TCID2.

S521: The channel management module of the second T node and the basic application layer of the second T node complete a binding relationship between the TCID2 and the second port.

Then the channel management module of the second T node sends a first response to the G node, and the G node forwards the first response to the first T node. The first response indicates that the second T node has established the transmission channel. The first response is similar to the transmission channel creation response in FIG. 4A and FIG. 4B, but the first response needs to be finally sent to the first T node. A specific process is described in S522a to S522c.

S522a: The channel management module of the second T node sends a first response to the tunnel channel of the second T node through the relay control channel, and sends the first response to the access layer of the second T node through the tunnel channel of the second T node.

The first response indicates that the second T node has established the transmission channel. This may also be understood as an indication to establish a service channel to the first T node T1.

S522b: The access layer of the second T node forwards the first response to the access layer of the first T node through the tunnel channel Tun-ID1, on the G node, that corresponds to the first T node and the tunnel channel Tun-ID2, on the G node, that corresponds to the second T node.

S522c: The access layer of the first T node transmits the first response to the relay control channel of the first T node through the tunnel channel of the first T node, and then forwards the first response to the channel management module of the first T node through the relay control channel of the first T node.

Actually, the first response indicates that establishment of a service channel based on the TCID1 and the TCID2 is completed.

In some embodiments, parameters that may be carried in the first response include port information, the TCID1, the TCID2, and the Tun-ID2, where the port information includes the first port and the second port.

In short, a transmission path for the first request is as follows: the basic service layer (specifically, the channel management module) of the first T node - the relay control channel of the first T node - the tunnel channel of the first T node - the access layer of the first T node - the tunnel channel, on the G node, that corresponds to the first T node - the tunnel channel, on the G node, that corresponds to the second T node - the access layer of the second T node - the tunnel channel of the second T node - the relay control channel of the second T node - the basic service layer (specifically, the channel management module) of the second T node. A transmission path for the first response is in a reverse order.

In this embodiment of this application, after the relay tunnel between the first T node and the second T node is established, the first T node and the second T node may discover each other and be visible to each other. Data transmitted between the first T node and the second T node also passes through the G node, and is directly forwarded by the G node.

S523: The channel management module of the first T node notifies the basic application layer of the first T node that the application for the transmission channel succeeds.

In a subsequent process, if a service channel between the first T node and the second T node needs to be further established, signaling and data may be directly transmitted in the established relay tunnel. To be specific, S502 to S504, and S518 to S523 may be repeatedly performed.

The tunnel establishment data packet is mentioned in step S505. The following describes an example format of the tunnel establishment data packet.

The tunnel establishment data packet is a data packet packaged at the basic service layer of the first T node, and is transmitted in a control channel. For example, a format of the tunnel establishment data packet (to be specific, a format of a packet transmitted in the control channel) may be shown in Table 13.

**Table 13**

| | | |
|---|---|---|
| Transmission channel identifier (TCID) | Length (Length) | Information payload (information payload) |

The format of the tunnel establishment data packet includes a transmission channel identifier field, a length field, and an information payload field.

The transmission channel identifier field is used to carry an identifier of the control channel. For example, in SLB, the identifier of the control channel may be 0x0009.

The length (Length) field is used to indicate a total length of a data packet following the length field.

The information payload (information payload) field is used to carry signaling frame content.

Specifically, the signaling frame content in the information payload may have a uniform format, as shown in Table 14.

**Table 14**

| | | | |
|---|---|---|---|
| Code (Code) | Identifier (Identifier) | Length (Length) | Data (data) |

A format of the signaling frame content may include a code field, an identifier field, a length field, and a data field.

The code field is used to carry an identifier of signaling. In some embodiments, the code field may occupy a length of one byte. In this embodiment of this application, for a correspondence between a code value and a signaling type, refer to Table 10. For brevity, details are not described again.

The identifier field is used to carry a flag bit. For example, if signaling is sent as a request (request), a response (response) should be returned with a same identifier. Allocation is cyclically performed in this manner. In some embodiments, the code field may occupy a length of one byte.

The length field is used to indicate a data length of a data part. In some embodiments, the length field may occupy a length of two bytes.

The data field is used to carry data. In some embodiments, a byte occupied by the data field may be designed according to an actual requirement. Usually, different code values correspond to different quantities of data bytes.

In this embodiment of this application, in the tunnel establishment data packet, signaling frame data (namely, the signaling frame content) in the information payload may use a basic frame format, and a signaling frame payload (payload) does not exceed a size of an MTU.

In this embodiment of this application, the data field in Table 14 may include transmission mode (Tcid_mode) indication information, where a transmission mode may include a basic mode, a normal mode, and a tunnel mode (tunnel-mode). The transmission mode indication information indicates one of the foregoing several modes. In the tunnel mode, a tunnel channel may be provided for communication between T nodes.

For example, when the transmission mode is the tunnel mode, the data field in Table 14 may specifically include an MTU, an MPS, and a peer device address (peer address). A size of the MTU may be consistent with that of the MPS, to simplify a processing process. The peer device address belongs to an octet string (octet string) type. This facilitates unified maintenance by a host.

According to the method 500 provided in this embodiment of this application, the relay tunnel can be established, so that signaling transmission and service transmission can be performed between the first T node and the second T node. For ease of description, in the following embodiments, a data packet transmitted in the tunnel channel is referred to as a service transmission data packet for short. The following describes an example format of the service transmission data packet (to be specific, a format of a packet transmitted in the tunnel channel).

For example, the format of the service transmission data packet is shown in Table 15.

**Table 15**

| | | | |
|---|---|---|---|
| Tunnel channel identifier (Tun-ID) | Transmission channel identifier (TCID) | Length (Length) | Basic application layer data (SDU) |

The format of the service transmission data packet may include a tunnel channel identifier field, a transmission channel identifier field, a length field, and a basic application layer data field.

The tunnel channel identifier field is used to carry a tunnel channel identifier of a peer T node.

The transmission channel identifier field is used to carry a transmission channel identifier of the peer T node.

The length field is used to indicate a total length of a data packet following the length field.

The basic application layer data field is used to carry basic application layer data, and may specifically carry an SDU.

In some embodiments, the tunnel channel identifier field in the service transmission data packet may alternatively carry a tunnel channel identifier of a local end. In some other embodiments, the transmission channel identifier field may alternatively carry a transmission channel (specifically, a service channel) identifier of the local end.

For ease of understanding, examples are used below for description. It is assumed that a relay tunnel is established between the first T node and the second T node and a tunnel channel mapping relationship of the G node includes a mapping relationship between the tunnel channel Tun-ID 1 of the first T node and the tunnel channel Tun-ID2 of the second T node.

When the first T node sends service data to the second T node, a format change of a data packet transmitted between the first T node and the second T node is shown as follows:
(1) A format of a service transmission data packet sent by the first T node and information carried in the service transmission data packet may be as follows:

| Tunnel channel identifier (Tun-ID) | Transmission channel identifier (TCID) | Length | Basic application layer data SDU |
|---|---|---|---|
| Tun-ID2 | TCID2 | Length | SDU of the first T node |

In this example, the transmission channel identifier field of the first T node carries the transmission channel identifier TCID2 of a peer end (namely, the second T node), and the tunnel channel identifier field carries the tunnel channel identifier Tun-ID2 of the peer end (namely, the second T node).

Herein, the tunnel channel identifier Tun-ID2 is added by the relay module of the first T node. The transmission channel identifier TCID2 is added by a transmission and control module of the first T node.

(2) After receiving the data packet in (1), the G node forwards the data packet to the second T node based on the tunnel channel identifier Tun-ID2. A format of a service transmission data packet sent by the G node and information carried in the service transmission data packet is as follows:

| Tunnel channel identifier (Tun-ID) | Transmission channel identifier (TCID) | Length | Basic application layer data SDU |
|---|---|---|---|
| Tun-ID2 | TCID2 | Length | SDU of the first T node |

In (2), the G node directly forwards the data packet received from the first T node.

(3) After receiving the data packet in (2), the second T node removes the tunnel channel identifier and the transmission channel identifier to obtain the following data packet format and carried information:

| Tunnel channel identifier (Tun-ID) | Transmission channel identifier (TCID) | Transmission channel identifier (TCID) | Basic application layer data SDU |
|---|---|---|---|
| Tun-ID2 | TCID2 | Length | SDU of the first T node |

Herein, the tunnel channel identifier Tun-ID2 is removed by the relay module of the second T node. The transmission channel identifier TCID2 is removed by a transmission and control module of the second T node.

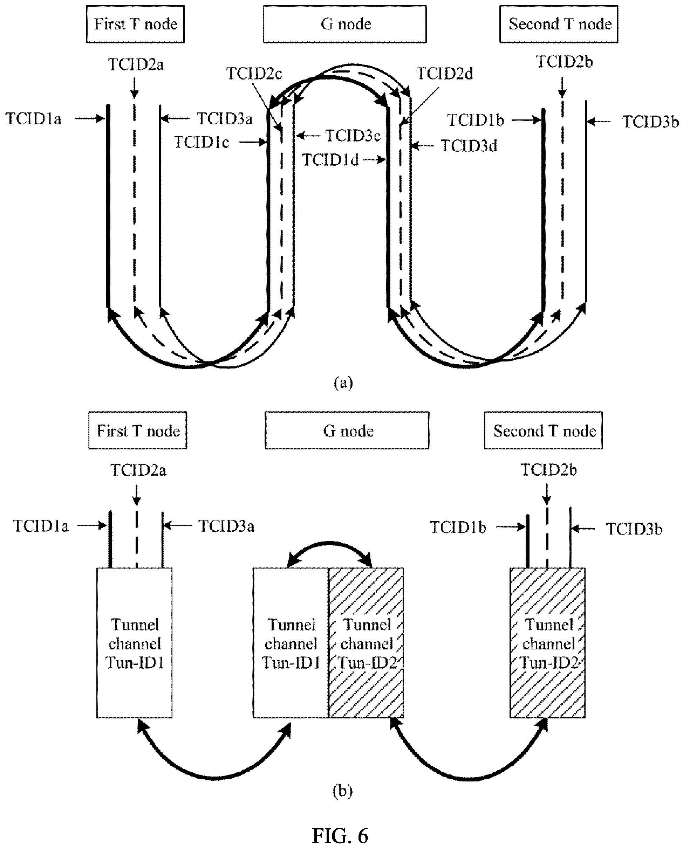

In the method 400 shown in FIG. 4A and FIG. 4B, a relay service channel based on a routing table is established (this mode may be referred to as a relay mode). In the method 500 shown in FIG. 5A, FIG. 5B, and FIG. 5C, a service channel based on a tunnel channel is established (this mode may be referred to as a tunnel mode). To further understand the method 400 and the method 500, the following describes the two manners in a differentiated manner with reference to FIG. 6.

(a) in FIG. 6 shows a relay mode based on a routing table. A first T node and a second T node are connected to one G node. If a relay service channel is established between the first T node and the second T node, a quantity of service channels established between the first T node, the G node, and the second T node depends on a quantity of service channels required, and data routing between the first T node and the second T node is maintained by the G node.

For example, as shown in (a) in FIG. 6, it is assumed that three relay service channels need to be established between the first T node and the second T node. In this case, three transmission channels TCID1a, TCID2a, and TCID3a are established on the first T node side, and three transmission channels TCID1b, TCID2b, and TCID3b are established on the second T node side. On the G node side, three transmission channels TCID1c, TCID2c, and TCID3c that have a mapping relationship with the transmission channels of the first T node, and three transmission channels TCID1d, TCID2d, and TCID3d that have a mapping relationship with the transmission channels of the second T node are established. Herein, there is a mapping relationship between two adjacent transmission channels of the TCID1a, the TCID1c, the TCID1d, and the TCID1b. There is a mapping relationship between two adjacent transmission channels of the TCID2a, the TCID2c, the TCID2d, and the TCID2b. There is a mapping relationship between two adjacent transmission channels of the TCID3a, the TCID3c, the TCID3d, and the TCID3b.

A channel mapping relationship table maintained by the G node may be shown in Table 16.

**Table 16**

| | First T node | Relay space of the G node | | Second T node |
|---|---|---|---|---|
| | | Corresponding to the first T node | Corresponding to the second T node | |
| Transmission channel identifier | TCID1a | TCID1c | TCID1d | TCID1b |
| | TCID2a | TCID2c | TCID2d | TCID2b |
| | TCID3a | TCID3c | TCID3d | TCID3b |

When receiving data sent by the first T node or the second T node, the G node may forward the data to a peer node based on a maintained transmission channel mapping relationship.

In the relay mode based on a routing table, QoS of different service channels may vary, to adapt to different service requirements.

(b) in FIG. 6 shows a tunnel-based relay mode. A first T node and a second T node are connected to one G node. If a service channel is to be established between the first T node and the second T node, a tunnel channel is first established on each of the first T node and the second T node. After the tunnel channels are established, a relay control channel is established by default. A service channel may be established based on the relay control channel and the tunnel channels. During establishment of the service channel between the first T node and the second T node, signaling may be transmitted through the relay control channel and the tunnel channel, to complete establishment of the service channel between the first T node and the second T node. The G node maintains a mapping relationship between a tunnel channel established by the first T node and a tunnel channel established by the second T node. Then forwarding for the service channel and the control channel between the first T node and the second T node is implemented through a tunnel channel of the G node.

For example, as shown in (b) in FIG. 6, it is assumed that a relay tunnel needs to be established between the first T node and the second T node. In this case, the G node establishes a tunnel channel Tun-ID1 to the first T node, the G node establishes a tunnel channel Tun-ID2 to the second T node, and the G node maintains a mapping relationship between the Tun-ID1 and the Tun-ID2. When signaling or data is sent between the first T node and the second T node, both a data packet and the signaling are transmitted to a peer end through the Tun-ID1 and the Tun-ID2. A specific data transmission path is as follows: a transmission channel of the first T node - a tunnel channel Tun-ID1 of the first T node - an access layer of the first T node - an access layer of the G node - a tunnel channel Tun-ID1, on the G node, that corresponds to the first T node - a tunnel channel Tun-ID2, on the G node, that corresponds to the second T node - the access layer of the G node - an access layer of the second T node - a tunnel channel Tun-ID2 of the second T node - a transmission channel of the second T node. It can be learned from the figure that, regardless of a quantity of transmission channels on the first T node side or the second T node side, data of the first T node or the second T node is transmitted through a same tunnel channel.

In the tunnel-based relay mode, only one relay tunnel needs to be established between two T nodes, and both signaling and data between the two T nodes are transmitted through the relay tunnel. A process is simple.

With reference to the foregoing embodiments and accompanying drawings, an embodiment of this application provides a device connection method, mainly related to a connection between two terminal node devices, to implement device and service discovery and data transmission. The method may be implemented in the communication system 100 shown in FIG. 1, and more specifically, in an electronic device with the protocol architecture shown in FIG. 2.

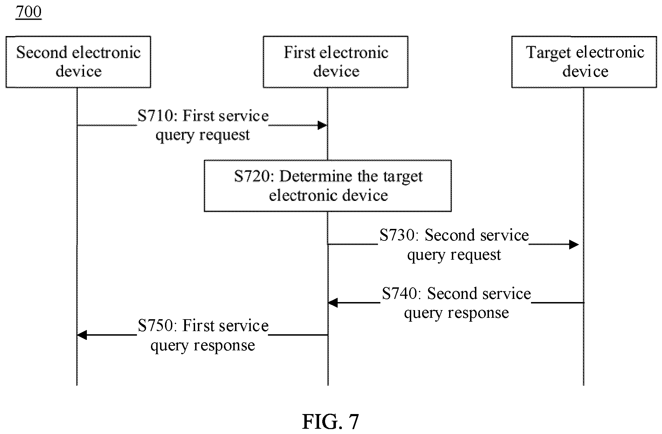

FIG. 7 is a schematic flowchart of a device connection method according to an embodiment of this application. As shown in FIG. 7, the method 700 may include steps S710 to S750.

S710: A second electronic device sends a first service query request to a first electronic device.

A role of the first electronic device is a grant node device. A role of the second electronic device is a terminal node device. The first electronic device is connected to the second electronic device.

The first service query request is used to request to query for a service of another terminal node device connected to the first electronic device.

In this embodiment of this application, the another terminal node device connected to the first electronic device may be one or more terminal node devices specified by the second electronic device, or may be all terminal node devices, other than the second electronic device, among terminal node devices connected to the first electronic device. This is not limited in this embodiment of this application. To sum up, the first service query request is used to request to query for a service of a terminal node device other than the second electronic device.

For example, when the second electronic device performs a query for the first time, the first service query request may be used to request to query for services of all the terminal node devices, other than the second electronic device, among the terminal node devices connected to the first electronic device.

In this embodiment of this application, the first service query request may be used to request to query whether another terminal node device has one or more services specified by the second electronic device, or used to request to query for services that another terminal node device has. For example, the first service query request may be used to request to query whether another terminal node device has a video service, a photographing service, or the like. For another example, the first service query request may be used to request to query for a primary service (to be specific, a service that may exist independently) of another terminal node device. To sum up, the first service query request is used to request to query for information related to a service of a terminal node device other than the second electronic device.

For example, when the second electronic device performs a query for the first time, the first service query request may be used to request to query whether another terminal node device connected to the first electronic device has a service specified by the second electronic device.

As an example rather than a limitation, the first service query request may be the service query request #B in the foregoing embodiments. For descriptions of the service query request #B, refer to the foregoing related descriptions. For brevity, details are not described herein again.

In some embodiments, the first service query request may include:
first destination node indication information indicating a terminal node device that receives a service query; and
first to-be-queried-service indication information indicating a to-be-queried service.

Optionally, the first service query request further includes first source node indication information indicating a terminal node device that initiates the service query.

In this embodiment of this application, the terminal node device that initiates the service query is the second electronic device. Therefore, the first source node indication information indicates the second electronic device.

In an embodiment, the first source node indication information may include an identifier of the second electronic device and/or an address of the second electronic device. The identifier of the second electronic device may be a device ID, a UDID, a UUID, or an IMEI of the second electronic device, an identifier allocated by the first electronic device to the second electronic device, or the like. The address of the second electronic device may be a MAC address or a physical address of the second electronic device, an address allocated by the first electronic device to the second electronic device, or the like.

If the first service query request includes the first source node indication information, the first electronic device may determine, based on the first source node indication information, that the terminal node device that initiates the service query is the second electronic device.

If the first service query request does not include the first source node indication information, the first electronic device may determine a source of the first service query request based on other information, for example, an identifier of a channel used to transmit the first service query request, to determine that the terminal node device that initiates the service query is the second electronic device.

In this embodiment of this application, the terminal node device that receives the service query is another terminal node device connected to the first electronic device.

In an example, if the second electronic device specifies a terminal node device that receives the service query, the first destination node indication information indicates the specified electronic device. For example, the second electronic device specifies a target electronic device. The first destination node indication information may include an identifier of the target electronic device and/or an address of the target electronic device Herein, the identifier of the target electronic device may be a device ID, a UDID, a UUID, or an IMEI of the target electronic device, an identifier allocated by the first electronic device to the target electronic device, or the like. The address of the target electronic device may be a MAC address or a physical address of the target electronic device, an address allocated by the first electronic device to the target electronic device, or the like. This is not limited in this embodiment of this application.

In another example, if the second electronic device does not specify a terminal node device that receives the service query, the first destination node indication information may indicate all the terminal node devices, other than the second electronic device, among the terminal node devices connected to the first electronic device. For example, the first destination node indication information may include a universal identifier and/or a broadcast address. The universal identifier and/or the broadcast address indicate that the terminal node device that receives the service query is all terminal node devices connected to the first electronic device other than the second electronic device.

The first to-be-queried-service indication information indicates the to-be-queried service.

When the first service query request includes the first destination node indication information and the first to-be-queried-service indication information, the second electronic device indicates, to the first electronic device, the terminal node device that receives the service query, and does not need to indicate a terminal node device (namely, the second electronic device) that initiates the service query. This can reduce signaling overheads.

S720: The first electronic device determines the target electronic device according to the first service query request.

The target electronic device is connected to the first electronic device, and a role of the target electronic device is a terminal node device.

Herein, the target electronic device is the terminal node device that receives the service query, and the target electronic device may be a terminal node device specified by the second electronic device, or may be any one of other terminal node devices connected to the first electronic device.

As an example rather than a limitation, the first electronic device may be the G node in FIG. 3A and FIG. 3B, the second electronic device may be the T1 node in FIG. 3A and FIG. 3B, and the target electronic device may be the T2 node in FIG. 3A and FIG. 3B.

In this step, a manner of determining, by the first electronic device, the target electronic device varies based on different information carried in the first service query request.

In an example, if the first service query request includes an identifier and/or an address of a specified terminal node device, the first electronic device determines that the specified terminal node device is the target electronic device.

In an example, if the first service query request includes a universal identifier and/or a broadcast address, the first electronic device determines, based on the universal identifier and/or the broadcast address, that the terminal node device that receives the service query is all the terminal node devices connected to the first electronic device other than the second electronic device, where the target electronic device is any one of the terminal node device that receives the service query.

S730: The first electronic device sends a second service query request to the target electronic device.

The second service query request is used to request to query for a service of the target electronic device. For example, the second service query request is used to request to query whether the target node device has one or more services specified by the second electronic device, or is used to request to query for services (for example, a primary service) that the target node device has. Service query content of the second service query request is determined based on content indicated in the first service query request.

As an example rather than a limitation, the second service query request may be the service query request #C in the foregoing embodiments. For descriptions of the service query request #C, refer to the foregoing related descriptions. For brevity, details are not described herein again.

In some embodiments, the second service query request may include:
first source node indication information indicating a terminal node device that initiates a service query; and
first to-be-queried-service indication information indicating a to-be-queried service.

Optionally, the second service query request further includes first destination node indication information indicating a terminal node device that receives the service query.

In an embodiment, the first source node indication information may include the identifier of the second electronic device and/or the address of the second electronic device.

In an embodiment, the first destination node indication information may include the identifier of the target electronic device and/or the address of the target electronic device. Certainly, because the target electronic device knows identifier and/or address information of the target electronic device, the second service query request may not include the first destination node indication information.

In an embodiment, the first to-be-queried-service indication information may be used to indicate to query whether the target electronic device has a service specified by the second electronic device, or used to indicate to query for services that the target electronic device has.

When the second service query request includes the first source node indication information and the first to-be-queried-service indication information, the first electronic device indicates, to the target electronic device, the terminal node device that initiates the service query, and does not need to indicate a terminal node device (namely, the target electronic device) that receives the service query. This can reduce signaling overheads.

In some embodiments, both the first service query request and the second service query request include the first source node indication information, the first destination node indication information, and the first to-be-queried-service indication information. In this way, when the first service query request and the second service query request include same information, corresponding data packet formats may be designed to be the same. This can simplify processing performed by the first electronic device on a data packet.

S740: The target electronic device sends a second service query response to the first electronic device.

The second service query response indicates service information of the target electronic device. For example, the second service query response indicates whether the target electronic device has a service specified by the second electronic device, or indicates a service that the target electronic device has.

In some embodiments, if the target electronic device does not have a service specified by the second electronic device, the target electronic device may not feed back related service information to the first electronic device.

As an example rather than a limitation, the second service query response may be the service query response #F in the foregoing embodiments. For descriptions of the service query response #F, refer to the foregoing related descriptions. For brevity, details are not described herein again.

In some embodiments, the second service query response may include:
second destination node indication information indicating the terminal node device that initiates the service query; and
second to-be-queried-service indication information indicating a service of the terminal node device that receives the service query.

Optionally, the second service query response further includes second source node indication information indicating a terminal node device that responds to the service query.

In an example, the terminal node device that responds to the service query is the target electronic device, and the second source node indication information may include the identifier of the target electronic device and/or the address of the target electronic device.

If the second service query response includes the second source node indication information, the first electronic device may determine, based on the second source node indication information, that the terminal node device that responds to the service query is the target electronic device.

If the second service query response does not include the second source node indication information, the first electronic device may determine a source of the second service query response based on other information, for example, an identifier of a channel used to transmit the second service query response, to determine that the terminal node device that responds to the service query is the target electronic device.

In an example, the second destination node indication information may include the identifier of the second electronic device and/or the address of the second electronic device. The first electronic device may determine, based on the second destination node indication information, the terminal node device that initiates the service query.

The second to-be-queried-service indication information indicates a service of the terminal node device that receives the service query. Specifically, the second to-be-queried-service indication information may indicate that the target electronic device has a service queried by the second electronic device, or may indicate services that the target electronic device has.

When the second service query response includes the second destination node indication information and the second to-be-queried-service indication information, the target electronic device indicates, to the first electronic device, the terminal node device that initiates the service query, and does not need to indicate a terminal node device (namely, the target electronic device) that responds to the service query. This can reduce signaling overheads.

S750: The first electronic device sends a first service query response to the second electronic device.

The first service query response indicates the service information of the target electronic device. The first service query response is determined based on the second service query response.

As an example rather than a limitation, the first service query response may be the service query response #G in the foregoing embodiments. For descriptions of the service query response #G, refer to the foregoing related descriptions. For brevity, details are not described herein again.

In some embodiments, the first service query response may include:
second source node indication information indicating a terminal node device that responds to the service query; and
second to-be-queried-service indication information indicating a service of the terminal node device that receives the service query.

Optionally, the first service query response further includes second destination node indication information indicating the terminal node device that initiates the service query.

In an embodiment, the second source node indication information may include the identifier of the target electronic device and/or the address of the target electronic device.

In an embodiment, the second destination node indication information may include the identifier of the second electronic device and/or the address of the second electronic device. Because the second electronic device knows the identifier and/or the address of the second electronic device, in some embodiments, the first service query response may not include the second destination node indication information.

The second to-be-queried-service indication information indicates a service of the terminal node device that receives the service query. Specifically, the second to-be-queried-service indication information may indicate that the target electronic device has a service queried by the second electronic device, or may indicate services that the target electronic device has.

When the first service query response includes the second source node indication information and the second to-be-queried-service indication information, the first electronic device indicates, to the second electronic device, the terminal node device that responds to the service query, and does not need to indicate a terminal node device (namely, the second electronic device) that initiates the service query. This can reduce signaling overheads.

Optionally, both the first service query response and the second service query response may include the second source node indication information, the second destination node indication information, and the second to-be-queried-service indication information. When the first service query response and the second service query response include same information, corresponding data packet formats may be designed to be the same. This can simplify processing performed by the first electronic device on a data packet.

In some embodiments, the first service query request includes the first destination node indication information and the first to-be-queried-service indication information, and the second service query request includes the first source node indication information and the first to-be-queried-service indication information.

In some embodiments, the second service query response includes the second destination node indication information and the second to-be-queried-service indication information, and the first service query response includes the second source node indication information and the second to-be-queried-service indication information.

In some embodiments, the first service query request, the second service query request, the second service query response, and the first service query response are transmitted in a relay service management channel, where the relay service management channel is used to transmit service management data between two terminal node devices. In this embodiment of this application, a grant node forwards data in the relay service management channel based on a destination node, and adds source node information to a data packet before forwarding the data.

It should be noted that the "service management data between two terminal node devices" herein is service management data that is transmitted between the two terminal node devices and that needs to be relayed by the grant node device. In this embodiment of this application, the relay service management channel is established by default after an underlying default logical link is successfully established.

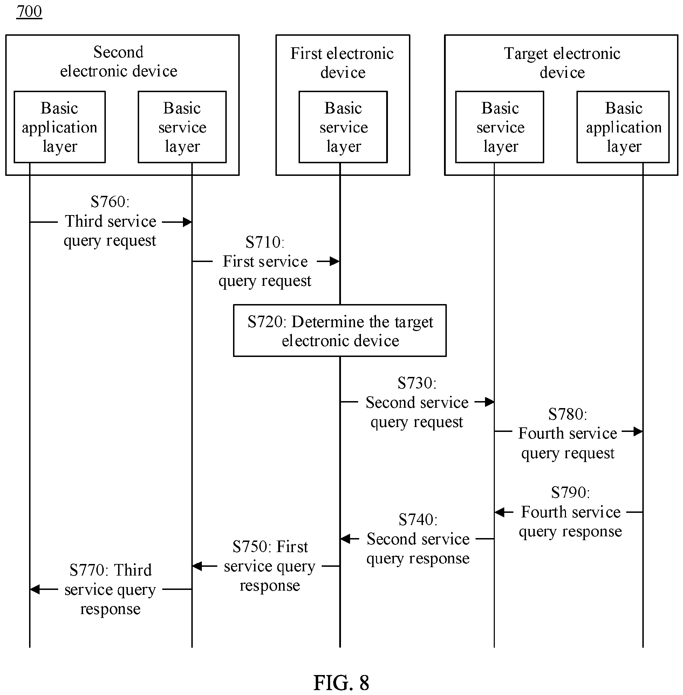

In some embodiments, as shown in FIG. 8, the first electronic device, the second electronic device, and the target electronic device each include a basic service layer. The first service query request is received by a basic service layer of the first electronic device from a basic service layer of the second electronic device. The second service query request is sent by the basic service layer of the first electronic device to a basic service layer of the target electronic device. The second service query response is received by the basic service layer of the first electronic device from the basic service layer of the target electronic device. The first service query response is sent by the basic service layer of the first electronic device to the basic service layer of the second electronic device.

In some embodiments, as shown in FIG. 8, the second electronic device includes a basic application layer and a basic service layer.

Before step S710, the method 700 further includes the following step.

S760: The basic service layer of the second electronic device receives a third service query request sent by the basic application layer of the second electronic device. The third service query request is used to indicate to query for a service of another terminal node device.

After step S750, the method 700 further includes the following step.

S770: The basic service layer of the second electronic device sends a third service query response to the basic application layer of the second electronic device. The third service query response indicates the service information of the target electronic device.

As an example rather than a limitation, the third service query request may be the service query request #A in the foregoing embodiments, and the third service query response may be the service query response #H in the foregoing embodiments. For descriptions of the service query request #A and the service query response #H, refer to the foregoing related descriptions. For brevity, details are not described herein again.

In an embodiment, the third service query request may include:
first to-be-queried-service indication information indicating a to-be-queried service.

Optionally, the third service query request further includes at least one of the following information:
first source node indication information indicating a terminal node device that initiates a service query; and
first destination node indication information indicating a terminal node device that receives the service query.

For specific information included in the third service query request, refer to related descriptions of the first service query request. Herein, the first source node indication information and the first destination node indication information may be determined by the basic application layer or the basic service layer. When the third service query request is determined by the basic service layer, the third service query request may not include the first source node indication information or the first destination node indication information. The first to-be-queried-service indication information is determined by the basic application layer.

In an embodiment, the third service query response may include:
second source node indication information indicating a terminal node device that responds to the service query; and
second to-be-queried-service indication information indicating a service of the terminal node device that receives the service query.

Optionally, the third service query response further includes second destination node indication information indicating the terminal node device that initiates the service query.

For content included in the third service query response, refer to related descriptions of the first service query response. For brevity, details are not described herein again.

In some embodiments, as shown in FIG. 8, the target electronic device includes a basic application layer and a basic service layer.

Before step S740, the method 700 further includes the following steps.

S780: The basic service layer of the target electronic device sends a fourth service query request to the basic application layer of the target electronic device. The fourth service query request is used to request the basic application layer to query for a service of the target electronic device.

S790: The basic service layer of the target electronic device receives a fourth service query response sent by the basic service layer of the target electronic device. The fourth service query response indicates the service information of the target electronic device.

As an example rather than a limitation, the fourth service query request may be the service query request #D in the foregoing embodiments, and the fourth service query response may be the service query response #E in the foregoing embodiments. For descriptions of the service query request #D and the service query response #E, refer to the foregoing related descriptions. For brevity, details are not described herein again.

In an embodiment, the fourth service query request may include:
first source node indication information indicating a terminal node device that initiates a service query; and
first to-be-queried-service indication information indicating a to-be-queried service.

Optionally, the fourth service query request further includes first destination node indication information indicating a terminal node device that receives the service query.

In an embodiment, the fourth service query response may include:
second to-be-queried-service indication information indicating a service of the terminal node device that receives the service query.

Optionally, the fourth service query response further includes at least one of the following information:
second source node indication information indicating a terminal node device that responds to the service query; and
second destination node indication information indicating the terminal node device that initiates the service query.

For content included in the fourth service query request, refer to related descriptions of the second service query request. For content included in the fourth service query response, refer to related descriptions of the second service query response. For brevity, details are not described herein again.

In some embodiments, the fourth service query response may include the second destination node indication information and the second to-be-queried-service indication information.

In this embodiment of this application, all of the first electronic device, the second electronic device, and the target electronic device support a sparklink basic SLB access technology.

In the foregoing technical solutions, device and service discovery between two terminal node devices, namely, the first electronic device and the target electronic device, is implemented based on a relay function of the first electronic device (namely, the grant node device), to implement connection and communication between the first electronic device and the target electronic device.

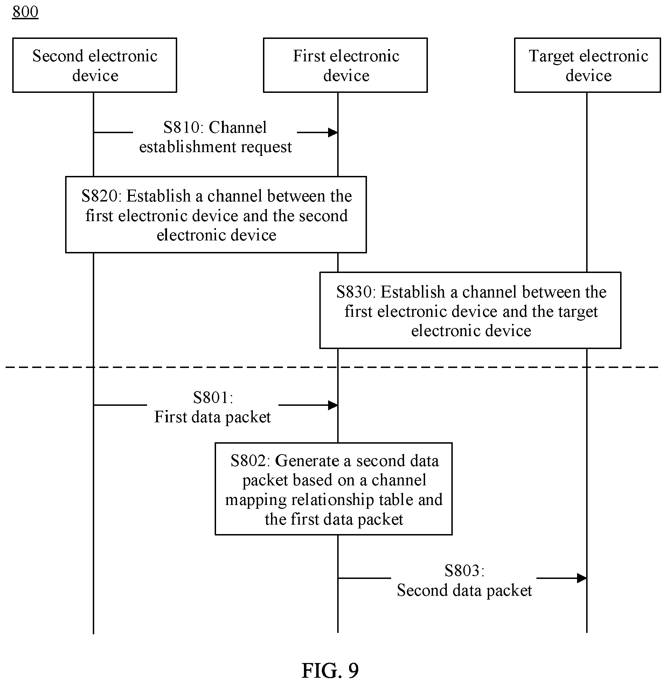

FIG. 9 is a schematic flowchart of another device connection method according to an embodiment of this application. As shown in FIG. 9, the method 800 may include steps S810 to S830.

S810: A first electronic device receives a channel establishment request sent by a second electronic device.

The channel establishment request is used to request the first electronic device to establish a channel between the second electronic device and a target electronic device. It should be understood that the channel between the second electronic device and the target electronic device herein is a channel that is established between the second electronic device and the target electronic device and that is relayed by the first electronic device.

A role of the first electronic device is a grant node device. The second electronic device and the target electronic device are separately connected to the first electronic device. Roles of the second electronic device and the target electronic device are both terminal node devices.

As an example rather than a limitation, the channel establishment request may be the relay service channel establishment request included in S404 in FIG. 4A, or the tunnel channel establishment request included in S505 in FIG. 5A. For detailed descriptions, refer to the foregoing related descriptions. For brevity, details are not described herein again.

S820: The first electronic device establishes a channel between the first electronic device and the second electronic device.

S830: The first electronic device establishes a channel between the first electronic device and the target electronic device.

In this embodiment of this application, the channel between the first electronic device and the second electronic device and the channel between the first electronic device and the target electronic device are used to transmit information between the second electronic device and the target electronic device.

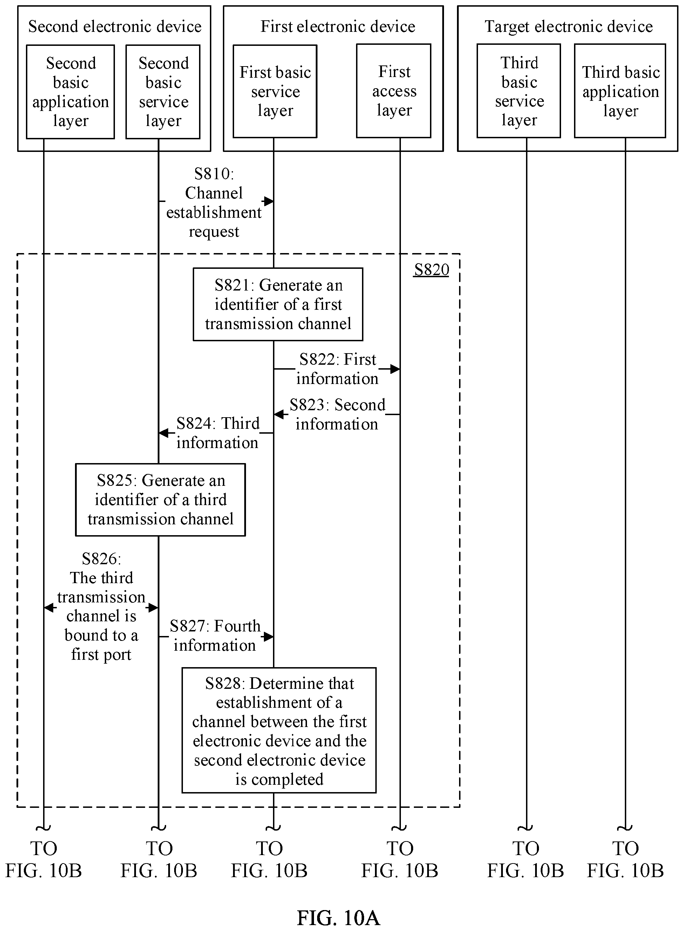

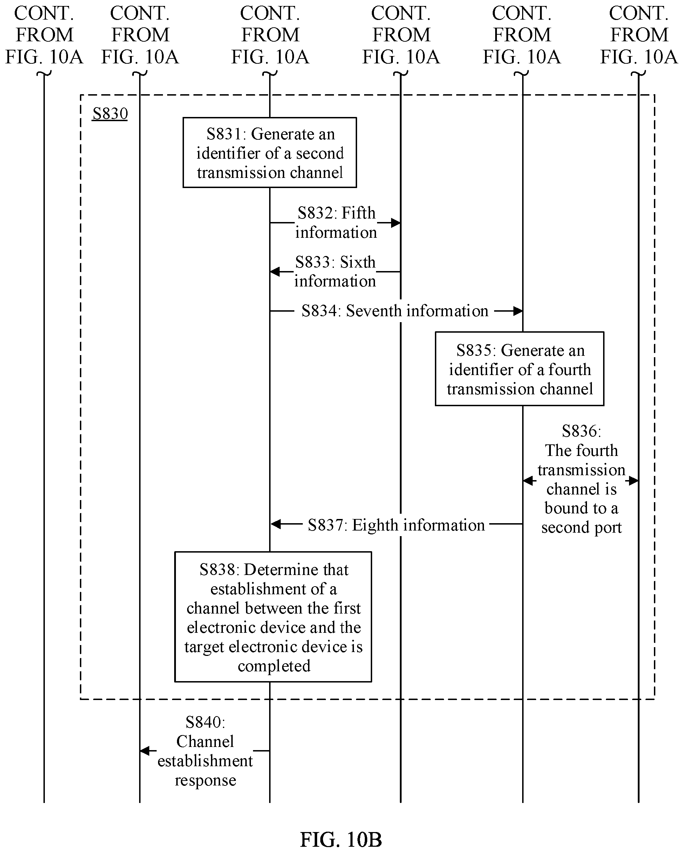

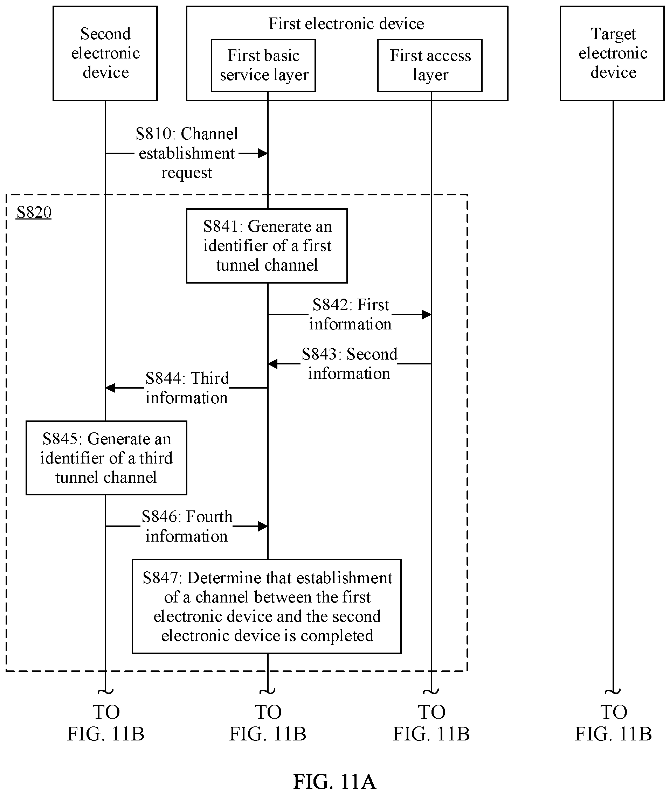

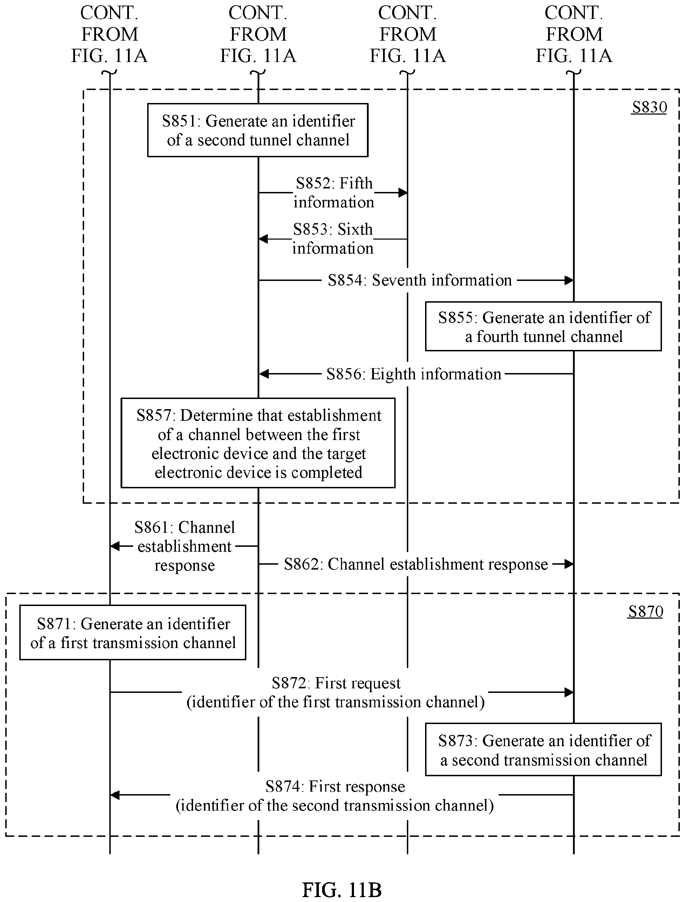

In steps S820 and S830, the first electronic device may establish the channel between the second electronic device and the target electronic device in a plurality of manners. Detailed descriptions are provided below with reference to FIG. 10A, FIG. 10B, FIG. 11A, and FIG. 11B.

FIG. 10A and FIG. 10B are a schematic flowchart of a manner of establishing a channel between a second electronic device and a target electronic device according to an embodiment of this application. Herein, the first electronic device includes a first basic service layer and a first access layer. The second electronic device includes a second basic service layer and a second basic application layer. The target electronic device includes a third basic service layer and a third basic application layer.

As shown in FIG. 10A, a process S820 of establishing, by the first electronic device, the channel between the first electronic device and the second electronic device may specifically include steps S821 to S828.

S821: The first basic service layer generates an identifier of a first transmission channel.

The identifier of the first transmission channel is used to identify the first transmission channel. The first transmission channel is a transmission channel at the first basic service layer.

S822: The first basic service layer sends first information to the first access layer.

The first information is used to apply for a logical channel for the first transmission channel.

S823: The first access layer sends second information to the first basic service layer.

The second information indicates that a mapping relationship is established between the first transmission channel and a first logical channel.

Correspondingly, before S823, the first access layer maps the first transmission channel to the first logical channel.

S824: The first basic service layer sends third information to the second electronic device.

The third information is used to indicate the second electronic device to establish a third transmission channel.

In this step, the first basic service layer specifically sends the third information to the second basic service layer.

S825: The second electronic device generates an identifier of the third transmission channel.

The identifier of the third transmission channel is used to identify the third transmission channel. The third transmission channel is a channel at the second basic service layer. In this step, specifically, the second basic service layer of the second electronic device generates the identifier of the third transmission channel.

Correspondingly, the second electronic device establishes a mapping relationship between the third transmission channel and the first logical channel, and establishes a mapping relationship between the third transmission channel and the first transmission channel.

In this embodiment of this application, the first transmission channel and the third transmission channel that have a mapping relationship with the first logical channel have different identifiers.

S826: Binding between the third transmission channel and a first port is performed between the second basic service layer and the second basic application layer on the second electronic device.

The first port is a port used by the second electronic device. This step is used to establish a mapping relationship between the third transmission channel and the first port.

S827: The second electronic device sends fourth information to the first basic service layer.

The fourth information indicates that a mapping relationship is established between the third transmission channel and the first logical channel and a mapping relationship is established between the third transmission channel and the first transmission channel.

In this embodiment of this application, there is a mapping relationship between the third transmission channel and the first port of the second electronic device.

S828: The first basic service layer determines, based on the fourth information, that establishment of the channel between the first electronic device and the second electronic device is completed.

Herein, the channel between the first electronic device and the second electronic device includes the first transmission channel, the first logical channel, and the third transmission channel. There is a mapping relationship between the first transmission channel and the first logical channel, and there is a mapping relationship between the third transmission channel and the first logical channel.

As an example rather than a limitation, the first information may be the information carried in step S407a in FIG. 4A, the second information may be the information carried in step S410a in FIG. 4B, the third information may be the information carried in step S411a in FIG. 4B, and the fourth information may be the information carried in step S414a in FIG. 4B. For detailed descriptions, refer to the foregoing related descriptions. For brevity, details are not described herein again.

In steps S821 to S828, the first electronic device completes mapping relationships between various interlayer channels between the first electronic device and the second electronic device, so that the channel between the first electronic device and the second electronic device is established.

A process S830 of establishing, by the first electronic device, the channel between the first electronic device and the target electronic device may specifically include steps S831 to S838.

S831. The first basic service layer generates an identifier of a second transmission channel.

The identifier of the second transmission channel is used to identify the second transmission channel. The second transmission channel is a transmission channel at the first basic service layer.

S832: The first basic service layer sends fifth information to the first access layer.

The fifth information is used to apply for a logical channel for the second transmission channel.

S833: The first access layer sends sixth information to the first basic service layer.

The sixth information indicates that a mapping relationship is established between the second transmission channel and a second logical channel.

Correspondingly, before S833, the first access layer maps the second transmission channel to the second logical channel.

S834: The first basic service layer sends seventh information to the target electronic device.

The seventh information is used to indicate the target electronic device to establish a fourth transmission channel.

In this step, the first basic service layer specifically sends the seventh information to the third basic service layer.

S835: The target electronic device generates an identifier of the fourth transmission channel.

The identifier of the fourth transmission channel is used to identify the fourth transmission channel. The fourth transmission channel is a channel at the third basic service layer. In this step, the identifier of the fourth transmission channel is specifically generated by the third basic service layer of the target electronic device.

Correspondingly, the target electronic device establishes a mapping relationship between the fourth transmission channel and the second logical channel, and establishes a mapping relationship between the fourth transmission channel and the second transmission channel.

In this embodiment of this application, the second transmission channel and the fourth transmission channel that have a mapping relationship with the second logical channel have different identifiers.

S836: Binding between the fourth transmission channel and a second port is performed between the third basic service layer and the third basic application layer on the target electronic device.

The second port is a port used by the target electronic device. This step is used to establish a mapping relationship between the fourth transmission channel and the second port.

S837: The target electronic device sends eighth information to the first basic service layer.

The eighth information indicates that a mapping relationship is established between the fourth transmission channel and the second logical channel and a mapping relationship is established between the fourth transmission channel and the second transmission channel.

In this embodiment of this application, there is a mapping relationship between the fourth transmission channel and the second port of the target electronic device.

S838: The first basic service layer determines, based on the eighth information, that establishment of the channel between the first electronic device and the target electronic device is completed.

Herein, the channel between the first electronic device and the target electronic device includes the second transmission channel, the second logical channel, and the fourth transmission channel. There is a mapping relationship between the second transmission channel and the second logical channel, and there is a mapping relationship between the fourth transmission channel and the second logical channel.

As an example rather than a limitation, the fifth information may be the information carried in step S407b in FIG. 4A, the sixth information may be the information carried in step S410b in FIG. 4B, the seventh information may be the information carried in step S411b in FIG. 4B, and the eighth information may be the information carried in step S414b in FIG. 4B. For detailed descriptions, refer to the foregoing related descriptions. For brevity, details are not described herein again.

In steps S831 to S838, the first electronic device completes mapping relationships between various interlayer channels between the first electronic device and the target electronic device, so that the channel between the first electronic device and the target electronic device is established.

The specific steps in step S820 and the specific steps in S830 may be independently performed, or some steps may be performed together. For example, the first basic service layer simultaneously performs S821 and S831. This is not limited in this embodiment of this application.

In steps S820 and S830, the channel between the first electronic device and the second electronic device and the channel between the first electronic device and the target electronic device are established. The channel between the first electronic device and the second electronic device and the channel between the first electronic device and the target electronic device are used to transmit service data exchanged between the first electronic device and the second electronic device.

In some embodiments, the method 800 further includes step S840 shown in FIG. 10B: The first electronic device sends a channel establishment response to the second electronic device. The channel establishment response indicates that establishment of the channel between the second electronic device and the target electronic device is completed.

In this embodiment of this application, the first electronic device maintains a channel mapping relationship table, to relay service data exchanged between the second electronic device and the target electronic device.

In some embodiments, the first basic service layer may include a channel management module and a relay module. The channel management module is configured to manage a transmission channel at the first basic service layer. The relay module is configured to perform relay management on data transmitted between the second electronic device and the target electronic device. The method 800 further includes:
The channel management module sends the channel mapping relationship table to the relay module. The channel mapping relationship table includes the mapping relationship between the first transmission channel and the third transmission channel, the mapping relationship between the second transmission channel and the fourth transmission channel, and the mapping relationship between the first transmission channel and the second transmission channel.

When the second electronic device exchanges service data with the target electronic device, the first electronic device performs relaying based on the channel mapping relationship table.

After the channel between the second electronic device and the target electronic device is established, the second electronic device and the target electronic device may transmit service data through the channel between the second electronic device and the target electronic device.

Still as shown in FIG. 9, after the channel between the second electronic device and the target electronic device is established, service data may be transmitted between the second electronic device and the target electronic device. As shown in FIG. 9, the method 800 further includes the following steps.

S801: The first electronic device receives a first data packet sent by the second electronic device.

The first data packet is transmitted through the channel between the first electronic device and the second electronic device, and the first data packet carries the identifier of the first transmission channel.

S802: The first electronic device generates a second data packet based on the channel mapping relationship table and the first data packet.

Specifically, the first electronic device replaces the identifier of the first transmission channel in the first data packet with the identifier of the fourth transmission channel based on the channel mapping relationship table, to generate the second data packet.

S803: The first electronic device sends the second data packet to the target electronic device.

FIG. 11A and FIG. 11B are a schematic flowchart of another manner of establishing a channel between a second electronic device and a target electronic device according to an embodiment of this application. Herein, the first electronic device includes a first basic service layer and a first access layer.

As shown in FIG. 11A, a process S820 of establishing, by the first electronic device, the channel between the first electronic device and the second electronic device may specifically include steps S841 to S847.

S841: The first basic service layer generates an identifier of a first tunnel channel.

The identifier of the first tunnel channel is used to identify the first tunnel channel. The first tunnel channel is a channel between the first basic service layer and the first access layer.

S842: The first basic service layer sends first information to the first access layer.

The first information is used to apply for a logical channel for the first tunnel channel.

S843: The first access layer sends second information to the first basic service layer.

The second information indicates that a mapping relationship is established between the first tunnel channel and a first logical channel.

Correspondingly, before S843, the first access layer maps the first tunnel channel to the first logical channel.

S844: The first basic service layer sends third information to the second electronic device.

The third information is used to indicate the second electronic device to establish a third tunnel channel. An identifier of the third tunnel channel is the same as that of the first tunnel channel.

In this step, the first basic service layer specifically sends the third information to the basic service layer of the second electronic device.

S845: The second electronic device generates an identifier of the third tunnel channel.

The identifier of the third tunnel channel is used to identify the third tunnel channel. The third tunnel channel is a channel between the basic service layer and the access layer of the second electronic device.

Correspondingly, the second electronic device establishes a mapping relationship between the third tunnel channel and the first logical channel and a mapping relationship between the third tunnel channel and the first tunnel channel.

In this embodiment of this application, the third tunnel channel and the first tunnel channel that have a mapping relationship with the first logical channel have a same identifier.

S846: The second electronic device sends fourth information to the first basic service layer.

The fourth information indicates that a mapping relationship is established between the third tunnel channel and the first logical channel and a mapping relationship is established between the third tunnel channel and the first tunnel channel.

S847: The first basic service layer determines, based on the fourth information, that establishment of the channel between the first electronic device and the second electronic device is completed.

Herein, the channel between the first electronic device and the second electronic device includes the third tunnel channel, the first logical channel, and the first tunnel channel. There is a mapping relationship between the first tunnel channel and the first logical channel. There is a mapping relationship between the third tunnel channel and the first logical channel. There is a mapping relationship between the third tunnel channel and the first tunnel channel.

As an example rather than a limitation, the first information may be the information carried in step S508a in FIG. 5B, the second information may be the information carried in step S511a in FIG. 5B, the third information may be the information carried in step S512a in FIG. 5B, and the fourth information may be the information carried in step S514a in FIG. 5B. For detailed descriptions, refer to the foregoing related descriptions. For brevity, details are not described herein again.

In steps S841 to S847, the first electronic device completes a mapping relationship between a tunnel channel and a logical channel between the first electronic device and the second electronic device, so that the channel between the first electronic device and the second electronic device is established.

A process S830 of establishing, by the first electronic device, the channel between the first electronic device and the target electronic device may specifically include steps S851 to S857.

S851: The first basic service layer generates an identifier of a second tunnel channel.

The identifier of the second tunnel channel is used to identify the second tunnel channel. The second tunnel channel is a channel between the first basic service layer and the first access layer.

S852: The first basic service layer sends fifth information to the first access layer.

The fifth information is used to apply for a logical channel for the second tunnel channel.

S853: The first access layer sends sixth information to the first basic service layer.

The sixth information indicates that a mapping relationship is established between the second tunnel channel and a second logical channel.

Correspondingly, before S853, the first access layer maps the second tunnel channel to the second logical channel.

S854: The first basic service layer sends seventh information to the target electronic device.

The seventh information is used to indicate the target electronic device to establish a fourth tunnel channel. An identifier of the fourth tunnel channel is the same as that of the second tunnel channel.

In this step, the first basic service layer specifically sends the seventh information to the basic service layer of the target electronic device.

S855: The target electronic device generates an identifier of the fourth tunnel channel.

The identifier of the fourth tunnel channel is used to identify the fourth tunnel channel. The fourth tunnel channel is a channel between the basic service layer and the access layer of the target electronic device.

Correspondingly, the target electronic device establishes a mapping relationship between the fourth tunnel channel and the second logical channel and a mapping relationship between the fourth tunnel channel and the second tunnel channel.

In this embodiment of this application, the fourth tunnel channel and the second tunnel channel that have a mapping relationship with the second logical channel have a same identifier.

S856: The target electronic device sends eighth information to the first basic service layer.

The eighth information indicates that a mapping relationship is established between the fourth tunnel channel and the second logical channel and a mapping relationship is established between the fourth tunnel channel and the second tunnel channel.

S857: The first basic service layer determines, based on the eighth information, that establishment of the channel between the first electronic device and the target electronic device is completed.

Herein, the channel between the first electronic device and the target electronic device includes the fourth tunnel channel, the second logical channel, and the second tunnel channel. There is a mapping relationship between the second tunnel channel and the second logical channel, and there is a mapping relationship between the fourth tunnel channel and the second logical channel.

As an example rather than a limitation, the fifth information may be the information carried in step S508b in FIG. 5B, the sixth information may be the information carried in step S511b in FIG. 5B, the seventh information may be the information carried in step S512b in FIG. 5B, and the eighth information may be the information carried in step S514b in FIG. 5B. For detailed descriptions, refer to the foregoing related descriptions. For brevity, details are not described herein again.

In steps S851 to S857, the first electronic device completes a mapping relationship between a tunnel channel and a logical channel between the first electronic device and the target electronic device, so that the channel between the first electronic device and the target electronic device is established.

The specific steps in step S820 and the specific steps in S830 may be independently performed, or some steps may be performed together. For example, the first basic service layer simultaneously performs S841 and S851. This is not limited in this embodiment of this application.

In steps S820 and S830, the channel between the first electronic device and the second electronic device and the channel between the first electronic device and the target electronic device are established. The channel between the first electronic device and the second electronic device and the channel between the first electronic device and the target electronic device are used to transmit service data and signaling data that are exchanged between the first electronic device and the second electronic device. Because a tunnel is established between the basic service layer and the access layer, both signaling data and service data delivered by the basic service layer can be transmitted through the tunnel channel.

In some embodiments, as shown in FIG. 11B, the method 800 further includes S861 and S862.

S861: The first basic service layer sends a channel establishment response to the second electronic device.

S862: The first basic service layer sends a channel establishment response to the target electronic device.

The channel establishment response indicates that establishment of the channel between the second electronic device and the target electronic device is completed.

In this embodiment of this application, the first electronic device maintains a channel mapping relationship table, to relay service data exchanged between the second electronic device and the target electronic device.

In some embodiments, the method 800 further includes: The first basic service layer establishes a channel mapping relationship table. The channel mapping relationship table includes a mapping relationship between the first tunnel channel and the second tunnel channel.

When a service channel needs to be established or data needs to be transmitted between the second electronic device and the target electronic device, the first electronic device performs relaying based on the channel mapping relationship table.

In some embodiments, the method 800 further includes S870: The second electronic device establishes a transmission channel between the second electronic device and the target electronic device. As shown in FIG. 11B, step S870 includes the following steps.

S871: The second electronic device generates an identifier of a first transmission channel.

The identifier of the first transmission channel is used to identify the first transmission channel. The first transmission channel is a channel at the basic service layer of the second electronic device, and is located at an upper layer of the established third tunnel channel.

S872: The first electronic device receives a first request sent by the second electronic device, and forwards the first request to the target electronic device.

The first request is used to request to establish, between the second electronic device and the target electronic device, a transmission channel for service transmission.

The first request may include the identifier of the first transmission channel and port information. The port information includes a first port and a second port. The first transmission channel is a channel at an upper layer of the third tunnel channel. The first request is transmitted through a first relay control channel, the third tunnel channel, the first logical channel, and the first tunnel channel. The first relay control channel is established by default after the channel between the first electronic device and the second electronic device is established. In this embodiment of this application, the first port is a port used by the second electronic device, and the second port is a port used by the target electronic device.

S873: The target electronic device generates an identifier of a second transmission channel.

The identifier of the second transmission channel is used to identify the second transmission channel. The second transmission channel is a channel at the basic service layer of the target electronic device, and is located at an upper layer of the established fourth tunnel channel.

After S873, on the target electronic device, binding between the second transmission channel and the second port is performed between the basic service layer and the basic application of the target electronic device, in other words, a mapping relationship is established between the second transmission channel and the second port, where the second port is a port used by the target electronic device. This process may correspond to step S521 in FIG. 5C.

S874: The first electronic device receives a first response sent by the target electronic device, and forwards the first response to the second electronic device.

The first response indicates that establishment of the transmission channel for service transmission is completed. The first response may include the identifier of the second transmission channel and the identifier of the first transmission channel. The second transmission channel is a channel at an upper layer of the fourth tunnel channel. The first response is transmitted through a second relay control channel, the fourth tunnel channel, the second logical channel, and the second tunnel channel. The second relay control channel is established by default after the channel between the first electronic device and the target electronic device is established.

After S874, on the second electronic device, the basic service layer of the second electronic device sends a notification message to the basic application layer, to indicate that the target electronic device has established a mapping relationship between the second transmission channel and the second port. The notification message is further used to indicate the basic application layer of the second electronic device to establish a mapping relationship between the first transmission channel and the first port. The first port is a port used by the second electronic device. This process may correspond to step S523 in FIG. 5C, and the notification message is used to indicate, to the basic application layer of the second electronic device, that the application for the transmission channel succeeds.

After the service channel is established between the second electronic device and the target electronic device, the first electronic device relays, based on the channel mapping relationship table, service data exchanged between the second electronic device and the target electronic device.

In this embodiment of this application, there is a mapping relationship between the first transmission channel and the first port of the second electronic device, and there is a mapping relationship between the second transmission channel and the second port of the target electronic device.

In some embodiments, as shown in FIG. 9, the method 800 further includes:
The first electronic device receives a first data packet sent by the second electronic device, where the first data packet is transmitted through the channel between the first electronic device and the second electronic device, and the first data packet carries the identifier of the second transmission channel and the identifier of the second tunnel channel; and
the first electronic device forwards the first data packet to the target electronic device through the channel between the first electronic device and the target electronic device based on the channel mapping relationship table, where
the channel mapping relationship table includes the mapping relationship between the first tunnel channel and the second tunnel channel.

To be specific, the first data packet is sent to the target electronic device through the first transmission channel, the third tunnel channel, the first logical channel, the first tunnel channel, the second tunnel channel, the second logical channel, the fourth tunnel channel, and the second transmission channel.

In some embodiments, the channel establishment request in S810 may include first indication information, and the first indication information indicates an establishment mode for the channel between the second electronic device and the target electronic device. The establishment mode includes a relay service channel mode and a relay tunnel mode. The relay service channel mode may be understood as the channel establishment process shown in FIG. 10A and FIG. 10B. The relay tunnel mode may be understood as the channel establishment mode shown in FIG. 11A and FIG. 11B.

In some embodiments, the channel establishment request in S810 may include an identifier of the target electronic device and/or an address of the target electronic device.

In some embodiments, the channel establishment request may include port information of the second electronic device and the target electronic device, where the port information is obtained through negotiation between the second electronic device and the target electronic device.

In some embodiments, after step S810, the method 800 further includes: The first electronic device negotiates with each of the second electronic device and the target electronic device on a channel parameter.

In the methods shown in FIG. 7 to FIG. 11B, the basic service layer or the first basic service layer may be the basic service layer 220 shown in FIG. 2, and an operation performed by the basic service layer may be specifically performed by the channel management module or the relay module at the basic service layer 230 shown in FIG. 2. This is specifically determined according to an actual solution. The access layer or the first access layer may be the access layer 210 shown in FIG. 2, and an operation performed by the access layer may be specifically performed by the access module at the access layer 210 shown in FIG. 2.

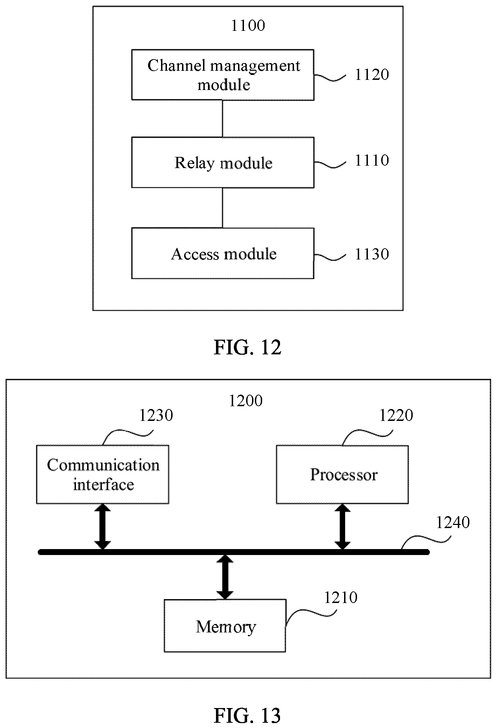

The foregoing describes in detail the method embodiments of embodiments of this application with reference to FIG. 1 to FIG. 11B. The following describes in detail apparatus embodiments of embodiments of this application with reference to FIG. 12 and FIG. 13. It should be understood that descriptions of the method embodiments correspond to descriptions of the apparatus embodiments. Therefore, for a part not described in detail, refer to the foregoing method embodiments.

FIG. 12 is a schematic diagram of a structure of an apparatus according to an embodiment of this application. The apparatus 1100 in FIG. 12 may be a specific example of the electronic device in FIG. 1 or FIG. 2. The apparatus 1100 shown in FIG. 12 may be configured to perform the methods in FIG. 7 to FIG. 11B, and may specifically implement the embodiments shown in FIG. 3A to FIG. 5C. To avoid redundancy, details are not described again.

The apparatus 1100 may include a relay module 1110. The relay module 1110 may perform the steps in the method 700 shown in FIG. 7.

When the apparatus 1100 is a grant node device, the relay module 1110 included in the apparatus 1100 may perform steps S710 to S750 in the method 700, or perform the operations performed by the relay module of the G node in the method 300 shown in FIG. 3A and FIG. 3B.

When the apparatus 1100 is a terminal node device, the relay module 1110 included in the apparatus 1100 may perform steps S710 and S750, or perform steps S730 and S740. Specifically, the relay module 1110 may perform the operations performed by the relay module of the first T node or the second T node in the method 300 shown in FIG. 3A and FIG. 3B.

Optionally, the apparatus 1100 may further include a channel management module 1120. The channel management module 1120 may perform the steps in the method 800 shown in FIG. 9, or perform the steps performed by the first basic service layer in FIG. 10A and FIG. 10B, or FIG. 11A and FIG. 11B, and/or another process of the method described in this specification, for example, a process performed by a channel management module at a basic service layer of an electronic device.

For example, when the apparatus 1100 is a grant node device, the channel management module 1120 included in the apparatus 1100 may perform the operations performed by the channel management module of the G node in the method 400 shown in FIG. 4A and FIG. 4B, or perform the operations performed by the first basic service layer of the first electronic device in FIG. 10A and FIG. 10B, or FIG. 11A and FIG. 11B.

For example, when the apparatus 1100 is a terminal node device, the channel management module 1120 included in the apparatus 1100 may perform the operations performed by the channel management module of the first T node or the second T node in the method 400 shown in FIG. 4A and FIG. 4B, or perform the operations performed by the first electronic device or the second electronic device in FIG. 10A and FIG. 10B, or FIG. 11A and FIG. 11B.

Optionally, the apparatus 1100 may further include an access module 1130. The access module 1130 may perform the steps performed by the first access layer in FIG. 10A and FIG. 10B, or FIG. 11A and FIG. 11B, and/or another process of the method described in this specification, for example, a process performed by an access layer of an electronic device.

For example, when the apparatus 1100 is a grant node device, the access module 1130 included in the apparatus 1100 may perform the operations performed by the access layer of the G node in FIG. 4A and FIG. 4B, or FIG. 5A, FIG. 5B, and FIG. 5C.

It should be noted that all related content of the steps in the embodiments of the foregoing solutions may be incorporated into descriptions of corresponding functional modules by reference.

FIG. 13 is a schematic diagram of a structure of an apparatus according to another embodiment of this application. The apparatus 1200 shown in FIG. 13 may correspond to the apparatuses described above, for example, the first electronic device, the second electronic device, or the target electronic device. Specifically, the apparatus 1200 may be a specific example of the electronic device in FIG. 1 or FIG. 2.

The apparatus 1200 includes a processor 1220. In this embodiment of this application, the processor 1220 is configured to implement a corresponding control and management operation. For example, the processor 1220 is configured to support the apparatus in performing the methods, the operations, or the functions shown in FIG. 7 to FIG. 11B in the foregoing embodiments, and the methods, the operations, or the functions in the embodiments shown in FIG. 3A to FIG. 6.

Optionally, the apparatus 1200 may further include a memory 1210 and a communication interface 1230. The processor 1220, the communication interface 1230, and the memory 1210 may be connected to each other, or connected to each other through a bus 1240. The communication interface 1230 is configured to support the apparatus in performing communication, and the memory 1210 is configured to store program code and data of the apparatus. The processor 1220 invokes the code or the data stored in the memory 1210 to implement a corresponding operation. The memory 1210 may or may not be coupled to the processor. The coupling in this embodiment of this application may be an indirect coupling or a communication connection between apparatuses, units, or modules in an electrical form, a mechanical form, or another form, and is used for information exchange between the apparatuses, the units, or the modules.

The processor 1220 may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. Alternatively, the processor may be a combination of processors for implementing a computing function, for example, a combination of one or more microprocessors, or a combination of a digital signal processor and a microprocessor. The communication interface 1230 may be a transceiver, a circuit, a bus, a module, or another type of communication interface. The bus 1240 may be a peripheral component interconnect (peripheral component interconnect, PCI) bus, an extended industry standard architecture (extended industry standard architecture, EISA) bus, or the like. The bus may be categorized as an address bus, a data bus, a control bus, or the like. For ease of representation, only one bold line is used to represent the system bus in FIG. 12, but this does not mean that there is only one bus or only one type of bus.

An embodiment of this application further provides a communication system, including the first electronic device, the second electronic device, and the target electronic device that are described above.

An embodiment of this application further provides a computer-readable storage medium. The computer-readable storage medium has program instructions. When the program instructions are executed by a processor, the processor is enabled to perform the foregoing device connection method.

An embodiment of this application further provides a chip system. The chip system includes at least one processor. When program instructions are executed in the at least one processor, the at least one processor is enabled to perform the foregoing device connection method.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

A person skilled in the art can clearly understand that, for ease and brevity of description, for a detailed operating process of the foregoing system, apparatus, and unit, reference may be made to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts shown as units may or may not be physical units, that is, may be located in one place, or may be distributed on a plurality of network units. Some or all of the units may be selected according to actual requirements to achieve objectives of solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device connection method, applied to a first electronic device, wherein a role of the first electronic device is a grant node device, and the method comprises:
receiving, by the first electronic device, a first service query request sent by a second electronic device, wherein the second electronic device is connected to the first electronic device, a role of the second electronic device is a terminal node device, and the first service query request is used to request to query for a service of another terminal node device connected to the first electronic device;
determining, by the first electronic device, a target electronic device according to the first service query request, wherein the target electronic device is connected to the first electronic device, and a role of the target electronic device is a terminal node device;
sending, by the first electronic device, a second service query request to the target electronic device, wherein the second service query request is used to request to query for a service of the target electronic device;
receiving, by the first electronic device, a second service query response sent by the target electronic device, wherein the second service query response indicates service information of the target electronic device; and
sending, by the first electronic device, a first service query response to the second electronic device based on the second service query response, wherein the first service query response indicates the service information of the target electronic device.

2. The method according to claim 1, wherein
the first service query request comprises first destination node indication information and first to-be-queried-service indication information; and/or
the second service query request comprises first source node indication information and first to-be-queried-service indication information, wherein
the first source node indication information indicates a terminal node device that initiates a service query;
the first destination node indication information indicates a terminal node device that receives the service query; and
the first to-be-queried-service indication information indicates a to-be-queried service.

3. The method according to claim 2, wherein the first source node indication information comprises an identifier of the second electronic device and/or an address of the second electronic device.

4. The method according to claim 2 or 3, wherein the first destination node indication information comprises an identifier of the target electronic device and/or an address of the target electronic device; or
the first destination node indication information comprises a universal identifier and/or a broadcast address.

5. The method according to claim 4, wherein when the first service query request comprises the first destination node indication information and the first destination node indication information comprises the universal identifier and/or the broadcast address,
the determining, by the first electronic device, a target electronic device according to the first service query request comprises:
determining, by the first electronic device based on the universal identifier and/or the broadcast address, that the terminal node device that receives the service query is all terminal node devices connected to the first electronic device other than the second electronic device, wherein the target electronic device is one of the terminal node device that receives the service query.

6. The method according to any one of claims 1 to 5, wherein
the second service query response comprises second destination node indication information and second to-be-queried-service indication information; and/or
the first service query response comprises second source node indication information and second to-be-queried-service indication information, wherein
the second source node indication information indicates a terminal node device that responds to the service query;
the second destination node indication information indicates the terminal node device that initiates the service query; and
the second to-be-queried-service indication information indicates a service of the terminal node device that receives the service query.

7. The method according to claim 6, wherein the second source node indication information comprises the identifier of the target electronic device and/or the address of the target electronic device.

8. The method according to claim 6 or 7, wherein the second destination node indication information comprises the identifier of the second electronic device and/or the address of the second electronic device.

9. The method according to any one of claims 1 to 8, wherein the first service query request, the second service query request, the second service query response, and the first service query response are transmitted in a relay service management channel, and the relay service management channel is used to transmit service management data between two terminal node devices.

10. The method according to any one of claims 1 to 9, wherein the first electronic device, the second electronic device, and the target electronic device each comprise a basic service layer;
the first service query request is received by a basic service layer of the first electronic device from a basic service layer of the second electronic device;
the second service query request is sent by the basic service layer of the first electronic device to a basic service layer of the target electronic device;
the second service query response is received by the basic service layer of the first electronic device from the basic service layer of the target electronic device; and
the first service query response is sent by the basic service layer of the first electronic device to the basic service layer of the second electronic device.

11. The method according to any one of claims 1 to 10, wherein all of the first electronic device, the second electronic device, and the target electronic device support a sparklink basic SLB access technology.

12. A device connection method, applied to a second electronic device, wherein a role of the second electronic device is a terminal node device, and the method comprises:
sending, by the second electronic device, a first service query request to a first electronic device, wherein the second electronic device is connected to the first electronic device, a role of the first electronic device is a grant node device, and the first service query request is used to request to query for a service of another terminal node device connected to the first electronic device; and
receiving, by the second electronic device, a first service query response sent by the first electronic device, wherein the first service query response indicates service information of a target electronic device, the target electronic device is connected to the first electronic device, and a role of the target electronic device is a terminal node device.

13. The method according to claim 12, wherein the second electronic device comprises a basic application layer and a basic service layer;
before the sending, by the second electronic device, a first service query request to a first electronic device, the method further comprises:
receiving, by the basic service layer of the second electronic device, a third service query request sent by the basic application layer of the second electronic device, wherein the third service query request is used to indicate to query for a service of another terminal node device; and
after the receiving, by the second electronic device, a first service query response sent by the first electronic device, the method further comprises:
sending, by the basic service layer of the second electronic device, a third service query response to the basic application layer of the second electronic device, wherein the third service query response indicates the service information of the target electronic device.

14. The method according to claim 13, wherein
the first service query request comprises first destination node indication information and first to-be-queried-service indication information; and/or
the third service query request comprises first to-be-queried-service indication information, wherein
the first destination node indication information indicates a terminal node device that receives a service query; and
the first to-be-queried-service indication information indicates a to-be-queried service.

15. The method according to claim 14, wherein the third service query request further comprises at least one of first source node indication information and the first destination node indication information; and
the first source node indication information indicates a terminal node device that initiates the service query.

16. The method according to claim 14 or 15, wherein
the first destination node indication information comprises an identifier of the target electronic device and/or an address of the target electronic device; or
the first destination node indication information comprises a universal identifier and/or a broadcast address, wherein the universal identifier and/or the broadcast address indicate that the terminal node device that receives the service query is all terminal node devices connected to the first electronic device other than the second electronic device.

17. The method according to any one of claims 13 to 16, wherein the first service query response and/or the third service query response comprise:
second source node indication information indicating a terminal node device that responds to the service query; and
second to-be-queried-service indication information indicating a service of the terminal node device that receives the service query.

18. The method according to claim 17, wherein the second source node indication information comprises the identifier of the target electronic device and/or the address of the target electronic device.

19. The method according to any one of claims 12 to 18, wherein the first service query request and the first service query response are transmitted in a relay service management channel between the first electronic device and the second electronic device, and the relay service management channel is used to transmit service management data between two terminal node devices.

20. The method according to any one of claims 12 to 19, wherein the first electronic device and the second electronic device each comprise a basic service layer;
the first service query request is sent by the basic service layer of the second electronic device to a basic service layer of the first electronic device; and
the first service query response is received by the basic service layer of the second electronic device from the basic service layer of the first electronic device.

21. The method according to any one of claims 12 to 20, wherein all of the first electronic device, the second electronic device, and the target electronic device support a sparklink basic SLB access technology.

22. A device connection method, applied to a target electronic device, wherein a role of the target electronic device is a terminal node device, and the method comprises:
receiving, by the target electronic device, a second service query request sent by a first electronic device, wherein the target electronic device is connected to the first electronic device, a role of the first electronic device is a grant node device, and the second service query request is used to request to query for a service of the target electronic device; and
sending, by the target electronic device, a second service query response to the first electronic device, wherein the second service query response is used by the first electronic device to notify a second electronic device of service information of the target electronic device, the second electronic device is connected to the first electronic device, and a role of the second electronic device is a terminal node device.

23. The method according to claim 22, wherein the target electronic device comprises a basic application layer and a basic service layer; and
before the sending, by the target electronic device, a second service query response to the first electronic device, the method further comprises:
sending, by the basic service layer of the target electronic device, a fourth service query request to the basic application layer of the target electronic device, wherein the fourth service query request is used to request to query for a service of the target electronic device; and
receiving, by the basic service layer of the target electronic device, a fourth service query response sent by the basic application layer of the target electronic device, wherein the fourth service query response indicates the service information of the target electronic device.

24. The method according to claim 23, wherein the second service query request and/or the fourth service query request comprise:
first source node indication information indicating a terminal node device that initiates a service query; and
first to-be-queried-service indication information indicating a to-be-queried service.

25. The method according to claim 24, wherein the first source node indication information comprises an identifier of the second electronic device and/or an address of the second electronic device.

26. The method according to any one of claims 23 to 25, wherein
the second service query response comprises second destination node indication information and second to-be-queried-service indication information; and/or
the fourth service query response comprises second to-be-queried-service indication information, wherein
the second destination node indication information indicates the terminal node device that initiates the service query; and
the second to-be-queried-service indication information indicates a service of a terminal node device that receives the service query.

27. The method according to claim 26, wherein the fourth service query response further comprises at least one of second source node indication information and the second destination node indication information; and
the second source node indication information indicates a terminal node device that responds to the service query.

28. The method according to claim 26 or 27, wherein the second destination node indication information comprises the identifier of the second electronic device and/or the address of the second electronic device.

29. The method according to any one of claims 22 to 28, wherein the second service query request and the second service query response are transmitted in a relay service management channel between the target electronic device and the first electronic device, and the relay service management channel is used to transmit service management data between two terminal node devices.

30. The method according to any one of claims 22 to 29, wherein the first electronic device and the target electronic device each comprise a basic service layer;
the second service query request is received by the basic service layer of the target electronic device from a basic service layer of the first electronic device; and
the second service query response is sent by the basic service layer of the target electronic device to the basic service layer of the first electronic device.

31. The method according to any one of claims 22 to 30, wherein all of the first electronic device, the second electronic device, and the target electronic device support a sparklink basic SLB access technology.

32. A device connection method, applied to a first electronic device, wherein a role of the first electronic device is a grant node device, and the method comprises:
receiving, by the first electronic device, a channel establishment request sent by a second electronic device, wherein the channel establishment request is used to request the first electronic device to establish a channel between the second electronic device and a target electronic device, the second electronic device and the target electronic device are separately connected to the first electronic device, and roles of the second electronic device and the target electronic device are both terminal node devices;
establishing, by the first electronic device, a channel between the first electronic device and the second electronic device; and
establishing, by the first electronic device, a channel between the first electronic device and the target electronic device, wherein
the channel between the first electronic device and the second electronic device and the channel between the first electronic device and the target electronic device are used to transmit information between the second electronic device and the target electronic device.

33. The method according to claim 32, wherein the first electronic device comprises a first basic service layer and a first access layer;
the establishing, by the first electronic device, a channel between the first electronic device and the second electronic device comprises:
generating, by the first basic service layer, an identifier of a first transmission channel, wherein the identifier of the first transmission channel is used to identify the first transmission channel;
sending, by the first basic service layer, first information to the first access layer, wherein the first information is used to apply for a logical channel for the first transmission channel;
receiving, by the first basic service layer, second information sent by the first access layer, wherein the second information indicates that a mapping relationship is established between the first transmission channel and a first logical channel;
sending, by the first basic service layer, third information to the second electronic device, wherein the third information is used to indicate the second electronic device to establish a third transmission channel;
receiving, by the first basic service layer, fourth information sent by the second electronic device, wherein the fourth information indicates that a mapping relationship is established between the third transmission channel and the first logical channel and a mapping relationship is established between the third transmission channel and the first transmission channel, and there is a mapping relationship between the third transmission channel and a first port of the second electronic device; and
determining, by the first basic service layer based on the fourth information, that establishment of the channel between the first electronic device and the second electronic device is completed, wherein the channel between the first electronic device and the second electronic device comprises the first transmission channel, the first logical channel, and the third transmission channel; and
the establishing, by the first electronic device, a channel between the first electronic device and the target electronic device comprises:
generating, by the first basic service layer, an identifier of a second transmission channel, wherein the identifier of the second transmission channel is used to identify the second transmission channel;
sending, by the first basic service layer, fifth information to the first access layer, wherein the fifth information is used to apply for a logical channel for the second transmission channel;
receiving, by the first basic service layer, sixth information sent by the first access layer, wherein the sixth information indicates that a mapping relationship is established between the second transmission channel and a second logical channel;
sending, by the first basic service layer, seventh information to the target electronic device, wherein the seventh information is used to indicate the target electronic device to establish a fourth transmission channel;
receiving, by the first basic service layer, eighth information sent by the target electronic device, wherein the eighth information indicates that a mapping relationship is established between the fourth transmission channel and the second logical channel and a mapping relationship is established between the fourth transmission channel and the second transmission channel, and there is a mapping relationship between the fourth transmission channel and a second port of the target electronic device;
determining, by the first basic service layer based on the eighth information, that establishment of the channel between the first electronic device and the target electronic device is completed, wherein the channel between the first electronic device and the target electronic device comprises the second transmission channel, the second logical channel, and the fourth transmission channel, wherein
the channel between the first electronic device and the second electronic device and the channel between the first electronic device and the target electronic device are used to transmit service data exchanged between the target electronic device and the second electronic device.

34. The method according to claim 33, wherein the first basic service layer comprises a channel management module and a relay module, the channel management module is configured to manage a transmission channel at the first basic service layer, and the relay module is configured to perform relay management on data transmitted between the second electronic device and the target electronic device; and
the method further comprises:
sending, by the channel management module, a channel mapping relationship table to the relay module, wherein the channel mapping relationship table comprises the mapping relationship between the first transmission channel and the third transmission channel, the mapping relationship between the second transmission channel and the fourth transmission channel, and the mapping relationship between the first transmission channel and the second transmission channel.

35. The method according to claim 33 or 34, further comprising:
sending, by the first electronic device, a channel establishment response to the second electronic device, wherein the channel establishment response indicates that establishment of a channel between the second electronic device and the target electronic device is completed.

36. The method according to any one of claims 33 to 35, further comprising:
receiving, by the first electronic device, a first data packet sent by the second electronic device, wherein the first data packet is transmitted through the channel between the first electronic device and the second electronic device, and the first data packet carries the identifier of the first transmission channel;
replacing, by the first electronic device, the identifier of the first transmission channel in the first data packet with an identifier of the fourth transmission channel based on the channel mapping relationship table, to generate a second data packet; and
sending, by the first electronic device, the second data packet to the target electronic device, wherein
the channel mapping relationship table comprises the mapping relationship between the first transmission channel and the third transmission channel, the mapping relationship between the second transmission channel and the fourth transmission channel, and the mapping relationship between the first transmission channel and the second transmission channel.

37. The method according to any one of claims 32 to 36, wherein the channel establishment request comprises first indication information, and the first indication information indicates an establishment mode for the channel between the second electronic device and the target electronic device.

38. The method according to any one of claims 32 to 37, wherein the channel establishment request comprises an identifier of the target electronic device and/or an address of the target electronic device.

39. The method according to any one of claims 32 to 38, wherein the channel establishment request comprises port information of the second electronic device and the target electronic device, and the port information is obtained through negotiation between the second electronic device and the target electronic device.

40. The method according to any one of claims 32 to 39, wherein after the receiving, by the first electronic device, a channel establishment request sent by a second electronic device, the method further comprises:
negotiating, by the first electronic device, with each of the second electronic device and the target electronic device on a channel parameter.

41. The method according to any one of claims 32 to 40, wherein all of the first electronic device, the second electronic device, and the target electronic device support a sparklink basic SLB access technology.

42. An electronic device, comprising:
a memory, configured to store computer instructions; and
a processor, configured to execute the computer instructions stored in the memory, so that the electronic device performs the method according to any one of claims 1 to 11, or performs the method according to any one of claims 12 to 21, or performs the method according to any one of claims 22 to 31, or performs the method according to any one of claims 32 to 41.

43. A communication system, comprising:
a first electronic device, configured to perform the method according to any one of claims 1 to 11;
a second electronic device, configured to perform the method according to any one of claims 12 to 21; and
a target electronic device, configured to perform the method according to any one of claims 22 to 31.

44. A communication system, comprising:
a first electronic device, wherein the first electronic device is a grant node device and is configured to perform the method according to any one of claims 32 to 41; and
a second electronic device and a target electronic device, wherein the second electronic device and the target electronic device are separately connected to the first electronic device, and both the second electronic device and the target electronic device are terminal node devices.

45. A computer-readable storage medium, storing computer instructions, wherein when the computer instructions run on a computer, the computer is enabled to perform the method according to any one of claims 1 to 41.

46. A chip system, comprising at least one processor, wherein when program instructions are executed in the at least one processor, the at least one processor is enabled to perform the method according to any one of claims 1 to 41.
